(19) Europäisches Patentamt / European Patent Office / Office européen des brevets

(11) **EP 4 412 163 A1**

(12) **EUROPEAN PATENT APPLICATION**
published in accordance with Art. 153(4) EPC

(43) Date of publication:
**07.08.2024 Bulletin 2024/32**

(21) Application number: **22874855.4**

(22) Date of filing: **26.09.2022**

(51) International Patent Classification (IPC):
**H04L 25/02** (2006.01)

(52) Cooperative Patent Classification (CPC):
**H04B 1/715; H04B 7/0413; H04L 25/02**

(86) International application number:
**PCT/CN2022/121389**

(87) International publication number:
**WO 2023/051470 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111162862**

(71) Applicant: **Huawei Technologies Co., Ltd.**
**Shenzhen, Guangdong 518129 (CN)**

(72) Inventors:
• **WU, Shijuan**
 **Shenzhen, Guangdong 518129 (CN)**
• **YU, Zheng**
 **Shenzhen, Guangdong 518129 (CN)**
• **GONG, Mingxin**
 **Shenzhen, Guangdong 518129 (CN)**
• **LIU, Xiaoqing**
 **Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(54) **COMMUNICATION METHOD AND APPARATUS**

(57) A communication method and apparatus are provided. The method includes: A terminal determines a frequency hopping periodicity index of the terminal based on a first time unit. The terminal determines a first frequency hopping parameter based on the frequency hopping periodicity index of the terminal and a frequency hopping pattern, where the first frequency hopping parameter may be represented as $k_{hopping}$. The terminal sends a sounding reference signal SRS to a network device based on the first frequency hopping parameter. According to the method, the frequency hopping periodicity index can be associated with absolute time. For terminals multiplexed in a same configured bandwidth of an SRS, this can ensure that the different terminals perform SRS transmission in different subbands in a same time domain range, provided that corresponding $k_F$ is configured differently, reduce interference between SRS transmission while scheduling overheads are effectively reduced, and improve channel estimation precision.

FIG. 9

**Description**

**CROSS-REFERENCE TO RELATED APPLICATIONS**

This application claims priority to Chinese Patent Application No. 202111162862.0, filed with the China National Intellectual Property Administration on September 30, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

To further enhance multiple-input multiple-output (multiple-input multiple-output, MIMO) in a new radio (new radio, NR) system, partial frequency domain sounding technologies may be used to improve coverage and a capacity of a sounding reference signal (sounding reference signal, SRS), and start resource block (resource block, RB) position frequency hopping is performed to ensure even channel estimation precision at different frequency domain positions, thereby effectively improving channel estimation precision.

In a start RB position frequency hopping scenario, a change rule of a start RB position with time domain is determined based on a frequency hopping pattern. If different terminals have different understandings of the frequency hopping pattern, the different terminals may perform SRS transmission based on a same frequency domain position. This increases interference between users in SRS transmission and reduces channel estimation precision. Therefore, how to improve channel estimation precision in the start RB position frequency hopping scenario becomes an urgent problem to be resolved.

**SUMMARY**

This application provides a communication method and apparatus, to effectively improve channel estimation precision in a start RB position frequency hopping scenario.

According to a first aspect, a communication method is provided. The method is performed by a terminal, or may be performed by a component (a processor, a chip, or another component) configured in the terminal, or may be performed by a software module, or the like; and includes: determining a frequency hopping periodicity index of the terminal based on a first time unit, where the first time unit is associated with a time unit corresponding to a sounding reference signal SRS; determining a first frequency hopping parameter based on the frequency hopping periodicity index of the terminal and a frequency hopping pattern, where the first frequency hopping parameter indicates a subband-level offset of the SRS within a range of a configured bandwidth of the SRS, and the frequency hopping pattern is associated with the first frequency hopping parameter; and sending the SRS to a network device based on the first frequency hopping parameter.

According to the method, the terminal can determine the first frequency hopping parameter based on the time unit corresponding to the SRS. On the basis of using a current frequency hopping mechanism as much as possible, the method can further implement SRS transmission with different terminals in a same time domain range based on different frequency domain ranges. This effectively reduces interference between SRS transmission and improves channel estimation precision.

In a design, the determining a frequency hopping periodicity index of the terminal based on a first time unit includes: determining the frequency hopping periodicity index of the terminal based on an SRS counter and a frequency hopping periodicity, where the SRS counter is associated with the first time unit.

According to the method, the frequency hopping periodicity index of the terminal is determined based on the SRS counter. For a specific SRS time domain configuration, the SRS counter is associated with an absolute time unit. The absolute time unit may be a corresponding absolute time domain position in the terminal. When frame timing and a slot structure are the same, the absolute time is consistent or the same for all terminals. The absolute time unit may be measured by using a specific OFDM symbol in a specific slot in a specific frame. Therefore, it is ensured that frequency hopping periodicity indexes determined by the different terminals based on the SRS counter are consistent at absolute time, and the first frequency hopping parameters, namely, $k_{hopping}$, determined by the two terminals based on the frequency hopping periodicity indexes are consistent.

In a design, the determining the frequency hopping periodicity index of the terminal based on an SRS counter and a frequency hopping periodicity satisfies:

$$n_{\text{RB\_hop}} = \left\lfloor \frac{n_{\text{SRS}}}{T_{\text{RB\_hop}}} \right\rfloor,$$

where

$n_{\text{RB\_hop}}$ represents the frequency hopping periodicity index of the terminal, $n_{\text{SRS}}$ represents the SRS counter, $T_{\text{RB\_hop}}$ represents the frequency hopping periodicity, and ⌊ ⌋ represents a rounding-down function.

In a design, the frequency hopping periodicity is a periodicity for sounding an SRS frequency hopping bandwidth, and the frequency hopping periodicity satisfies:

$$T_{\text{RB\_hop}} = \frac{m_{\text{SRS,b}_{\text{hop}}}}{m_{\text{SRS,B}_{\text{SRS}}}},$$

where

$T_{\text{RB\_hop}}$ represents the frequency hopping periodicity, $m_{\text{SRS,b}_{\text{hop}}}$ represents the SRS frequency hopping bandwidth, and $m_{\text{SRS,B}_{\text{SRS}}}$ represents the configured bandwidth of the SRS.

According to the method, for the specific SRS time domain configuration, the SRS counter is associated with the absolute time unit. The frequency hopping periodicity is measured by a quantity of included SRS counters or an SRS hop count. According to the method, the frequency hopping periodicity index can be associated with the absolute time unit, so that the first frequency hopping parameter can be associated with the absolute time unit.

In a design, the determining a first frequency hopping parameter based on the frequency hopping periodicity index of the terminal and a frequency hopping pattern includes: determining the first frequency hopping parameter based on a modulo operation result between the frequency hopping periodicity index and a periodicity of the frequency hopping pattern, where the periodicity of the frequency hopping pattern is equal to a quantity of elements included in the frequency hopping pattern.

For example, a modulo operation may be performed on the frequency hopping periodicity index and the periodicity of the frequency hopping pattern; and the first frequency hopping parameter is determined in the frequency hopping pattern based on the modulo operation result. For example, the first frequency hopping parameter is equal to a value corresponding to an $n^{\text{th}}$ element in the frequency hopping pattern, and $n$ is equal to the modulo operation result.

In a design, the determining a first frequency hopping parameter based on the frequency hopping periodicity index of the terminal and a frequency hopping pattern satisfies:

$$k_{\text{hopping}}(n_{\text{RB\_hop}}) = \frac{P_{\text{F}}}{2}(n_{\text{RB\_hop}} \bmod 2) + \left\lfloor \frac{n_{\text{RB\_hop}} \bmod P_{\text{F}}}{2} \right\rfloor,$$

where

$n_{\text{RB\_hop}}$ represents the frequency hopping periodicity index of the terminal, $k_{\text{hopping}}(n_{\text{RB\_hop}})$ represents the first frequency hopping parameter, $P_{\text{F}}$ represents a partial frequency sounding coefficient, ⌊ ⌋ represents a rounding-down function, and mod represents a modulo operation.

According to the method, the first frequency hopping parameter can be determined in a predefined manner. The predefined manner reflects a relationship between the first frequency hopping parameter and the frequency hopping periodicity index and the partial frequency sounding coefficient. This reduces scheduling complexity of a base station while reducing signaling overheads, enables different terminals to correspond to different SRS start frequency domain positions, reduces interference in SRS transmission, and improves channel estimation performance.

In a design, the sending the SRS to a network device based on the first frequency hopping parameter includes: determining a candidate subband index of the SRS based on the first frequency hopping parameter; determining a start RB position of the SRS based on the candidate subband index and a first subband index, where the first subband corresponds to a frequency domain range in which the terminal is not supported to perform SRS transmission; and sending the SRS to the network device based on the start RB position of the SRS.

The method can avoid collision between a subband on which the specific terminal sends an SRS and the first subband in which the terminal is not supported to perform SRS transmission. The first subband may correspond to a terminal that does not support start RB position frequency hopping, or transmission interference in a frequency domain range corresponding to the first subband is severe. To improve channel estimation precision, the first subband does not support the specific terminal in performing SRS transmission in the corresponding frequency domain range. According to the method, a subband that can perform SRS transmission is determined for the terminal. This reduces interference in SRS transmission and improves channel estimation performance.

In the foregoing design, in a possible implementation, when the candidate subband index and the first subband index correspond to a same frequency domain range, a start RB position index of the SRS satisfies:

$$N_{\text{offset}} = \frac{\left(k_{\text{F}} + 2k_{\text{hopping}}\right) \bmod P_{\text{F}}}{P_{\text{F}}} m_{\text{SRS,B}_{\text{SRS}}},$$

where

$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS,B}_{\text{SRS}}}$ represents the configured bandwidth of the SRS.

In the foregoing design, in a possible implementation, when the candidate subband index and the first subband index correspond to different frequency domain ranges, the start RB position index of the SRS satisfies:

$$N_{\text{offset}} = \frac{\left(k_{\text{F}} + k_{\text{hopping}}\right) \bmod P_{\text{F}}}{P_{\text{F}}} m_{\text{SRS,B}_{\text{SRS}}},$$

where

$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS,B}_{\text{SRS}}}$ represents the configured bandwidth of the SRS.

In a design, the method further includes: receiving first indication information from the network device; and determining, in at least one preconfigured or predefined frequency hopping pattern, a frequency hopping pattern indicated by the first indication information.

According to the method, a plurality of candidate frequency hopping patterns can be predefined or preconfigured. The network device can indicate the terminal to use one of the candidate frequency hopping patterns to determine the first frequency hopping parameter. Indication manners are flexible. The network device can flexibly configure different frequency hopping patterns based on channel conditions corresponding to different terminals. In addition, the network device can further configure different frequency hopping patterns for different terminals, so that start frequency domain positions for SRS transmission corresponding to different terminals are different. This reduces interference in SRS transmission. In addition, in the manner of predefining the plurality of candidate frequency hopping patterns, the network device only needs to indicate an index corresponding to a frequency hopping pattern, to indicate a specific frequency hopping pattern of the terminal. This effectively reduces signaling overheads.

In a design, the method further includes: receiving indication information about a second frequency hopping pattern from the network device; and determining the first frequency hopping parameter based on the second frequency hopping pattern; or otherwise, if the indication information is not received, determining the first frequency hopping parameter based on the first frequency hopping pattern.

In a design, the periodicity of the frequency hopping pattern is equal to an integer multiple of a partial frequency sounding coefficient corresponding to the terminal, or the periodicity of the frequency hopping pattern is equal to a largest value in a plurality of candidate partial frequency sounding coefficients, or the periodicity of the frequency hopping pattern is equal to a least common multiple of a plurality of candidate partial frequency sounding coefficients.

According to the method, different partial frequency sounding coefficients can correspond to unified periodicity of a frequency hopping pattern. This effectively reduces computing complexity and improves system efficiency.

According to a second aspect, a communication method is provided. The method is performed by the network device in the first aspect. For beneficial effect, refer to the first aspect. The method is performed by a network device, or may be performed by a component (a processor, a chip, or another component) configured in the network device, or may be performed by a software module, or the like; and includes: determining a frequency hopping periodicity index of a terminal based on a first time unit, where the first time unit is associated with a time unit corresponding to a sounding reference channel SRS; determining a first frequency hopping parameter based on the frequency hopping periodicity index of the terminal and a frequency hopping pattern, where the first frequency hopping parameter indicates a subband-level offset of the SRS within a range of a configured bandwidth of the SRS, and the frequency hopping pattern is associated with the first frequency hopping parameter; and receiving, based on the first frequency hopping parameter, the SRS corresponding to the terminal.

In a design, the determining a frequency hopping periodicity index of a terminal based on a first time unit includes: determining the frequency hopping periodicity index of the terminal based on an SRS counter and a frequency hopping periodicity, where the SRS counter is associated with the first time unit.

In a design, the determining the frequency hopping periodicity index of the terminal based on an SRS counter and a frequency hopping periodicity satisfies:

$$n_{\text{RB\_hop}} = \left\lfloor \frac{n_{\text{SRS}}}{T_{\text{RB\_hop}}} \right\rfloor,$$

where

$n_{\text{RB\_hop}}$ represents the frequency hopping periodicity index of the terminal, $n_{\text{SRS}}$ represents the SRS counter, $T_{\text{RB\_nop}}$ represents the frequency hopping periodicity, and $\lfloor \rfloor$ represents a rounding-down function.

In a design, the frequency hopping periodicity is a periodicity for sounding an SRS frequency hopping bandwidth, and the frequency hopping periodicity satisfies:

$$T_{\text{RB\_hop}} = \frac{m_{\text{SRS},\text{b}_{\text{hop}}}}{m_{\text{SRS},\text{B}_{\text{SRS}}}},$$

where

$T_{\text{RB\_nop}}$ represents the frequency hopping periodicity, $m_{\text{SRS},\text{b}_{\text{hop}}}$ represents the SRS frequency hopping bandwidth, and $m_{\text{SRS\_B}_{\text{SRS}}}$ represents the configured bandwidth of the SRS.

In a design, the determining a first frequency hopping parameter based on the frequency hopping periodicity index of the terminal and a frequency hopping pattern includes: determining the first frequency hopping parameter based on a modulo operation result between the frequency hopping periodicity index and a periodicity of the frequency hopping pattern, where the periodicity of the frequency hopping pattern is equal to a quantity of elements included in the frequency hopping pattern.

For example, a modulo operation may be performed on the frequency hopping periodicity index and the periodicity of the frequency hopping pattern; and the first frequency hopping parameter is determined in the frequency hopping pattern based on the modulo operation result. For example, the first frequency hopping parameter is equal to a value corresponding to an $n^{\text{th}}$ element in the frequency hopping pattern, and $n$ is equal to the modulo operation result.

In a design, the determining a first frequency hopping parameter based on the frequency hopping periodicity index of the terminal and a frequency hopping pattern satisfies:

$$k_{\text{hopping}}(n_{\text{RB\_hop}}) = \frac{P_{\text{F}}}{2}(n_{\text{RB\_hop}} \bmod 2) + \left\lfloor \frac{n_{\text{RB\_hop}} \bmod P_{\text{F}}}{2} \right\rfloor,$$

where

$n_{\text{RB\_hop}}$ represents the frequency hopping periodicity index of the terminal, $k_{\text{hopping}}(n_{\text{RB\_hop}})$ represents the first frequency hopping parameter, $P_{\text{F}}$ represents a partial frequency sounding coefficient, $\lfloor \rfloor$ represents a rounding-down function, and mod represents a modulo operation.

In a design, the receiving, based on the first frequency hopping parameter, the SRS from the terminal includes: determining a candidate subband index of the SRS based on the first frequency hopping parameter; determining a start RB position of the SRS based on the candidate subband index and a first subband index, where the first subband corresponds to a frequency domain range in which the terminal is not supported to perform SRS transmission; and receiving the SRS from the terminal based on the start RB position of the SRS.

In the foregoing design, in a possible implementation, when the candidate subband index and the first subband index correspond to a same frequency domain range, a start RB position index of the SRS satisfies:

$$N_{\text{offset}} = \frac{(k_{\text{F}} + 2k_{\text{hopping}}) \bmod P_{\text{F}}}{P_{\text{F}}} m_{\text{SRS},\text{B}_{\text{SRS}}},$$

where

$N_{\text{offset}}$ represents the start RB position index of the SRS, $k_{\text{F}}$ represents a start subband index, $k_{\text{hopping}}$ represents the first frequency hopping parameter, $P_{\text{F}}$ represents the partial frequency sounding coefficient, and $m_{\text{SRS},\text{B}_{\text{SRS}}}$ represents the configured bandwidth of the SRS.

In the foregoing design, in a possible implementation, when the candidate subband index and the first subband index correspond to different frequency domain ranges, the start RB position index of the SRS satisfies:

$$N_{\text{offset}} = \frac{(k_{\text{F}} + k_{\text{hopping}}) \bmod P_{\text{F}}}{P_{\text{F}}} m_{\text{SRS},B_{\text{SRS}}},$$

where

$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS},B_{\text{SRS}}}$ represents the configured bandwidth of the SRS.

In a design, the method further includes: sending first indication information to the terminal, where the first indication information indicates, in at least one preconfigured or predefined frequency hopping pattern, a frequency hopping pattern to be used currently by the terminal.

In a design, the receiving, based on the first frequency hopping parameter, the SRS corresponding to the terminal includes: determining, based on a first frequency hopping pattern, a candidate subband index of the SRS; determining, based on the candidate subband index and a first subband index, the first frequency hopping pattern or a second frequency hopping pattern, where the first subband corresponds to a frequency domain range in which the terminal is not supported to perform SRS transmission; determining, based on the first frequency hopping pattern or the second frequency hopping pattern, the first frequency hopping parameter; determining a start RB position of the SRS based on the first frequency hopping parameter; and sending the SRS to the network device based on the start RB position of the SRS.

Optionally, when the candidate subband index and the first subband index correspond to a same frequency domain range, the first frequency hopping parameter is determined based on the second frequency hopping pattern; or when the candidate subband index and the first subband index correspond to different frequency domain ranges, the first frequency hopping parameter is determined based on the first frequency hopping pattern. The first frequency hopping parameter in the second frequency hopping pattern is twice the first frequency hopping parameter in the first frequency hopping pattern.

Optionally, the method further includes: sending indication information about the second frequency hopping pattern to the terminal.

In a design, the periodicity of the frequency hopping pattern is equal to an integer multiple of a partial frequency sounding coefficient to be used currently by the terminal, or the periodicity of the frequency hopping pattern is equal to a largest value in a plurality of candidate partial frequency sounding coefficients, or the periodicity of the frequency hopping pattern is equal to a least common multiple of a plurality of candidate partial frequency sounding coefficients.

According to a third aspect, a communication method is provided. The method is performed by a terminal, or may be performed by a component (a processor, a chip, or another component) configured in the terminal, or may be performed by a software module, or the like; and includes: determining a symbol index of the terminal based on a first time unit, where the first time unit is associated with a time unit corresponding to a sounding reference signal SRS; determining a first frequency hopping parameter based on the symbol index of the terminal and a frequency hopping pattern, where the first frequency hopping parameter indicates a subband-level offset of the SRS within a range of a configured bandwidth of the SRS, and the frequency hopping pattern is associated with the first frequency hopping parameter; and sending the SRS to a network device based on the first frequency hopping parameter.

In a design, corresponding to a start RB position frequency hopping in frequency hopping periodicity or an OFDM symbol-based start RB position frequency hopping scenario, the determining a symbol index of the terminal based on a first time unit includes: determining the symbol index of the terminal based on an SRS counter and a frequency hopping periodicity, where the SRS counter is associated with the first time unit.

According to the method, the symbol index of the terminal is determined based on the SRS counter. For a specific SRS time domain configuration, the SRS counter is associated with an absolute time unit. The absolute time unit may be a corresponding absolute time domain position in the terminal. When frame timing and a slot structure are the same, the absolute time is consistent or the same for all terminals. The absolute time unit may be measured by using a specific OFDM symbol in a specific slot in a specific frame. Therefore, it is ensured that symbol indexes determined by the different terminals based on the SRS counter are consistent at absolute time, and the first frequency hopping parameters, namely, $k_{\text{hopping}}$, determined by the two terminals based on the symbol indexes are consistent.

In a design, the determining the symbol index of the terminal based on an SRS counter and a frequency hopping periodicity satisfies:

$$m_{\text{RB}_{\text{hop}}} = q,$$

where

$m_{\text{RB}_{\text{hop}}}$ represents the symbol index of the terminal, and $q$ represents that the first time unit is a symbol index corresponding to a specific SRS counter.

In a design, the determining the symbol index of the terminal based on an SRS counter and a frequency hopping periodicity satisfies:

$$m_{\mathrm{RB_{hop}}} = \left\lfloor \frac{n_{\mathrm{SRS}}}{T_{\mathrm{RB\_hop}}} \right\rfloor R + q,$$

where

$m_{\mathrm{RB_{hop}}}$ represents the symbol index of the terminal, $n_{\mathrm{SRS}}$ represents the SRS counter, $T_{\mathrm{RB\_hop}}$ represents the frequency hopping periodicity, $R$ represents a repetition factor, and $q$ represents that the first time unit is a symbol index corresponding to $n_{\mathrm{SRS}}$.

According to the method, for a specific SRS time domain configuration, the SRS counter is associated with the absolute time unit. The frequency hopping periodicity is measured by a quantity of included SRS counters or an SRS hop count. According to the method, the frequency hopping periodicity index can be associated with the absolute time unit, so that the first frequency hopping parameter can be associated with the absolute time unit.

In a design, the determining a first frequency hopping parameter based on the symbol index of the terminal and a frequency hopping pattern includes: determining the first frequency hopping parameter based on a modulo operation result between the symbol index and a periodicity of the frequency hopping pattern, where the periodicity of the frequency hopping pattern is equal to a quantity of elements included in the frequency hopping pattern.

For example, a modulo operation may be performed on the symbol index and the periodicity of the frequency hopping pattern; and the first frequency hopping parameter is determined in the frequency hopping pattern based on the modulo operation result. For example, the first frequency hopping parameter is equal to a value corresponding to an $n^{\mathrm{th}}$ element in the frequency hopping pattern, and $n$ is equal to the modulo operation result.

In a design, the determining a first frequency hopping parameter based on the symbol index of the terminal and a frequency hopping pattern satisfies:

$$k_{\mathrm{hopping}}(m_{\mathrm{RB_{hop}}}) = \frac{P_{\mathrm{F}}}{2}(m_{\mathrm{RB_{hop}}} \bmod 2) + \left\lfloor \frac{m_{\mathrm{RB_{hop}}} \bmod P_{\mathrm{F}}}{2} \right\rfloor,$$

where

$m_{\mathrm{RB_{hop}}}$ represents the symbol index of the terminal, $k_{\mathrm{hopping}}(m_{\mathrm{RB_{hop}}})$ represents the first frequency hopping parameter, $P_{\mathrm{F}}$ represents a partial frequency sounding coefficient, $\llcorner \lrcorner$ represents a rounding-down function, and mod represents a modulo operation.

According to the method, the first frequency hopping parameter can be determined in a predefined manner. The predefined manner reflects a relationship between the first frequency hopping parameter and the symbol index and the partial frequency sounding coefficient. This reduces scheduling complexity of a base station while reducing signaling overheads, enables different terminals to correspond to different SRS start frequency domain positions, reduces interference in SRS transmission, and improves channel estimation performance.

Optionally, in addition to a periodic or a semi-persistent SRS frequency hopping scenario, this application is also applied to an aperiodic SRS frequency hopping scenario, or is also applied to a non-frequency hopping scenario.

According to a fourth aspect, a communication method is provided. The method is performed by the network device in the first aspect. For beneficial effect, refer to the third aspect. The method is performed by a network device, or may be performed by a component (a processor, a chip, or another component) configured in the network device, or may be performed a software module, or the like; and includes: determining a symbol index of a terminal based on a first time unit, where the first time unit is associated with a time unit corresponding to a sounding reference signal SRS; determining a first frequency hopping parameter based on the symbol index of the terminal and a frequency hopping pattern, where the first frequency hopping parameter indicates a subband-level offset of the SRS within a range of a configured bandwidth of the SRS, and the frequency hopping pattern is associated with the first frequency hopping parameter; and receiving, based on the first frequency hopping parameter, the SRS corresponding to the terminal.

In a design, corresponding to a start RB position frequency hopping in a frequency hopping periodicity or an OFDM symbol-based start RB position frequency hopping scenario, the determining a symbol index of the terminal based on a first time unit includes: determining the symbol index of the terminal based on an SRS counter and a frequency hopping periodicity, where the SRS counter is associated with the first time unit.

In a design, the determining the symbol index of the terminal based on an SRS counter and a frequency hopping periodicity satisfies:

7

$$m_{\mathrm{RB_{hop}}} = q,$$

where

$m_{\mathrm{RB_{hop}}}$ represents the symbol index of the terminal, and $q$ represents that the first time unit is a symbol index corresponding to a specific SRS counter.

In a design, the determining the symbol index of the terminal based on an SRS counter and a frequency hopping periodicity satisfies:

$$m_{\mathrm{RB_{hop}}} = \left\lfloor \frac{n_{\mathrm{SRS}}}{T_{\mathrm{RB\_hop}}} \right\rfloor R + q,$$

where

$m_{\mathrm{RB_{hop}}}$ represents the symbol index of the terminal, $n_{\mathrm{SRS}}$ represents the SRS counter, $T_{\mathrm{RB\_hop}}$ represents the frequency hopping periodicity, $R$ represents a repetition factor, and $q$ represents that the first time unit is a symbol index corresponding to $n_{\mathrm{SRS}}$.

In a design, the determining a first frequency hopping parameter based on the symbol index of the terminal and a frequency hopping pattern includes: determining the first frequency hopping parameter based on a modulo operation result between the symbol index and a periodicity of the frequency hopping pattern, where the periodicity of the frequency hopping pattern is equal to a quantity of elements included in the frequency hopping pattern.

For example, a modulo operation may be performed on the symbol index and the periodicity of the frequency hopping pattern; and the first frequency hopping parameter is determined in the frequency hopping pattern based on the modulo operation result. For example, the first frequency hopping parameter is equal to a value corresponding to an $n^{\mathrm{th}}$ element in the frequency hopping pattern, and $n$ is equal to the modulo operation result.

In a design, the determining a first frequency hopping parameter based on the symbol index of the terminal and a frequency hopping pattern satisfies:

$$k_{\mathrm{hopping}}(m_{\mathrm{RB_{hop}}}) = \frac{P_{\mathrm{F}}}{2}(m_{\mathrm{RB_{hop}}} \bmod 2) + \left\lfloor \frac{m_{\mathrm{RB_{hop}}} \bmod P_{\mathrm{F}}}{2} \right\rfloor,$$

where

$m_{\mathrm{RB_{hop}}}$ represents the symbol index of the terminal, $k_{\mathrm{hopping}}(m_{\mathrm{RB_{hop}}})$ represents the first frequency hopping parameter, $P_{\mathrm{F}}$ represents a partial frequency sounding coefficient, $\lfloor \ \rfloor$ represents a rounding-down function, and mod represents a modulo operation.

Optionally, in addition to a periodic or a semi-persistent SRS frequency hopping scenario, this application is also applied to an aperiodic SRS frequency hopping scenario, or is also applied to a non-frequency hopping scenario.

According to a fifth aspect, a communication apparatus is provided. The apparatus includes units or modules that one-to-one correspond to the method/operation/step/action described according to the first aspect or the third aspect. The units or modules may be hardware circuits, or may be software, or may be implemented by a hardware circuit in combination with software.

According to a sixth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method according to the first aspect or the third aspect.

According to a seventh aspect, a communication apparatus is provided. The apparatus includes units or modules that one-to-one correspond to the method/operation/step/action described in the second aspect or the fourth aspect. The units or modules may be hardware circuits, or may be software, or may be implemented by a hardware circuit in combination with software.

According to an eighth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method according to the second aspect or the fourth aspect.

According to a ninth aspect, a computer-readable storage medium is provided. The computer-readable storage medium stores a computer program or instructions. When the computer program or the instructions are executed by an apparatus, the apparatus is enabled to perform the method according to the first aspect or the third aspect.

According to a tenth aspect, a computer-readable storage medium is provided. The computer-readable storage medium stores a computer program or instructions. When the computer program or the instructions are executed by an apparatus, the apparatus is enabled to perform the method according to the second aspect or the fourth aspect.

According to an eleventh aspect, a computer program product is provided. The computer program product includes a computer program or instructions. When the computer program or the instructions are executed by an apparatus, the apparatus is enabled to perform the method according to the first aspect or the third aspect.

According to a twelfth aspect, a computer program product is provided. The computer program product includes a computer program or instructions. When the computer program or the instructions are executed by an apparatus, the apparatus is enabled to perform the method according to the second aspect or the fourth aspect.

According to a thirteenth aspect, a system is provided, including the apparatus according to the fifth aspect or the sixth aspect and the apparatus according to the seventh aspect or the eighth aspect.

## BRIEF DESCRIPTION OF DRAWINGS

FIG. 1 is a schematic diagram of a communication system according to this application;
FIG. 2 is a schematic diagram of legacy SRS frequency hopping according to this application;
FIG. 3 is a schematic diagram of SRS partial frequency hopping according to this application;
FIG. 4 is a schematic diagram of simulation of correlation according to this application;
FIG. 5a is a schematic diagram of partial frequency sounding according to this application;
FIG. 5b is a schematic diagram of a legacy frequency hopping periodicity according to this application;
FIG. 6 is a schematic diagram of dividing a configured bandwidth of an SRS into subbands according to this application;
FIG. 7 is a schematic diagram of frequency hopping according to this application;
FIG. 8 is a schematic diagram of SRS transmission according to this application;
FIG. 9, FIG. 12, FIG. 13, and FIG. 16 each are a schematic flowchart of a communication method according to this application;
FIG. 10 is a schematic diagram of a start RB position frequency hopping solution inter a legacy frequency hopping periodicity according to this application;
FIG. 11a is a schematic diagram of subband indexes corresponding to different terminals according to this application;
FIG. 11b and FIG. 14 each are a schematic diagram of subbands for different UE to perform SRS transmission according to this application;
FIG. 15 is a schematic diagram of a start RB position frequency hopping solution intra a legacy frequency hopping periodicity according to this application;
FIG. 17 is a schematic diagram of a reference point according to this application; and
FIG. 18 and FIG. 19 each are a schematic diagram of a communication apparatus according to this application.

## DESCRIPTION OF EMBODIMENTS

The following describes technical solutions of this application with reference to accompanying drawings.

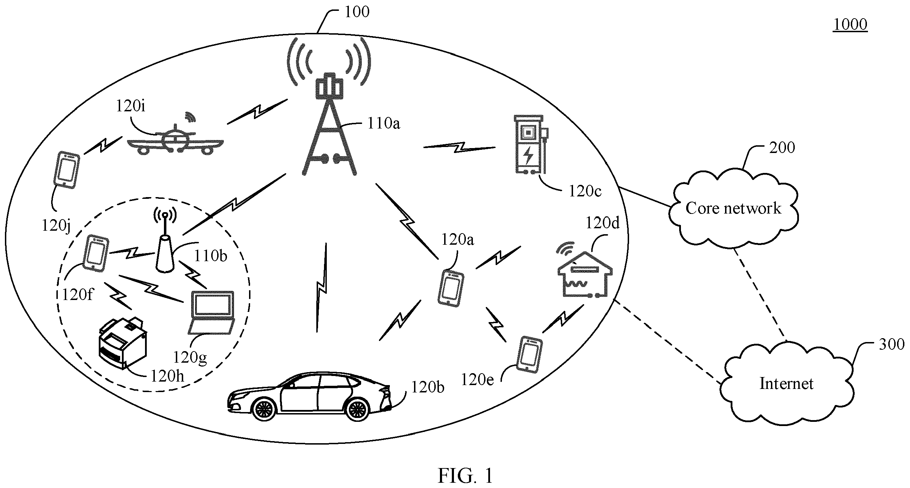

FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like, or may be a module or a unit, for example, a central unit (central unit, CU) or a distributed unit (distributed unit, DU), that completes some functions of a base station. The CU completes functions of a radio resource control (radio resource control, RRC) protocol and a packet data convergence layer protocol (packet data convergence protocol, PDCP) of a base station, and may further complete a function of a service data adaptation protocol (service data adaptation protocol, SDAP). The DU completes functions of a radio link control (radio link control, RLC) layer and a medium access control (medium access control, MAC) layer of a base station, and may further complete functions of some physical (physical, PHY) layers or all physical layers. For specific descriptions of the foregoing protocol layers, refer to related technical specifications of a 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an automatic driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j that accesses the radio access network 100 by using the 120i, the terminal 120i is a base station. However, for the base station 110a, the 120i is a terminal, that is, the 110a and the 120i communicate with each other via a radio air interface protocol. Certainly, the 110a and the 120i may also communicate with each other via an interface protocol between base stations. In this case, for the 110a, the 120i is also a base station. Therefore, both the base station and the terminal may be collectively referred to as communication apparatuses. The 110a and the 110b in FIG. 1 may be referred to as communication apparatuses having a base station function, and the 120a to the 120j in FIG. 1 may be referred to as communication apparatuses having a terminal function.

Communication may be performed between a base station and a terminal, between base stations, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, a function of the base station may be performed by a module (like a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (like a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. A cell that establishes a wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, a discrete Fourier transform-spread-spectrum OFDM (discrete Fourier transform-spread-OFDM, DFT-s-OFDM) symbol, or the like.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application are also applied to a future communication system, for example, a 6th generation mobile communication system. The technical solutions provided in embodiments of this application are also applied to device-to-device (device-to-device, D2D) communication, vehicle-to-everything (vehicle-to-everything, V2X) communication, machine to machine (machine to machine, M2M) communication, machine-type communication (machine-type communication, MTC), an internet of things (internet of things, IoT) communication system, or other communication systems.

In this application, a conventional terminal that supports a current protocol mechanism is a legacy (legacy) UE or a legacy terminal. Correspondingly, a mechanism supported by the current protocol mechanism is referred to as a legacy mechanism. For example, legacy frequency hopping indicates a frequency hopping mechanism described in a current protocol (for example, 38.211 in R16), and a legacy frequency hopping periodicity indicates a frequency hopping periodicity corresponding to a frequency hopping mechanism described in the current protocol (for example, 38.211 in R16).

Legacy SRS frequency hopping

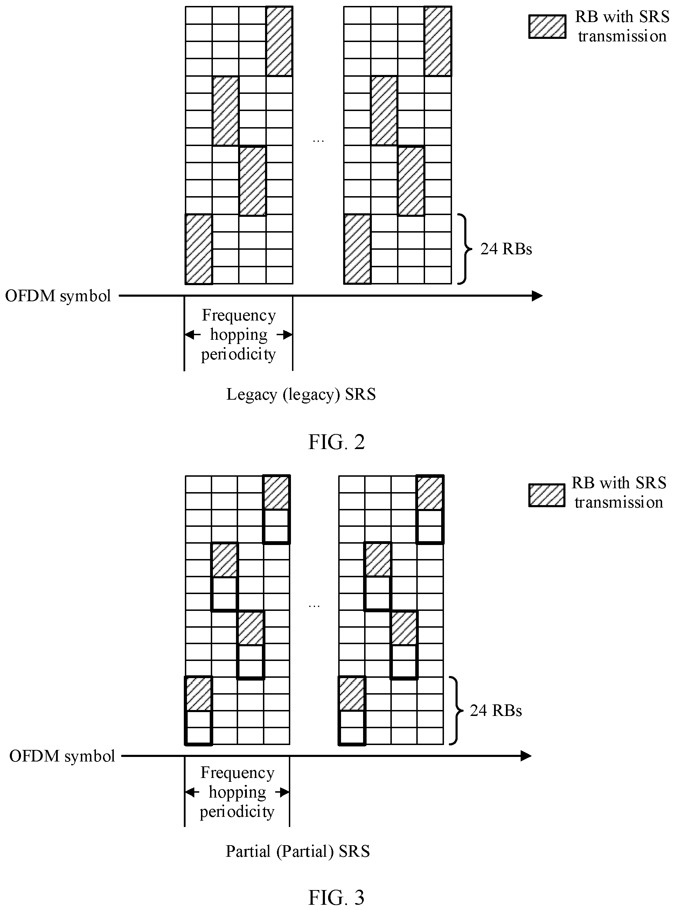

A 5G NR communication system is used as an example. A sounding reference signal (sounding reference signal, SRS) is used as an uplink reference signal for estimating channel quality of different frequency bands. To improve measurement precision, the terminal may send the SRS by using a frequency hopping technology. In one frequency hopping periodicity, the terminal sends the SRS on different time domain symbols by occupying different frequency domain positions. For example, configurations $C_{SRS}$=24, $b_{hop}$=0, $B_{SRS}$=2, and $R$=1 are used as an example. As shown in FIG. 2, in the legacy frequency hopping mechanism, one frequency hopping bandwidth includes 96 resource blocks (resource blocks, RBs), the 96 RBs are divided into four subbands, and each subband set includes 24 RBs. In other words, a quantity of RBs occupied by a configured bandwidth of an SRS is equal to 24 RBs. For example, in a frequency domain increasing direction, the four subbands are respectively referred to as a subband 0 to a subband 3. When the repetition factor R=1, each frequency hopping periodicity includes four time-domain symbols, and the terminal occupies a subband 0 to send an SRS on a first time domain symbol corresponding to the SRS, and occupies a subband 2 to send an SRS on a second time domain symbol corresponding to the SRS. On a third time domain symbol and a fourth time domain symbol, a subband 1 and a subband 3 are respectively occupied to send an SRS. In the SRS frequency hopping mechanism, based on different OFDM symbols, the SRS sounding bandwidth (for example, a quantity of occupied RBs is 96) is divided into four subbands, and different subbands are separately sounded on the four time domain symbols. Under a condition of fixed uplink power, this can increase power corresponding to each frequency domain resource unit, and improve measurement performance.

RB-level partial frequency sounding

It is considered that an SRS is widely applied to various scenarios, to improve coverage and a capacity of the SRS becomes one of main objectives. The objective may be implemented by increasing SRS repetition and partial frequency sounding. For a partial frequency sounding technology, a terminal no longer sends the SRS at all frequency domain positions in a configured bandwidth of the SRS, but sends the SRS at some frequency domain positions in the configured bandwidth of the SRS. For example, in an implementation, the configured bandwidth of the SRS may be divided into a plurality of subbands, and the SRS is sent on some subbands in the configured bandwidth of the SRS. For example, as shown in FIG. 3, in an SRS partial (partial) frequency sounding (sounding) scenario, an SRS partial frequency sounding coefficient $P_F$ = 2, a configured bandwidth of an SRS includes 24 RBs, the configured bandwidth of the SRS is divided into two subbands, and each subband includes 12 RBs. In a frequency hopping periodicity, SRS transmission is performed on a subband 1 in the configured bandwidth of the SRS, but SRS transmission is no longer performed on a corresponding subband 0. For a meaning of the frequency hopping periodicity, refer to the following description.

For example, the configured bandwidth of the SRS $m_{SRS,B_{SRS}}$ is divided into $P_F$ subbands, and each subband occupies $(1/P_F)*m_{SRS,B_{SRS}}$ RBs, or each subband occupies a quantity of RBs that is close to $(1/P_F)*m_{SRS,B_{SRS}}$ and is an integer multiple of 4. A terminal sends the SRS on a frequency domain resource corresponding to one subband in the configured bandwidth of the SRS, and a base station sounds the SRS on the corresponding frequency domain resource, and performs corresponding channel measurement. In a frequency domain resource range corresponding to the configured bandwidth of the SRS, a channel measurement result of a remaining subband other than the foregoing subband may be obtained based on a channel measurement result of the subband. For example, the channel measurement result of the remaining subbands may be obtained in a differential manner. In a possible implementation, the foregoing process may be further described as follows: For RB-level partial frequency sounding, a quantity of RBs occupied by the sounding bandwidth is $\frac{1}{P_F}m_{SRS,\ B_{SRS}}$ , and a corresponding start RB position index in the sounding bandwidth satisfies:

$$N_{\text{offset}} = \frac{k_F}{P_F}m_{SRS,\ B_{SRS}} \qquad\qquad (1\text{-}1)$$

$k_F \in \{0, ..., P_F-1\}$, $P_F$ and $k_F$ may be configured based on RRC, a MAC control element (control element, CE), or downlink control information (downlink control information, DCI), and $m_{SRS,\ B_{SRS}}$ represents the configured bandwidth of the SRS. In this mechanism, the base station sounds a channel in a frequency domain range corresponding to $(\frac{1}{P_F}m_{SRS,\ B_{SRS}})$ and no longer sounds a channel in a remaining frequency range $(m_{SRS,\ B_{SRS}} - \frac{1}{P_F}m_{SRS,\ B_{SRS}})$ in the configured bandwidth of the SRS. The base station obtains a channel measurement result of the remaining frequency range $(m_{SRS,\ B_{SRS}} - \frac{1}{P_F}m_{SRS,\ B_{SRS}})$ based on a channel measurement result of the channel sounded in the frequency part $(\frac{1}{P_F}m_{SRS,\ B_{SRS}})$ . As a result, corresponding channel measurement precision is reduced.

Start RB position frequency hopping

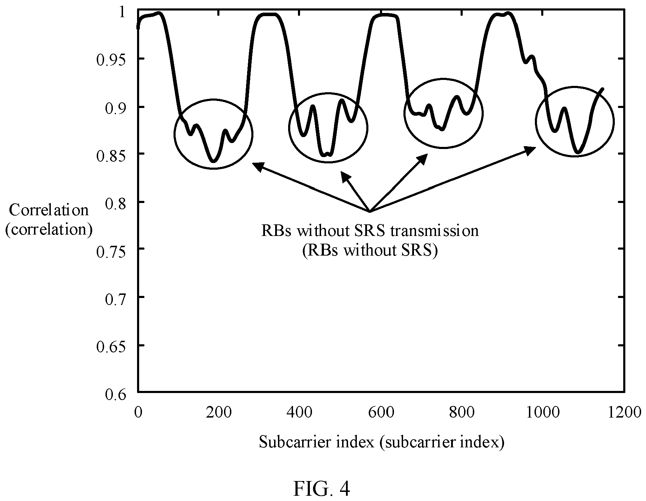

In FIG. 4, that $P_F = 4$ is used as an example to calculate correlation between an actual channel **H** and an estimated channel $\hat{\mathbf{H}}^H$ in a different SRS configuration bandwidth range. For example, the correlation between the two channels may be represented as $\frac{|\mathbf{H}\hat{\mathbf{H}}^H|^2}{|\mathbf{H}\hat{\mathbf{H}}^H|\cdot|\hat{\mathbf{H}}\hat{\mathbf{H}}^H|}$ . It may be understood that higher correlation between the actual channel and the estimated channel indicates higher channel measurement precision. Simulation results in FIG. 4 show that channel measurement precision corresponding to a frequency domain range in which SRS sounding is not configured is significantly reduced.

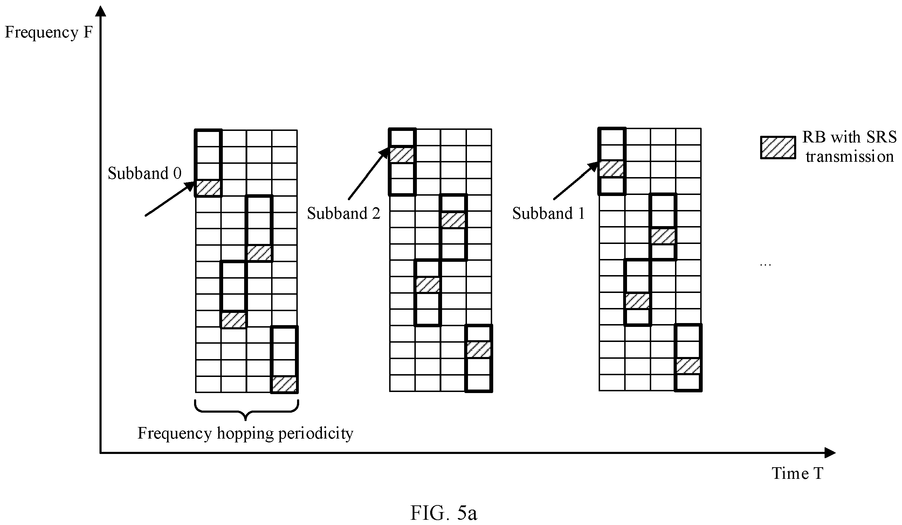

To improve channel estimation precision and ensure even channel estimation precision in different frequency bands, a start RB position frequency hopping mechanism based on different SRS frequency hopping periodicities is proposed in the 3GPP TSG RAN conference. A process of start RB position frequency hopping may be understood as follows: In a configured bandwidth of an SRS, a start RB position corresponding to SRS transmission changes with different frequency hopping periodicities. For example, in FIG. 5a, a basic principle of start RB position frequency hopping is described by using an example in which configurations $C_{SRS}$=24, $b_{hop}$=0, $B_{SRS}$=2, $R$=1, a configured bandwidth of an SRS $m_{SRS,\ B_{SRS}}$ =24, and a partial frequency sounding coefficient $P_F$ = 4. Based on the configurations, the corresponding configured bandwidth of the SRS is divided into four subbands, and the four subbands may respectively correspond to a subband 0 to a subband 3 in a frequency domain increasing direction. In a first frequency hopping periodicity, a terminal sends the SRS on a subband 0 in the configured bandwidth of the SRS. In a second frequency hopping periodicity, the terminal sends the SRS on a subband 2 in the configured bandwidth of the SRS. In a third frequency hopping periodicity, the terminal sends the SRS on a subband 1 in the configured bandwidth of the SRS. It should be noted that, in a start RB position frequency hopping mechanism shown in FIG. 5a, in a same frequency hopping periodicity, although the configured bandwidths of the SRS corresponding to different OFDM symbols correspond to different frequency domain positions, for a same configured bandwidth of the SRS, indexes of subbands for SRS transmission are the same in the same frequency hopping periodicity.

According to a conclusion in the 3GPP RAN1 #106, it is determined to support a periodic or semi-persistent SRS to perform start RB position frequency hopping in different SRS frequency hopping periodicities. In each frequency hopping periodicity, an index of a start RB position is sounded and satisfies:

$$N_{\text{offset}} = \frac{(k_F+k_{\text{hopping}})\ \text{mod}\ P_F}{P_F}m_{SRS,\ B_{SRS}} \qquad\qquad (1\text{-}2)$$

$k_F$ represents a subband index, $k_{hopping}$ represents a subband-level offset, and the subband-level offset is an offset of a subband index corresponding to current SRS transmission relative to an initial subband index $k_F$. In subsequent embodiments, in this application, a first frequency hopping parameter is represented as a parameter $k_{hopping}$. It may be understood that, in subsequent descriptions, the first frequency hopping parameter may be represented as $k_{hopping}$, or because $k_{hopping}$ varies with different frequency hopping periodicities, the first frequency hopping parameter $k_{hopping}$ corresponding to an $(n_{RB\_hop})^{th}$ frequency hopping periodicity may also be represented as $k_{hopping}$ $(n_{RB\_hop})$, where $n_{RB\_hop}$ represents a frequency hopping periodicity index of the terminal. In subsequent descriptions, descriptions of $k_{hopping}$ $(n_{RB\_hop})$ and the first frequency hopping parameter $k_{hopping}$ corresponding to the $(n_{RB\_hop})^{th}$ frequency hopping periodicity are not distinguished, and may be replaced with each other.

For example, if $k_F = 1$ and $k_{hopping} = 2$, the terminal performs SRS transmission in a frequency domain range corresponding to a subband 3. $P_F$ represents the partial frequency sounding coefficient, and $P_F$ may be equal to a ratio of a total quantity of RBs included in the configured bandwidth of the SRS to a quantity of RBs for SRS transmission in the configured bandwidth of the SRS. $P_F$ may alternatively be equal to a quantity of subbands for actual SRS transmission in the configured bandwidth of the SRS. For example, in FIG. 3, if the configured bandwidth of the SRS $m_{SRS, B_{SRS}} = 24$, and the partial frequency sounding coefficient $P_F = 2$, a quantity of RBs occupied for SRS transmission is equal to 12. Alternatively, the configured bandwidth of the SRS $m_{SRS, B_{SRS}}$ is divided into two subbands, and a quantity of RBs occupied by each subband is equal to 12.

In Formula (1-2), the parameter $S_F$ satisfies:

$$S_F = \left(k_F + k_{hopping}\right) \bmod P_F \tag{1-3}$$

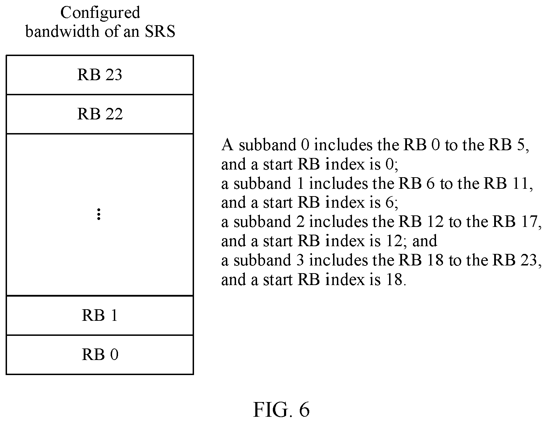

The parameter represents an index of a subband corresponding to SRS transmission in a current frequency hopping periodicity. The subband index is divided by the quantity of subbands (namely, $P_F$) included in the entire configured bandwidth of the SRS, then a quotient is multiplied by the quantity of RBs (namely, $m_{SRS, B_{SRS}}$) included in the configured bandwidth of the SRS, and an operation result is equal to a start RB index of the subband for SRS transmission in the current frequency hopping periodicity. For example, as shown in FIG. 6, a configured bandwidth of an SRS includes 24 RBs, and indexes of the 24 RBs are respectively equal to 0 to 23. The configured bandwidth of the SRS is divided into four subbands, that is, $P_F$ is 4, and indexes of the four subbands are sequentially 0 to 3. It may be inferred that each subband includes six RBs, a subband 0 includes an RB 0 to an RB 5, and a start RB index is 0. A subband 1 includes an RB 6 to an RB 11, and a start RB index is equal to 6. A subband 2 includes an RB 12 to an RB 17, and a start RB index is 12. A subband 3 includes an RB 18 to an RB 23, and a start RB index is equal to 18. If SRS transmission is performed on a subband 1 in a frequency hopping periodicity, in Formula 1-1, $S_F = 1$. An index, of a start RB for sounding the SRS, calculated by using Formula 1-1 satisfies:

$$N_{offset} = \frac{1}{P_F} m_{SRS, B_{SRS}} = \frac{1}{4} 24 = 6 \tag{1-4}$$

This formula corresponds to the start RB index of the subband 1 shown in FIG. 6.

In the start RB position frequency hopping mechanism, $k_{hopping}$ changes with different frequency hopping periodicities, and $k_{hopping}$ is determined based on a frequency hopping pattern. For example, the frequency hopping pattern corresponding to $k_{hopping}$ is equal to {0, 2, 1, 3}, $k_{hopping}$ is 0 in a first frequency hopping periodicity of the terminal. $k_{hopping}$ is respectively 2, 1, and 3 in a second frequency hopping periodicity, a third frequency hopping periodicity, and a fourth frequency hopping periodicity. Currently, an index of a frequency hopping periodicity is counted from a perspective of the terminal by using a frequency hopping periodicity corresponding to actual SRS transmission. For different terminals multiplexed in the configured bandwidth of the SRS, collision between frequency domain resources used by different terminals for SRS transmission may occur. If signaling effective time of different terminals (for example, UE 1 and UE 2) are different, that is, start time for actual SRS transmission are different, the UE 1 and the UE 2 may perform SRS transmission in a same frequency domain range. When a cyclic shift (cyclic shift, CS) resource and a comb comb resource are limited, severe interference may occur, and channel estimation precision is reduced.

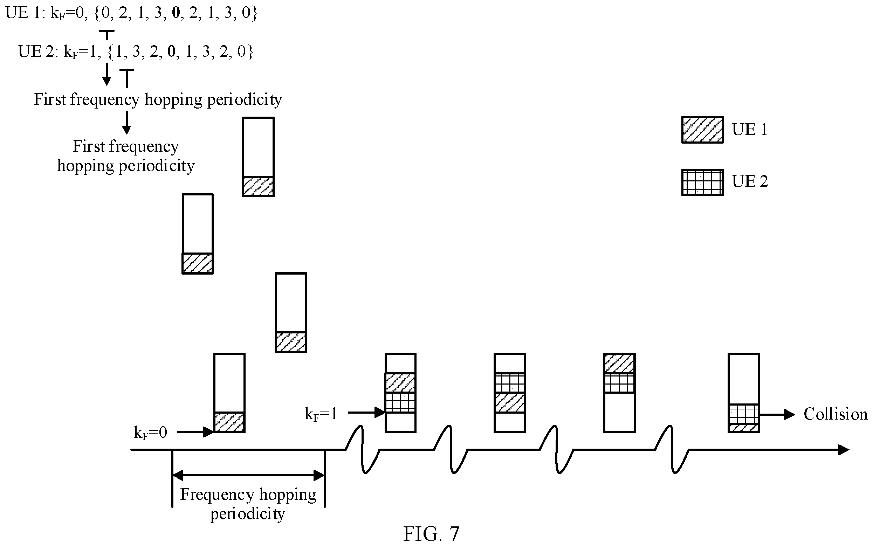

For example, in FIG. 7, interference to be resolved in embodiments of this application is described by using an example in which a frequency hopping pattern is equal to {0, 2, 1, 3}, a configuration of UE 1 is $k_F = 0$, and a configuration of UE 2 is $k_F = 1$. Signaling effective time of the UE 1 and the UE 2 is different. The signaling effective time may be understood as time at which a terminal actually performs SRS transmission after receiving signaling (for example, RRC signaling), $k_{hopping}$ are respectively 0, 2, 1, 3, and 0 in a first frequency hopping periodicity, a second frequency hopping periodicity, a third frequency hopping periodicity, a fourth frequency hopping periodicity, and a fifth frequency hopping periodicity of UE 1 and UE 2. When the UE 1 is in the configuration of $k_F = 0$, indexes of subbands corresponding to SRS transmission are respectively 0, 2, 1, 3, and 0 in the first frequency hopping periodicity to the fifth frequency hopping periodicity of the UE 1. When the UE 2 is in the configuration of $k_F=1$, indexes of subbands corresponding to SRS transmission are respectively 1, 3, 2, 0, and 1 in the first frequency hopping periodicity to the fifth frequency hopping periodicity of the UE 2. The signaling effective time of the UE 2 is one frequency hopping periodicity later than that of the UE 1, and the fifth frequency hopping periodicity of the UE 1 is the same as absolute time corresponding to the fourth frequency hopping periodicity of the UE 2. It can be learned that, at the absolute time, indexes of subbands on which the UE 1 and the UE 2 perform SRS transmission are both 0. For a periodic SRS and a semi-persistent SRS, in subsequent SRS transmission, the UE 1 and the UE 2 occupy a same OFDM symbol to perform SRS transmission in a frequency domain range corresponding to a subband 0. When a CS resource and a comb resource are limited, non-orthogonal multiplexing of the UE 1 and the UE 2 may occur. Consequently, severe interference occurs, and channel estimation precision is reduced.

It is found, through research on causes of the frequency domain collision, that an important cause of the frequency domain collision is that different terminals correspond to different $k_{hopping}$ in an absolute time unit. For example, in the foregoing example, an absolute time unit corresponds to the fifth frequency hopping periodicity of the UE 1 and the fourth frequency hopping periodicity of the UE 2, $k_{hopping}$ corresponding to the UE 1 in the fifth frequency hopping periodicity is 0, and $k_{hopping}$ corresponding to the UE 2 in the fourth frequency hopping periodicity is 3. In this case, even if initial subband indexes $k_F$ corresponding to the UE 1 and the UE 2 are different, frequency domain ranges corresponding to subbands for actual SRS transmission are still the same.

To resolve the foregoing problems, this application provides a communication method, including: $k_{hopping}$ is associated with an absolute time unit based on a frequency hopping pattern. This ensures that in a same time domain range, different terminals correspond to same $k_{hopping}$ based on the same frequency hopping pattern even if signaling effective time corresponding to the terminals are different. For terminals multiplexed in a same configured bandwidth of an SRS, the communication method in this application can ensure that different terminals perform SRS transmission in different subbands in the same time domain range, provided that corresponding $k_F$ is configured differently, reduce interference between SRS transmission while scheduling overheads are effectively reduced, and improve channel estimation precision.

It should be noted that in the foregoing descriptions, an example in which the different terminals use the same frequency hopping pattern is used for description, and this is not intended to limit this application. In a scenario in which a base station configures different frequency hopping patterns for different terminals by using signaling, the method provided in this application may still be used to associate $k_{hopping}$ with an absolute time unit. In the communication method, the base station does not need to consider signaling effective time of different terminals. This effectively reduces scheduling overheads of the base station.

The following continues to explain and describe communication nouns or terms in this application, and the explanation and descriptions are also used as a part of content of this application.

1. Key parameter description

**Table 1-1 Key parameter expression**

| Name | Protocol expression |
|------|---------------------|
| SRS resource | Indicates an SRS resource. To be specific, an SRS resource includes one or more of a time domain resource, a frequency domain resource, or a space domain resource for SRS transmission. For example, the time domain resource may be a time unit such as a symbol, a subframe, or a slot; the frequency domain resource may be a frequency domain position such as a subcarrier, a resource block (resource block, RB), a resource element (resource element, RE), or a resource group (resource group, RG); and the space domain resource may be a spatial domain such as an antenna port or a codeword. The SRS resource is configured by using radio resource control (radio resource control, RRC) information element (information element, IE) SRS-Resource or SRS-PosResource, where SRS-PosResource is used in a positioning scenario. |
| SRS | Indicates a sounding reference signal. One SRS may correspond to a plurality of antenna ports, different SRS sequences are sent on different antenna ports, and one SRS may be sent on a corresponding SRS resource. |
| $K_{TC}$ | Indicates a quantity of transmission combs (combs). The quantity of transmission combs is configured by higher-layer signaling *transmissionComb*. |

(continued)

| Name | Protocol expression |
|---|---|
| $\overline{k}_{\mathrm{TC}}$ | Indicates a tansmission comb offset. |
| $p_{\mathrm{i}}$ | Indicates a sequence number of an antenna port $i$. |
| $n_{\mathrm{SRS}}^{\mathrm{cs,max}}$ | Indicates a maximum quantity of cyclic shifts (cycle shifts, CSs). |
| $\alpha_{\mathrm{i}}$ | Indicates a cyclic shift. |
| $n_{\mathrm{SRS}}^{\mathrm{cs}}$ | Indicates a cyclic shift offset. |
| $n_{\mathrm{SRS}}^{\mathrm{cs},i}$ | Indicates a cyclic shift of an SRS sequence corresponding to an antenna port $p_i$. |
| $m_{\mathrm{SRS},B_{\mathrm{SRS}}}$ | Indicates a configured bandwidth of an SRS (also referred to as a quantity of RBs occupied by an SRS). The configured bandwidth is configured by parameters $C_{\mathrm{SRS}}$ and $B_{\mathrm{SRS}}$. |
| $M_{\mathrm{sc},b}^{\mathrm{SRS}}$ | Indicates length of an SRS sequence. The length is determined jointly by $m_{\mathrm{SRS},b}$ and $K_{\mathrm{TC}}$, $$M_{\mathrm{sc},b}^{\mathrm{SRS}} = m_{\mathrm{SRS},b} N_{\mathrm{sc}}^{\mathrm{RB}} / K_{\mathrm{TC}}$$ , and $m_{\mathrm{SRS},b}$ is a quantity of RBs occupied by the SRS sequence. |
| $P_{\mathrm{F}}$ | $P_{\mathrm{F}}$ indicates a partial frequency sounding parameter. RB-level partial frequency sounding indicates a partial frequency sounding bandwidth $\frac{1}{P_{\mathrm{F}}} m_{\mathrm{SRS},B_{\mathrm{SRS}}}$ , which identifies that a terminal performs SRS transmission on consecutive $\frac{1}{P_{\mathrm{F}}} m_{\mathrm{SRS},B_{\mathrm{SRS}}}$ RBs of a same OFDM symbol. |
| $kF$ | Indicates a partial frequency sounding subband index. $k_{\mathrm{F}} \in \{0,1, ..., P_{\mathrm{F}}- 1\}$. |
| $k_0^{(\mathrm{p_i})}$ | Indicates an SRS start frequency domain position (RE/subcarrier level). |
| $n_{\mathrm{shift}}$ | Indicates a frequency domain offset. The frequency domain offset is configured by higher-layer signaling *freqDomainShift* (RB level). |
| $N_{\mathrm{slot}}^{\mathrm{frame},\mu}$ | Indicates a configuration of a subcarrier spacing $\mu$, and a quantity of slots included in each frame. |
| $n_{\mathrm{f}}$ | Indicates a frame number. |
| $n_{\mathrm{s,f}}^{\mu}$ | Indicates a configuration of a subcarrier spacing $\mu$, and an $n_{\mathrm{s,f}}^{\mu}{}^{\mathrm{th}}$ slot in a frame. frame $$n_{\mathrm{s,f}}^{\mu} \in \left\{0, ..., N_{\mathrm{slot}}^{\mathrm{frame},\mu} - 1\right\}$$ |
| $T_{\mathrm{offset}}$ | Indicates a slot offset. The slot offset is configured by higher-layer parameters *periodicityAndOffset-p* or *periodicityAndOffset-sp*. |
| $T_{\mathrm{SRS}}$ | Indicates an SRS transmission periodicity. The periodicity is configured by higher-layer parameters *periodicityAndOffset-p* or *periodicityAndOffset-sp*. |
| $N_{\mathrm{symb}}^{\mathrm{SRS}}$ | Indicates a quantity of consecutive OFDM symbols occupied by an SRS resource. The quantity of consecutive OFDM symbols is configured by a higher-layer parameter *nrofSymbols*. |

(continued)

| Name | Protocol expression |
|---|---|
| $R$ | Indicates a repetition factor, namely, a quantity of OFDM symbols for repeated SRS transmission in one SRS resource. When a higher-layer parameter *repetitionFactor* is configured, $R \leq N_{\text{symb}}^{\text{SRS}}$, or when a higher-layer parameter *repetitionFactor* is not configured, $R = N_{\text{symb}}^{\text{SRS}}$, that is, repeated sending is performed on all the OFDM symbols included in the SRS resource. |
| $l'$ | Indicates an index of an OFDM symbol corresponding to an SRS resource. $l' = 0, 1, 2, \ldots, N_{\text{symb}}^{\text{SRS}} - 1$ |
| $b_{\text{hop}}$ | Indicates an SRS frequency hopping-related parameter. The parameter is configured by a higher-layer parameter *b-hop*. |
| $B_{\text{SRS}}$ | Indicates an SRS bandwidth-related configuration parameter. The parameter is configured by a higher-layer parameter *b-SRS*. |
| $C_{\text{SRS}}$ | Indicates an SRS bandwidth-related configuration parameter. The parameter is configured by a higher-layer parameter *c-SRS*. |
| $n_{\text{RRC}}$ | Indicates an SRS frequency domain position index. The SRS frequency domain position index is configured by a higher-layer parameter *freqDomainPosition*. If the parameter is not configured, $n_{\text{RRC}} = 0$. |
| $b$ | Indicates a frequency domain bandwidth level index corresponding to a reference signal in a plurality of frequency domain bandwidth levels. $b \in \{0, 1, 2, \ldots, B_{\text{SRS}}\}$. |
| $N_b$ | Indicates an SRS bandwidth-related parameter. |

2. Reference signal (reference signal, RS)

A reference signal may also be referred to as a pilot (pilot) signal, a reference sequence, or the like. In this application, the reference signal may be a reference signal for channel measurement. For example, the reference signal may be an SRS for uplink channel measurement. For example, the reference signal may be a pilot for uplink channel measurement. Alternatively, the reference signal may be an SRS for positioning measurement. It should be understood that the foregoing listed reference signals are merely examples, and should not constitute any limitation on this application. This application does not exclude a possibility that another reference signal is defined in a future protocol to implement a same or similar function, and does not exclude a possibility that another reference signal is defined in a future protocol to implement different functions.

For ease of description, the following uses an example in which the reference signal is the SRS for description. In a 5G NR communication system, the SRS is used to estimate channel quality of different frequency bands.

3. Frequency hopping periodicity

A legacy SRS frequency hopping periodicity is a time domain range corresponding to all SRS frequency hopping bandwidths that are sounded based on a configured bandwidth of an SRS $m_{\text{SRS}, B_{\text{SRS}}}$. Optionally, the frequency hopping periodicity satisfies at least one of the following features: In different frequency hopping periodicities, there are repeated frequency bands at frequency domain positions occupied by reference signals; and in different frequency hopping periodicities, the frequency domain positions occupied by the reference signals are the same. A representation form of the frequency hopping periodicity includes a quantity of hops included in the frequency hopping periodicity, a quantity of OFDM symbols included in the frequency hopping periodicity, duration of the frequency hopping periodicity, or the like. In the following descriptions, that the frequency hopping periodicity is represented by "the quantity of hops included in the frequency hopping periodicity" is used as an example for description.

If the legacy SRS frequency hopping periodicity is measured by an SRS hop count or included $n_{\text{SRS}}$, the legacy SRS frequency hopping periodicity $T_{\text{RB\_hop}}$ is equal to:

$$T_{\text{RB\_hop}} = \prod_{b'=b_{\text{hop}}}^{B_{\text{SRS}}} N_{b'} \tag{1-5}$$

$b_{\text{hop}}$ and $B_{\text{SRS}}$ are configured by a higher-layer parameter *freqHopping*. For $N_{b'}$, refer to Table 6.4.1.4.3-1 in the protocol 38.211. If $b' = b_{\text{hop}}$, $N_{b_{\text{hop}}}$ is always equal to 1. Alternatively,

$$T_{\text{RB\_hop}} = \prod_{b'=b_{\text{hop}}+1}^{B_{\text{SRS}}} N_{b'} \tag{1-6}$$

If $b_{\text{hop}} < B_{\text{SRS}}$, alternatively,

$$T_{\text{RB\_hop}} = \frac{m_{\text{SRS},b_{\text{hop}}}}{m_{\text{SRS},B_{\text{SRS}}}} \tag{1-7}$$

$m_{\text{SRS},b_{\text{hop}}}$ is jointly determined by an SRS bandwidth configuration parameter $C_{\text{SRS}}$ and an SRS frequency hopping bandwidth parameter $b_{\text{hop}}$, $m_{\text{SRS},B_{\text{SRS}}}$ is jointly determined by the SRS bandwidth configuration parameter $C_{\text{SRS}}$ and $B_{\text{SRS}}$, and a total bandwidth covered the SRS after frequency hopping is equal to $m_{\text{SRS},b_{\text{hop}}}$ RBs. Alternatively, the legacy SRS frequency hopping periodicity is measured by a quantity of OFDM symbols occupied for SRS transmission, and the corresponding legacy SRS frequency hopping periodicity $S_{\text{RB\_hop}}$ is equal to:

$$S_{\text{RB\_hop}} = T_{\text{RB\_hop}} R \tag{1-8}$$

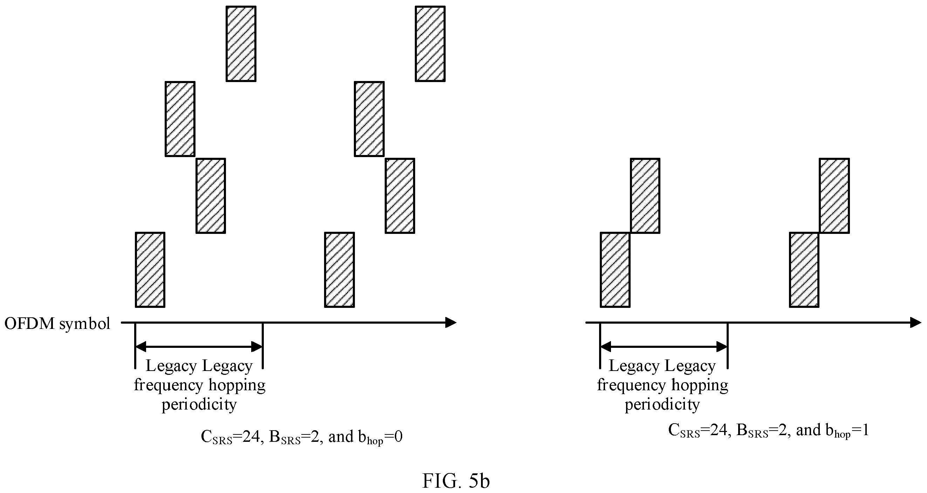

$R$ is a quantity of repetitions. In FIG. 5b, a schematic description of the legacy SRS frequency hopping periodicity is provided, where the quantity of repetitions $R=1$. In this scenario,

$$S_{\text{RB\_hop}} = T_{\text{RB\_hop}}.$$

2. Transmission slots of a periodic SRS and a semi-persistent SRS

A slot for periodic SRS or semi-persistent SRS transmission needs to satisfy:

$$\left( N_{\text{slot}}^{\text{frame},\mu} n_{\text{f}} + n_{\text{s,f}}^{\mu} - T_{\text{offset}} \right) \bmod T_{\text{SRS}} = 0 \tag{1-9}$$

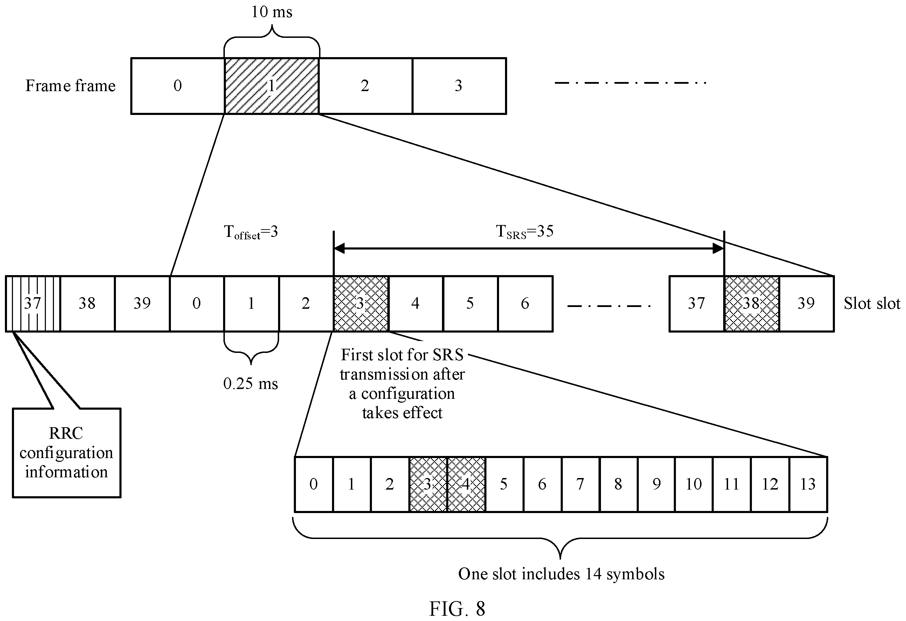

For corresponding parameters, refer to Table 1-1. In FIG. 8, a position of a symbol for periodic SRS transmission or semi-persistent SRS transmission is described by using an example in which length of one radio frame is 10 ms, one radio frame includes 40 slots slots, length of each slot is 0.25 ms, an offset $T_{\text{offset}}$ is equal to 3, and a periodicity $T_{\text{SRS}}$ is equal to 35 slots.

A terminal receives RRC configuration information in a slot 37 in a radio frame 0, where the RRC configuration information is used to configure the terminal to perform SRS transmission, and effective time of the RRC configuration information is at a radio frame 1. Because the offset is equal to 3, a slot 3 in the radio frame 1 is used as a first slot for SRS transmission after a configuration takes effect. Each slot includes 14 symbols, and the terminal may specifically perform SRS transmission on a symbol 3 and a symbol 4 in the slot 3. The SRS periodicity is equal to 35 slots, and a slot 38 in the radio frame 1 may be used as a second slot for SRS transmission after the configuration takes effect.

3. SRS counter $n_{\text{SRS}}$

For a periodic or semi-persistent SRS, an SRS counter satisfies:

$$n_{\text{SRS}} = \left( \frac{N_{\text{slot}}^{\text{frame},\mu} n_{\text{f}} + n_{\text{s,f}}^{\mu} - T_{\text{offset}}}{T_{\text{SRS}}} \right) \cdot \left( \frac{N_{\text{symb}}^{\text{SRS}}}{R} \right) + \left\lfloor \frac{l'}{R} \right\rfloor \tag{1-10}$$

$$\left(N_{\text{slot}}^{\text{frame},\mu} n_{\text{f}} + n_{\text{s,f}}^{\mu} - T_{\text{offset}}\right) \bmod T_{\text{SRS}} = 0$$

A corresponding time domain position satisfies: .

For an aperiodic SRS, transmission of SRSs in a same resource set is performed in a same slot, and the SRS counter to be calculated is a frequency hopping index corresponding to SRS transmission in an SRS resource, that is,

$$n_{\text{SRS}} = \lfloor l'/R \rfloor \quad l' \in \{0, 1, \dots, N_{\text{symb}}^{\text{SRS}} - 1\}$$ is an index of an OFDM symbol, $N_{\text{symb}}^{\text{SRS}}$ is a quantity of symbols occupied by the SRS resource configuration, $R$ is a repetition factor and is configured by a higher-layer parameter, and $n_{\text{SRS}}$ represents the SRS counter.

4. Time unit

A unit of a time unit may be a radio frame, a subframe, a slot, a subslot, a symbol, or the like. One radio frame may include one or more subframes, and one subframe may include one or more slots. There may be different slot length for different subcarrier spacings. For example, when a subcarrier spacing is 15 kHz, one slot may be 1 millisecond; or when a subcarrier spacing is 30 kHz, one slot may be 0.5 millisecond or the like. One slot may include one or more symbols. For example, a slot with a normal cyclic prefix (cyclic prefix, CP) may include 14 time domain symbols, and a slot with an extended CP may include 12 time domain symbols. The time domain symbol may be referred to as a symbol for short. A subslot is also referred to as a minislot, a minislot, or the like, and may be a unit smaller than a slot. One subslot may include one or more symbols. For example, one subslot may include two symbols, four symbols, seven symbols, or the like. One slot may include one or more subslots.

It should be noted that, an absolute time unit may be a corresponding absolute time domain position in the terminal. When frame timing and a slot structure are the same, the absolute time is consistent or the same for all terminals. The absolute time unit may be measured by using a specific OFDM symbol in a specific slot in a specific frame. For example, as shown in FIG. 8, an absolute time unit may be the third OFDM symbol in the slot 3 in the radio frame 1.

**Embodiment 1**

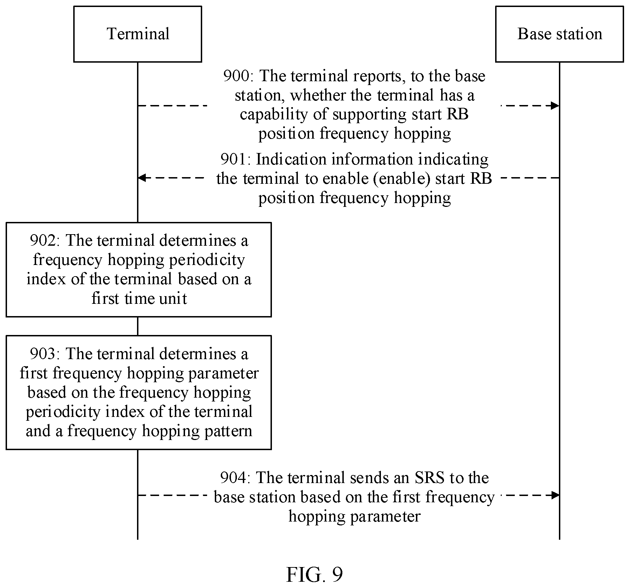

As shown in FIG. 9, this application provides a procedure of a communication method. The procedure includes at least the following steps.

Optionally, step 900: A terminal reports, to a base station, whether the terminal has a capability of supporting start RB position frequency hopping.

Optionally, step 901: The base station sends indication information to the terminal, where the indication information may indicate the terminal to enable (enable) start RB position frequency hopping, disable (disable) start RB position frequency hopping, or the like.

In this application, the terminal reports, to the base station, whether the terminal has a capability of supporting the start RB position frequency hopping, and the base station determines, based on the capability reported by the terminal, whether to enable start RB position frequency hopping of the terminal. For example, if the terminal reports that the terminal does not support start RB position frequency hopping, the base station may indicate the terminal to disable start RB position frequency hopping. If the terminal reports that the terminal supports start RB position frequency hopping, the base station may comprehensively consider whether to allow the terminal to perform SRS transmission through start RB position frequency hopping. If it is allowed, the base station indicates the terminal to enable start RB position frequency hopping; otherwise, the base station indicates the terminal to disable start RB position frequency hopping.

The base station may explicitly indicate or be configured, by using RRC signaling, to enable or disable start RB position frequency hopping, or may implicitly indicate or be configured to enable or disable start RB position frequency hopping, or the like. For example, the base station may implicitly indicate, by using a frequency hopping pattern of $k_{\text{hopping}}$, to enable or disable a start RB position. For example, if the frequency hopping pattern of $k_{\text{hopping}}$ is configured by using RRC signaling, and there is no field indicating the frequency hopping pattern, it indicates that start RB position frequency hopping is disabled; or if there is a field indicating the frequency hopping pattern, it indicates that start RB position frequency hopping is enabled. Alternatively, if the field indicating the frequency hopping pattern is always equal to 0, or is equal to a parameter less than 0, it indicates that the start RB position is disabled; otherwise, it indicates that the start RB position is enabled. The explicit indication manner to enable or disable start RB position frequency hopping is flexible, but signaling overheads are increased. The implicit indication manner can effectively reduce signaling overheads.

For example, if the indication information in step 901 indicates to enable start RB position frequency hopping, the procedure shown in FIG. 9 may further include the following steps.

Step 902: The terminal determines a frequency hopping periodicity index of the terminal based on a first time unit, where the first time unit is associated with a time unit corresponding to an SRS.

In this application, the first time unit is a candidate time unit in which the terminal sends the SRS, and a time unit in which the terminal specifically sends the SRS is a subset of the candidate time unit. For descriptions of the time unit, refer to the descriptions in the fourth part of the communication nouns. For example, for periodic and semi-persistent SRSs, the candidate time unit may correspond to a slot set that satisfies a condition

$$\left(N_{\text{slot}}^{\text{frame},\mu} n_{\text{f}} + n_{\text{s,f}}^{\mu} - T_{\text{offset}}\right) \bmod T_{\text{SRS}} = 0$$

, or may correspond to a set of candidate OFDM symbols that correspond to the SRS and that are determined based on a signaling configuration and that are in a slot that satisfies a condition

$$\left(N_{\text{slot}}^{\text{frame},\mu} n_{\text{f}} + n_{\text{s,f}}^{\mu} - T_{\text{offset}}\right) \bmod T_{\text{SRS}} = 0$$

. Whether the terminal sends the SRS in the candidate time unit may further depend on a factor such as signaling effective time. Before the signaling effective time, the terminal does not perform SRS transmission in the corresponding candidate time unit. After the signaling effective time, the terminal may perform SRS transmission in the corresponding candidate time unit.

The terminal determines, based on a current time unit, for example, positions of a frame, a slot, and an OFDM symbol, the current time unit and a candidate time unit corresponding to the current time unit. For the periodic and semi-persistent SRSs, the candidate time unit is associated with an SRS counter. In a frequency hopping scenario, the SRS counter is related to a quantity of frequency hops. In the frequency hopping scenario, a frequency domain range corresponding to a configured bandwidth of the SRS for the terminal changes with the SRS counter. The frequency hopping periodicity index may be associated with the SRS counter, so that the frequency hopping periodicity index is associated with absolute time in a specific SRS configuration.

It should be noted that the frequency hopping periodicity index in step 900 is different from a frequency hopping periodicity index for the terminal to actually perform SRS transmission. In this application, in the specific SRS configuration, the frequency hopping periodicity index of the terminal is essentially associated with the absolute time of the terminal. If candidate time units of SRSs configured for different terminals are the same, the different terminals correspond to a same frequency hopping periodicity index in the current time unit. If frequency hopping patterns of $k_{\text{hopping}}$ corresponding to different terminals are the same, corresponding $k_{\text{hopping}}$ is the same in the same time unit. This can effectively resolve the interference in SRS transmission, effectively improve channel estimation precision, and reduce scheduling overheads of the base station.

For example, Formula (1-9) is a condition that needs to be satisfied by a time domain position for SRS transmission in a periodic SRS or a semi-persistent SRS. Each time domain position that satisfies Formula (1-9) may be a candidate time unit for sending the SRS. The terminal determines the frequency hopping periodicity index of the terminal based on a time domain position corresponding to the current time unit and the candidate time unit, so as to determine $k_{\text{hopping}}$ based on the frequency hopping pattern of $k_{\text{hopping}}$.

For example, the terminal determines the frequency hopping periodicity index of the terminal based on the SRS counter and the frequency hopping periodicity, where the SRS counter is associated with the first time unit. For example, the first time unit is a candidate time unit for sending the SRS, and each candidate time unit may be a candidate frequency hopping position corresponding to the terminal.

In a design, that the terminal determines the frequency hopping periodicity index of the terminal based on the SRS counter and the frequency hopping periodicity satisfies:

$$n_{\text{RB\_hop}} = \left\lfloor \frac{n_{\text{SRS}}}{T_{\text{RB\_hop}}} \right\rfloor \tag{2-1}$$

$n_{\text{RB\_hop}}$ represents the frequency hopping periodicity index of the terminal, $n_{\text{SRS}}$ represents the SRS counter, and $T_{\text{RB\_hop}}$ represents a quantity of frequency hops included in the frequency hopping periodicity. For example, a count value of the SRS counter is 20, and it indicates that a quantity of candidate frequency hopping corresponding to the terminal at current absolute time is 20 hops. If one frequency hopping periodicity includes 4 hops, the frequency hopping periodicity index of the terminal is equal to 5 at the current absolute time.

In another design, that the terminal determines the frequency hopping periodicity index of the terminal based on the SRS counter and the frequency hopping periodicity satisfies:

$$n_{\text{RB\_hop}} = \left\lfloor \frac{n_{\text{SRS}}}{T_{\text{RB\_hop}}} \right\rfloor \bmod P_{\text{F}} \tag{2-2}$$

$n_{\text{RB\_hop}}$ represents the frequency hopping periodicity index of the terminal, $n_{\text{SRS}}$ represents the SRS counter,

$T_{RB\_hop}$ represents the quantity of frequency hopping included in the frequency hopping periodicity, and $P_F$ represents a partial frequency sounding coefficient.

In another design, the terminal determines the frequency hopping periodicity index of the terminal based on a time domain symbol corresponding to the SRS and the frequency hopping periodicity, where the time domain symbol corresponding to the SRS is associated with the first time unit. For example, the first time unit is the candidate time unit for sending the SRS, each candidate time unit may correspond to a candidate time domain symbol position of the terminal, and a time domain symbol may be an OFDM symbol.

In a design, for periodic and semi-persistent SRSs, that the terminal determines the frequency hopping periodicity index of the terminal based on the time domain symbol corresponding to the SRS and the frequency hopping periodicity satisfies:

$$n_{RB\_hop} = \left\lfloor \frac{\left( \frac{N_{slot}^{frame,u} n_f + n_{s,f}^u - T_{offset}}{T_{SRS}} \right) N_{symb}^{SRS} + \ell'}{S_{RB_{hop}}} \right\rfloor \qquad (2\text{-}3)$$

$n_{RB\_hop}$ represents the frequency hopping periodicity index of the terminal, $N_{slot}^{frame,\mu}$ represents a quantity of slots included in each frame under a condition that a subcarrier spacing is $\mu$, $n_f$ represents a frame number, $n_{s,f}^u$ represents an $n_{s,f}^{\mu}$ th slot in a frame under the condition that the subcarrier spacing is $\mu$, $n_{s,f}^{\mu} \in \left\{ 0, \ldots, N_{slot}^{frame,\mu} - 1 \right\}$, $T_{offset}$ represents a slot offset, $N_{symb}^{SRS}$ represents a quantity of consecutive time domain symbols occupied by an SRS resource, $\ell'$ represents an index of a time domain symbol in the SRS resource, $l' = 0, 1, 2, \ldots, N_{symb}^{SRS} - 1$, and $S_{RB\_hop}$ represents a quantity of time domain symbols occupied for SRS transmission in the frequency hopping periodicity.

In a design, for an aperiodic SRS, that the terminal determines the frequency hopping periodicity index of the terminal based on the time domain symbol corresponding to the SRS and the frequency hopping periodicity satisfies:

$$n_{RB\_hop} = \left\lfloor \frac{l'}{S_{RB\_hop}} \right\rfloor \qquad (2\text{-}4)$$

Meanings of $n_{RB\_hop}$, $l'$, and $S_{RB\_hop}$ are the same as those in Formula (2-3).

For example, in Formula (2-3) and Formula (2-4), $S_{RB\_hop}$ satisfies:

$$S_{RB\_hop} = R T_{RB\_hop} \qquad (2\text{-}5)$$

$R$ represents a repetition factor, and $T_{RB\_hop}$ represents a quantity of frequency hops included in the frequency hopping periodicity.

For example, the terminal determines the frequency hopping periodicity index of the terminal based on a candidate SRS counter and the frequency hopping periodicity, where the candidate SRS counter is associated with the first time unit. For example, the first time unit is a candidate time unit for sending the SRS, and each candidate time unit may be a candidate frequency hopping position corresponding to the terminal.

In a design, for the aperiodic SRS, that the terminal determines the frequency hopping periodicity index of the terminal based on the candidate SRS counter and the frequency hopping periodicity satisfies:

$$n_{RB\_hop} = \left\lfloor \frac{n_{ap\_SRS}}{T_{RB\_hop}} \right\rfloor \qquad (2\text{-}6)$$

The candidate SRS counter satisfies:

$$n_{\text{ap\_SRS}} = \left\lfloor \frac{l_{\text{ap\_SRS}}}{R} \right\rfloor \tag{2-7}$$

$l_{\text{ap\_SRS}}$ corresponds to a candidate OFDM symbol index and satisfies:

$$l_{\text{ap\_SRS}} \in \{0, 1, ..., N_{\text{symb}}^{\text{ap}} - 1\} \tag{2-8}$$

$N_{\text{symb}}^{\text{ap}}$ is equal to a quantity of candidate OFDM symbols corresponding to the SRS resource corresponding to the terminal, and $N_{\text{symb}}^{\text{ap}}$ OFDM symbols are consecutively distributed in time domain, and $N_{\text{symb}}^{\text{ap}}$ satisfies:

$$N_{\text{symb}}^{\text{ap}} = N_{\text{symb}}^{\text{ap}} + l_0 - (l_0 \mod T_{\text{RB\_hop}}) \tag{2-9}$$

$N_{\text{symb}}^{\text{ap}}$ is equal to a quantity of OFDM symbols corresponding to the SRS resource, and $l_0$ is equal to a start position of a time domain symbol corresponding to the SRS resource and satisfies:

$$l_0 = N_{\text{symb}}^{\text{slot}} - 1 - l_{\text{offset}} \tag{2-10}$$

$N_{\text{symb}}^{\text{slot}}$ is equal to a quantity of OFDM symbols corresponding to one slot, $l_{\text{offset}} \in \{0, 1, ..., 13\}$ is configured by a higher-layer parameter *start Position*, and the candidate OFDM symbol includes $N_{\text{symb}}^{\text{ap}}$ consecutive OFDM symbols that are in a specific slot and that use an OFDM symbol corresponding to ($l_0 \mod T_{\text{RB\_hop}}$) as a time domain start position.

In this application, the frequency hopping periodicity is a periodicity for sounding an SRS frequency hopping bandwidth. Optionally, the frequency hopping periodicity may satisfy at least one of the following features: In different frequency hopping periodicities, there are repeated frequency bands at frequency domain positions occupied by reference signals; and in different frequency hopping periodicities, the frequency domain positions occupied by the reference signals are the same.

In a design, the frequency hopping periodicity satisfies:

$$T_{\text{RB\_hop}} = \frac{m_{\text{SRS},b_{\text{hop}}}}{m_{\text{SRS},B_{\text{SRS}}}} \tag{2-11}$$

$T_{\text{RB\_hop}}$ represents the frequency hopping periodicity, $m_{\text{SRS},b_{\text{hop}}}$ represents the SRS frequency hopping bandwidth and may be jointly determined by an SRS bandwidth configuration parameter $C_{\text{SRS}}$ and an SRS frequency hopping bandwidth parameter $b_{\text{hop}}$, $m_{\text{SRS},B_{\text{SRS}}}$ represents the configured bandwidth of the SRS and is jointly determined by SRS bandwidth configuration parameters $C_{\text{SRS}}$ and $B_{\text{SRS}}$, and a total bandwidth covered by an SRS after frequency hopping is equal to $m_{\text{SRS},b_{\text{hop}}}$ RBs. For correspondences between $m_{\text{SRS},b_{\text{hop}}}$ and $m_{\text{SRS},B_{\text{SRS}}}$ and the foregoing parameters, refer to Table 6.4.1.4.3-1 in the protocol 38.211.

In a design, if the frequency hopping periodicity is measured by the quantity of SRS hops or a quantity of included $n_{\text{SRS}}$, the frequency hopping periodicity $T_{\text{RB\_hop}}$ satisfies:

$$T_{RB\_hop} = \prod_{b'=b_{hop}}^{B_{SRS}} N_{b'} \tag{2-12}$$

As described in Table 1-1, $N_{b'}$ is determined based on Table 6.4.1.4.3-1 in the protocol 38.211. Particularly, if $b' = b_{\text{hop}}$, $N_{b_{hop}}$ is reset to 1, that is, $N_{b_{hop}}=1$.

In a design, if $_{b\text{hop}} < B_{\text{SRS}}$, it indicates that frequency hopping is enabled, and the frequency hopping periodicity $T_{RB\_hop}$ satisfies:

$$T_{RB\_hop} = \prod_{b'=b_{hop}+1}^{B_{SRS}} N_{b'} \qquad (2\text{-}13)$$

After determining the frequency hopping periodicity index, the terminal is configured to determine the first frequency hopping parameter. The procedure of the method shown in FIG. 9 further includes the following steps.

Step 903: The terminal determines a first frequency hopping parameter based on the frequency hopping periodicity index of the terminal and the frequency hopping pattern, where the first frequency hopping parameter indicates a subband-level offset of the SRS within a configuration bandwidth range of the SRS. For example, the first frequency hopping parameter is equal to $k_{\text{hopping}}$, and for example, the first frequency hopping parameter may correspond to a subband offset index.

The frequency hopping pattern in this application has a different meaning from a frequency hopping pattern in legacy (legacy) SRS frequency hopping. For example, in legacy SRS frequency hopping, the frequency hopping pattern is a pattern of a subband corresponding to a frequency domain position at which an SRS is sent in a frequency hopping bandwidth in each frequency hopping periodicity. For example, as shown in FIG. 2, in legacy SRS frequency hopping, a corresponding subband index is determined based on a frequency domain position index $n_b$. The subband index belongs to {0, 2, 1, 3}, and corresponding {0, 2, 1, 3} may be considered as a frequency hopping pattern corresponding to legacy SRS frequency hopping in the configuration shown in FIG. 2. In each frequency hopping periodicity, the terminal performs SRS transmission on a subband 0 in a $0^{\text{th}}$ hop. Similarly, the terminal performs SRS transmission on a subband 2, a subband 1, or a subband 3 in a first, second, or third hop. A correspondence between a hop and a time domain symbol is related to a repetition factor R. For example, a time domain range of the hop corresponds to $R$ time domain symbols.

The frequency hopping pattern in this application corresponds to a pattern corresponding to an offset of an index of a subband for start RB position frequency hopping in the configured bandwidth of the SRS, that is, the frequency hopping pattern of $k_{\text{hopping}}$. The frequency hopping pattern of $k_{\text{hopping}}$ reflects a correspondence between $k_{\text{hopping}}$ and different time units. The frequency hopping pattern {0, 2, 1, 3} is used as an example. If start RB position frequency hopping is performed in a unit of a frequency hopping periodicity, $k_{\text{hopping}}$ changes with the pattern of {0, 2, 1, 3} based on different frequency hopping periodicities indexes. For example, $k_{\text{hopping}}$ is equal to 0 in a $0^{\text{th}}$ frequency hopping periodicity; and $k_{\text{hopping}}$ are respectively equal to 2, 1, and 3 in a first frequency hopping periodicity, a second frequency hopping periodicity, and a third frequency hopping periodicity.

1. Frequency hopping pattern

In this application, the frequency hopping pattern may be related to $P_F$, and $P_F$ may be configured by using RRC signaling, or may be configured for the terminal by using a MAC CE or DCI, or may be determined in a predefined manner. The frequency hopping pattern may be designed in the following manner: For example, to ensure that a spacing between a subband frequency domain range corresponding to the SRS in a current time unit and a subband frequency domain range corresponding to a previous time unit is as large as possible, thereby improving a channel diversity gain, the frequency hopping pattern may be associated with a subband frequency hopping pattern corresponding to SRS frequency hopping (for example, legacy SRS frequency hopping). For example, $P_F=4$. The frequency hopping pattern may be equal to {0, 2, 1, 3}, or equal to {0, 2, 1, 3, 0, 2, 1, 3}. For example, $P_F=2$. The frequency hopping pattern may be equal to {0, 1}, or equal to {0, 1, 0, 1}. For example, $P_F=8$. The frequency hopping pattern may be equal to {0, 4, 2, 6, 1, 5, 3, 7}. For example, $P_F=3$. The frequency hopping pattern may be equal to {0, 2, 1}, or equal to {0, 1, 2}.

For example, to ensure that a spacing between a subband frequency domain range corresponding to the SRS in a current time unit and a subband frequency domain range corresponding to a previous time unit is as large as possible, thereby improving a channel diversity gain, the frequency hopping pattern may also be designed as follows: For example, $P_F=4$. The frequency hopping pattern may be equal to {0, 2, 3, 1}, or equal to {0, 2, 3, 1, 0, 2, 3, 1}. For example, $P_F=8$. The frequency hopping pattern may be equal to {0, 4, 1, 5, 2, 6, 3, 7}, or equal to {0, 4, 3, 7, 1, 5, 2, 6}.

For example, to simplify a subband index calculation process, the subband frequency domain range corresponding to the SRS in the current time unit may be obtained by postponing a subband based on the subband frequency domain range corresponding to the previous time unit, that is, the frequency hopping pattern is equal to {0, 1, ..., $P_F$-1}. For example, $P_F=4$. The frequency hopping pattern may be equal to {0, 1, 2, 3}. For example, $P_F=2$. The frequency hopping pattern may be equal to {0, 1}. For example, $P_F=8$. The frequency hopping pattern may be equal to {0, 1, 2, 3, 4, 5, 6, 7}. For example, $P_F$=3. The frequency hopping pattern may be equal to {0, 1, 2}.

It should be noted that the time unit may be equal to a time domain range corresponding to one frequency hopping periodicity, or may be equal to a time domain range corresponding to one OFDM time domain symbol, or may be equal to a time domain range corresponding to one hop, or may be equal to a time domain range corresponding to specific $n_{SRS}$. It should be indicated that the frequency hopping pattern is merely an example for description, and is not intended to limit this application. The solutions of this application are also applicable to another frequency hopping pattern, and the like in addition to the foregoing frequency hopping pattern.

2. Periodicity of a frequency hopping pattern

In this application, the periodicity of the frequency hopping pattern may be equal to a quantity of elements included in the frequency hopping pattern, or may be equal to a quantity of different elements included in the frequency hopping pattern. The frequency hopping pattern {0, 2, 1, 3, 0, 2, 1, 3} is used as an example. The periodicity of the frequency hopping pattern may be equal to 8 elements included in the frequency hopping pattern, or the periodicity of the frequency hopping pattern may be equal to 4 different elements included in the frequency hopping pattern. For example, the periodicity of the frequency hopping pattern may be associated with $P_F$. For example, the periodicity of the frequency hopping pattern may be equal to an integer multiple of $P_F$ to be used currently by the terminal. When the integer multiple is equal to 1, the periodicity of the frequency hopping pattern is equal to $P_F$ to be used currently by the terminal. For example, if candidate $P_F \in$ {2, 3, 4}, and $P_F$ to be used currently by the terminal is 3, the periodicity of the frequency hopping pattern is equal to an integer multiple of 3, for example, 3 or 12; or the periodicity of the frequency hopping pattern may be equal to a largest value in all candidate $P_F$. For example, if candidate $P_F \in$ {2, 4}, the periodicity of the frequency hopping pattern may be equal to a largest value 4 of candidate $P_F$; or the periodicity of the frequency hopping pattern may be equal to the least common multiple of all candidate $P_F$. For example, if candidate $P_F \in$ {2, 4, 8}, the periodicity of the frequency hopping pattern is equal to 8; or if candidate $P_F \in$ {2, 3, 4}, the periodicity of the frequency hopping pattern is equal to 12; or if candidate $P_F \in$ {2, 4}, the periodicity of the frequency hopping pattern is equal to 4; or the periodicity of the frequency hopping pattern may be equal to a common multiple of all candidate $P_F$.

3. Determining of the frequency hopping pattern

In this application, the frequency hopping pattern may be predefined, be preconfigured, or be indicated by using signaling. Enabling/disabling of start RB position frequency hopping is configured by using RRC signaling. The following solutions describe specific solutions of this application from two aspects: The frequency hopping pattern is preconfigured or predefined and the frequency hopping pattern is indicated by using the signaling.

3.1. The frequency hopping pattern is preconfigured or predefined.

When the frequency hopping pattern is preconfigured or predefined, enabling/disabling of start RB position frequency hopping is explicitly configured by using the RRC signaling

If the frequency hopping pattern is preconfigured, the frequency hopping pattern may be directly defined based on different $P_F$. For example, the predefined frequency hopping pattern is equal to {0, 1, ..., $P_F$-1}. For example, $P_F$=4, and a corresponding frequency hopping pattern is equal to {0, 2, 1, 3}; or $P_F$=2, and a corresponding frequency hopping pattern is equal to {0, 1}. For $k_{hopping}$ corresponding to an $(n_{RB\_hop})^{th}$ frequency hopping periodicity, refer to Table 2-1 or Table 2-2. Table 2-1 and Table 2-2 correspond to different frequency hopping patterns. For example, as shown in Table 2-1 or Table 2-2, when $P_F$=2, when an operation result of modulo mod of frequency hopping periodicity index of the terminal $n_{RB\_hop}$ and 4 is respectively equal to 0, 1, 2, and 3, $n_{RB\_hop}$ is respectively equal to 0, 1, 0, and 1.

**Table 2-1 Start RB position frequency hopping parameter $k_{hopping}$, and $P_F \in$ {2, 4}**

| $p_F$ | $n_{RB\_hop}$ mod 4 = 0 | $n_{RB\_hop}$ mod 4 = 1 | $n_{RB\_hop}$ mod 4 = 2 | $n_{RB\_hop}$ mod 4 = 3 |
|---|---|---|---|---|
| 2 | 0 | 1 | 0 | 1 |
| 4 | 0 | 2 | 1 | 3 |

**Table 2-2 Start RB position frequency hopping parameter $k_{\text{hopping}}$, and $P_F \in \{2,4\}$**

| $p_F$ | $n_{\text{RB\_hop}} \bmod 4 = 0$ | $n_{\text{RB\_hop}} \bmod 4 = 1$ | $n_{\text{RB\_hop}} \bmod 4 = 2$ | $n_{\text{RB\_hop}} \bmod 4 = 3$ |
|---|---|---|---|---|
| 2 | 0 | 1 | 0 | 1 |
| 4 | 0 | 1 | 2 | 3 |

In another design, it is considered that $p_F$ in different value ranges corresponds to $k_{\text{hopping}}$ in the $(n_{\text{RB\_hop}})^{\text{th}}$ frequency hopping periodicity. For corresponding values, refer to Table 2-3 or Table 2-4. For example, in Table 2-3, $p_F \in \{2, 4, 8\}$, candidate $p_F$ includes 2, 4, or 8. When $p_F$ used by the terminal is 2, in the $(n_{\text{RB\_hop}})^{\text{th}}$ frequency hopping periodicity, if an operation result of modulo (mod) of $n_{\text{RB\_hop}}$ and 8 is respectively equal to 0 to 7, corresponding $k_{\text{hopping}}$ is respectively 0, 1, 0, 1, 0, 1, 0, and 1.

**Table 2-3 Start RB position frequency hopping parameter $k_{\text{hopping}}$, and $P_F \in \{2, 4, 8\}$**

| $p_F$ | $n_{\text{RB}_{\text{hop}}}$ mod 8 = 0 | $n_{\text{RB}_{\text{hop}}}$ mod 8 = 1 | $n_{\text{RB}_{\text{hop}}}$ mod 8 = 2 | $n_{\text{RB}_{\text{hop}}}$ mod 8 = 3 | $n_{\text{RB}_{\text{hop}}}$ mod 8 = 4 | $n_{\text{RB}_{\text{hop}}}$ mod 8 = 5 | $n_{\text{RB}_{\text{hop}}}$ mod 8 = 6 | $n_{\text{RB}_{\text{hop}}}$ mod 8 = 7 |
|---|---|---|---|---|---|---|---|---|
| 2 | 0 | 1 | 0 | 1 | 0 | 1 | 0 | 1 |
| 4 | 0 | 2 | 1 | 3 | 0 | 2 | 1 | 3 |
| 8 | 0 | 4 | 2 | 6 | 1 | 5 | 3 | 7 |

**Table 2-4 Start RB position frequency hopping parameter $k_{hopping}$, and $P_F \in \{2,3,4\}$**

| $p_F$ | $n_{RB\_hop}$ mod 12 = 0 | $n_{RB\_hop}$ mod 12 = 1 | $n_{RB\_hop}$ mod 12 =2 | $n_{RB\_hop}$ mod 12 = 3 | $n_{RB\_hop}$ mod 12 = 4 | $n_{RB\_hop}$ mod 12 = 5 | $n_{RB\_hop}$ mod 12 = 6 | $n_{RB\_hop}$ mod 12 = 7 | $n_{RB\_hop}$ mod 12 = 8 | $n_{RB\_hop}$ mod 12 = 9 | $n_{RB\_hop}$ mod 12 = 10 | $n_{RB\_hop}$ mod 12 = 11 |
|---|---|---|---|---|---|---|---|---|---|---|---|---|
| 2 | 0 | 1 | 0 | 1 | 0 | 1 | 0 | 1 | 0 | 1 | 0 | 1 |
| 3 | 0 | 2 | 1 | 0 | 2 | 1 | 0 | 2 | 1 | 0 | 2 | 1 |
| 4 | 0 | 2 | 1 | 3 | 0 | 2 | 1 | 3 | 0 | 2 | 1 | 3 |

$n_{RB\_hop}$ corresponds to the frequency hopping periodicity index. For a specific definition, refer to Formula (2-1) to Formula (2-10).

In another aspect, the frequency hopping pattern may alternatively be implemented in a predefined manner. For example, start RB position frequency hopping may be determined based on the legacy frequency hopping pattern. Specific operation steps are as follows.

The terminal receives parameters related to the configured bandwidth of the SRS, for example, $n_{RRC}$, $B_{SRS}$, $C_{SRS}$, and $b_{hop}$, and determines a partial frequency sounding coefficient $P_F$. $P_F$ may be configured by using RRC signaling, or may be configured by using DCI or MAC CE signaling. A start RB position frequency hopping parameter $b_{hop}^{PF}$ is defined and satisfies:

$$m_{SRS,b_{hop}^{PF}} = P_F m_{SRS,B_{SRS}} \qquad (2\text{-}14)$$

$m_{SRS,B_{SRS}}$ is determined by the parameter $C_{SRS}$ and the parameter $B_{SRS}$. The parameter $b_{hop}^{PF}$ is related to the parameter $m_{SRS,b_{hop}^{PF}}$, and $m_{SRS,b}$ corresponding to different parameters $b$ is determined based on Table 6.4.1.4.3-1 in the protocol 38.211. Further, it may be determined that a frequency domain-related parameter $n_b^{PF}$ in a partial frequency sounding scenario is as follows.

If $b_{hop}^{PF} < B_{SRS}$, the parameter $n_b^{PF}$ satisfies:

$$n_b^{PF} = \begin{cases} \lfloor 4n_{RRC}/m_{SRS,b} \rfloor \bmod N_b & b \le b_{hop}^{PF} \\ (F_b(n_{SRS}) + \lfloor 4n_{RRC}/m_{SRS,b} \rfloor) \bmod N_b & \text{otherwise} \end{cases} \qquad (2\text{-}15)$$

The parameter $N_b$ is obtained from table 6.4.1.4.3-1 in the protocol 38.211, and

$$F_b(n_{SRS}) = \begin{cases} \left(\dfrac{N_b}{2}\right) \left\lfloor \dfrac{n_{SRS} \bmod \prod_{b'=b_{hop}^{PF}}^{b} N_{b'}}{\prod_{b'=b_{hop}^{PF}}^{b-1} N_{b'}} \right\rfloor + \left\lfloor \dfrac{n_{SRS} \bmod \prod_{b'=b_{hop}^{PF}}^{b} N_{b'}}{2\prod_{b'=b_{hop}^{PF}}^{b-1} N_{b'}} \right\rfloor & N_b \text{ being an even number} \\ \lfloor N_b/2 \rfloor \left\lfloor n_{SRS} / \prod_{b'=b_{hop}^{PF}}^{b-1} N_{b'} \right\rfloor & N_b \text{ being an odd number} \end{cases} \qquad (2\text{-}16)$$

For $N_{b'}$, refer to Table 6.4.1.4.3-1 in the protocol 38.211. If $b' = b_{hop}$, $N_{b_{hop}}$ is always 1.

A frequency hopping pattern of the first frequency hopping parameter $k_{hopping}$ is related to a pattern of the parameter $n_b^{PF}$. For example, if $C_{SRS} = 24$, $B_{SRS} = 2$, $P_F = 4$, and $n_{RRC} = 0$, the parameter $b_{hop}^{PF} = 0$ is determined based on Formula (2-14). Patterns corresponding to the parameters $n_0^{PF}$, $n_1^{PF}$, and $n_2^{PF}$ are equal to {000, 010, 001, 011}, and $n_b^{PF}$ is associated with the frequency domain subband index, so as to determine the legacy (legacy) frequency hopping pattern. In a possible association manner, a corresponding legacy frequency hopping pattern is equal to {0, 2, 1, 3}, so as to determine that the frequency hopping pattern of $k_{hopping}$ is equal to {0, 2, 1, 3}.

For example, if $C_{SRS} = 24$, $B_{SRS} = 2$, $P_F = 2$, and $n_{RRC} = 13$, the parameter $b_{hop}^{PF} = 1$ is determined based on Formula (2-14). Patterns of the parameters $n_0^{PF}$, $n_1^{PF}$, and $n_2^{PF}$ are equal to {010, 011}, and a corresponding legacy frequency hopping pattern is equal to {2, 3}. When $P_F = 2$, a corresponding frequency hopping pattern of $k_{hopping}$ is equal to {0, 1}.

For example, to reduce calculation complexity, the base station may configure $P_F$ to satisfy $m_{SRS,b_{hop}^{PF}} = m_{SRS,b_{hop}}$. That is, $P_F$ is configured to satisfy: $b_{hop}^{PF} = b_{hop}$. For example, to ensure that the frequency hopping pattern starts with 0, that is, a first element of the frequency hopping pattern is equal to 0, when the frequency hopping pattern of $k_{hopping}$ is determined, $n_{RRC}$ may not be determined based on the configuration information, and $n_{RRC}$ is re-assigned with 0. For example, for the frequency hopping pattern of the parameter $k_{hopping}$, $n_{RRC} = 0$.

For example, the frequency hopping pattern corresponding to the parameter $k_{hopping}$ may be obtained by converting a value (for example, a binary value) including the parameters $n_0^{PF}$, $n_1^{PF}$, and $n_2^{PF}$ into a decimal number, and performing a remainder (mod) operation on the decimal number and $P_F$. For example, patterns {000, 010, 001, 011} of the foregoing parameters $n_0^{PF}$, $n_1^{PF}$, and $n_2^{PF}$ are converted into a decimal number, a remainder operation is performed on the decimal number and $P_F$, to obtain a result equal to {0, 2, 1, 3}. For example, patterns {010, 011} of the foregoing parameters $n_0^{PF}$, $n_1^{PF}$, and $n_2^{PF}$ are converted into a decimal number, a remainder operation is performed on the decimal number and $P_F$, to obtain a result equal to {0, 1}.

The frequency hopping pattern of $k_{hopping}$ is determined in a preconfigured or predefined manner. This can effectively reduce scheduling overheads of the base station, reduce interference in SRS transmission, and effectively improve SRS measurement precision while ensuring that channel estimation results of frequency domain ranges corresponding to different subbands are balanced.

3.2. The frequency hopping pattern is indicated by using signaling.

In this application, the terminal may determine the frequency hopping pattern of $k_{hopping}$ based on the signaling indicated by the base station. For example, the frequency hopping pattern of $k_{hopping}$ may be determined in the following manners.

1. The frequency hopping pattern of $k_{hopping}$ is directly indicated by using signaling (for example, RRC signaling), for example, the frequency hopping pattern is indicated in the following manner:

$$k\_HoppingList \quad SEQUENCE \ (SIZE \ (1...maxNrofk\_Hopping)) \ of \ k\_Hoppingvalue$$

$$OPTIONAL$$

$$k\_Hoppingvalue ::= \quad INTEGER(0.. \ maxNrofk\_Hopping-1) \qquad (2\text{-}17)$$

The parameter *maxNrofk_Hoppingg* indicates a periodicity of the frequency hopping pattern of $k_{hopping}$, and *k_Hoppingvalue* indicates an element included in the frequency hopping pattern of $k_{hopping}$.

For example, the base station may indicate a start value and an offset value of the frequency hopping pattern of $k_{hopping}$ by using signaling. Optionally, the periodicity of the frequency hopping pattern may be associated with $P_F$. For example, if $P_F = 4$, the start value of the frequency hopping pattern is equal to 0, and the offset value is equal to 1, the corresponding frequency hopping pattern may be equal to {0, 1, 2, 3}. Alternatively, the base station may indicate an offset value of the frequency hopping pattern by using signaling. A start value of the frequency hopping pattern is equal to 0 by default, or is equal to a specific value. The value may be determined in a predefined manner, or the like.

It should be noted that, in the foregoing scenario, the base station may implicitly indicate, by indicating that there is no field for the start value and the offset value of the frequency hopping pattern, or when the start value is predefined, by indicating that there is no field for the offset value of the frequency hopping pattern, to disable start RB position frequency hopping, or the like. Alternatively, the base station may implicitly indicate, by indicating that the start value or the offset value of the frequency hopping pattern is outside a candidate range, or the offset value is always 0, or the like, to disable the start RB position.

2. At least one candidate frequency hopping pattern of $k_{hopping}$ is predefined. An actual frequency hopping pattern of $k_{hopping}$ is indicated by using signaling. For example, five candidate frequency hopping patterns of $k_{hopping}$ are predefined, and the base station may send indication information to the terminal, to indicate an index of a frequency hopping pattern. The terminal determines, based on the index of the frequency hopping pattern, that the frequency hopping pattern corresponding to the index is the actual frequency hopping pattern of $k_{hopping}$.

It should be noted that, in the foregoing scenario, the base station may further implicitly indicate, by indicating another index outside an index range of the predefined frequency hopping pattern, the terminal to disable start RB position frequency hopping. For example, if indexes of the predefined frequency hopping patterns are 0 to 3, the base station may indicate an index other than 0 to 3, to implicitly indicate the terminal to disable start RB position frequency hopping.

In a design, the base station may send indication information to the terminal, where the indication information indicates $hop_{id}$. The terminal determines, based on $hop_{id}$, $k_{hopping}$ corresponding to the $(n_{RB\_hop})^{th}$ frequency hopping periodicity. For example, as shown in Table 2-5, the terminal may determine, based on $hop_{id}$, $k_{hopping}$ in different frequency hopping periodicities. If $hop_{id}$ indicated by the base station is 1, when operation results of modulo (mod) between the frequency hopping periodicity index of the terminal and 4 are respectively equal to 0, 1, 2, and 3, it is determined that $k_{hopping}$ is respectively equal to 0, 2, 1, and 3.

**Table 2-5 Start RB position frequency hopping parameter, and $P_F \in \{2, 4\}$**

| $hop_{id}$ | $n_{RB\_hop}$ mod 4 = 0 | $n_{RB\_hop}$ mod 4 = 1 | $n_{RB\_hop}$ mod 4 = 2 | $n_{RB\_hop}$ mod 4 = 3 |
|---|---|---|---|---|
| 0 | 0 | 1 | 0 | 1 |
| 1 | 0 | 2 | 1 | 3 |
| 2 | 0 | 1 | 2 | 3 |
| 3 | 0 | 2 | 0 | 2 |
| 4 | 0 | 2 | 2 | 3 |

In this application, the signaling indication manner can effectively improve scheduling flexibility. The base station can flexibly configure different frequency hopping patterns for the terminal by considering different terminal channel conditions and user multiplexing statuses.

3.3. A correspondence between $k_{hopping}$ and the frequency hopping pattern of $k_{hopping}$ and the frequency hopping periodicity index

In a design, the terminal determines the first frequency hopping parameter $k_{hopping}$ based on the frequency hopping periodicity index $n_{RB\_hop}$ and the partial frequency sounding coefficient $P_F$, and $k_{hopping}$ corresponding to the $(n_{RB\_hop})^{th}$ frequency hopping periodicity satisfies:

$$k_{\text{hopping}}(n_{\text{RB\_hop}}) = \frac{P_F}{2}(n_{\text{RB\_hop}} \mod 2) + \left\lfloor \frac{n_{\text{RB\_hop}} \mod P_F}{2} \right\rfloor \qquad (2\text{-}18)$$

$k_{hopping}(n_{RB\_hop})$ represents $k_{hopping}$ corresponding to the $(n_{RB\_hop})^{th}$ frequency hopping periodicity, $k_{hopping}$ corresponding to the $(n_{RB\_hop})^{th}$ frequency hopping periodicity may also be directly determined based on the parameter $k_{hopping}$, and $k_{hopping}$ corresponding to different frequency hopping periodicities may be different. Details are not described herein again.

Alternatively, $k_{hopping}$ corresponding to the $(n_{RB\_hop})^{th}$ frequency hopping periodicity satisfies:

$$k_{\text{hopping}} = \frac{P_F}{2}(n_{\text{RB\_hop}} \mod 2) + \left\lfloor \frac{n_{\text{RB\_hop}} \mod P_F}{2} \right\rfloor \qquad (2\text{-}19)$$

The frequency hopping pattern of $k_{hopping}$ corresponding to Formula (2-18) and Formula (2-19) satisfies the following relationship: If $P_F = 2$, the frequency hopping pattern corresponding to $k_{hopping}$ is equal to {0, 1}; if $P_F = 4$, the frequency hopping pattern corresponding to $k_{hopping}$ is equal to {0, 2, 1, 3}; or if $P_F = 8$, the frequency hopping pattern corresponding to $k_{hopping}$ is equal to {0, 4, 1, 5, 2, 6, 3, 7}.

In a design, the terminal determines the first frequency hopping parameter $k_{hopping}$ based on the frequency hopping periodicity index $n_{RB\_hop}$ and the partial frequency sounding coefficient $P_F$, and $k_{hopping}$ corresponding to the $(n_{RB\_hop})^{th}$ frequency hopping periodicity satisfies:

$$k_{hopping}(n_{RB\_hop}) = \left\lceil \frac{P_F}{2} \right\rceil (n_{RB\_hop} \bmod 2) + \left\lceil \frac{n_{RB\_hop} \bmod P_F}{2} \right\rceil \qquad (2\text{-}20)$$

$\lceil \ \rceil$ represents a rounding-up function.

Formula (2-20) corresponds to a value rule of $k_{hopping}$ when $P_F$ may be an odd number. When $P_F$ is an even number, different frequency hopping patterns corresponding to $P_F$ are the same in Formula (2-18) or Formula (2-19). When $P_F$ is an even number, for example, $P_F=3$, the frequency hopping pattern corresponding to $k_{hopping}$ is equal to {0, 2, 1}.

According to the method, the first frequency hopping parameter can be determined in a predefined manner. In the frequency hopping pattern corresponding to the first frequency hopping parameter, a frequency domain spacing between adjacent subbands is large. This effectively improves a frequency domain diversity gain of a channel, reduces scheduling complexity of the base station while reducing signaling overheads, enables different terminals to correspond to different SRS start frequency domain positions, reduces interference in SRS transmission, and improves channel estimation performance.

In a design, the terminal determines $k_{hopping}$ based on a modulo operation ($n_{RB\_hop} \bmod T_{cycle\_hop}$) performed on the frequency hopping periodicity index $n_{RB\_hop}$ and the periodicity $T_{cycle\_hop}$ of the frequency hopping pattern. For example, $k_{hopping}$ is equal to a value corresponding to an $i^{th}$ element in the frequency hopping pattern, and $g$ satisfies: $g=(n_{RB\_hop} \bmod T_{cycle\_hop})$.

For example, the frequency hopping pattern of $k_{hopping}$ is equal to {0, 2, 1, 3}, and the periodicity of the frequency hopping pattern is equal to 4. If a frequency hopping periodicity index corresponding to a current time unit of the terminal is equal to 20, $k_{hopping}$ is equal to a value corresponding to a $0^{th}$ element in the frequency hopping pattern, where $k_{hopping}$ =0. Alternatively, if the frequency hopping periodicity index $n_{RB\_hop}$=21, $k_{hopping}$ is equal to a value corresponding to a first element in the frequency hopping pattern, that is, $k_{hopping}$ =2.

In a design, $k_{hopping}$ satisfies: $k_{hopping} = F_{RS}(n_{RB\_hop})$. $n_{RB\_hop}$ represents the frequency hopping periodicity index, and $F_{RS}$ represents a mapping function and represents a mapping function between the frequency hopping periodicity index $n_{RB\_hop}$ and $k_{hopping}$. The mapping function is not limited in this application.

For example, the mapping function $F_{RS}(n_{RB\_hop})$ satisfies: $F_{RS}(n_{RB\_hop}) = F_{RS}(n_{RB\_hop} \bmod T_{cycle\_hop})$. $T_{cycle\_hop}$ represents the periodicity of the frequency hopping pattern of $k_{hopping}$, $F_{RS}(n_{RB\_hop} \bmod T_{cycle\_hop})$ is equal to $k_{hopping}$ corresponding to a $g^{th}$ element of the frequency hopping pattern, and $g$ is defined in the foregoing content.

For example, the frequency hopping pattern of $k_{hopping}$ is equal to {0, 2, 1, 3}. Corresponding $T_{cycle\_hop}=4$, $F_{RS}(0)=0$, $F_{RS}(1)=2$, $F_{RS}(2)=1$, and $F_{RS}(3)=3$. Alternatively, for example, the frequency hopping pattern of $k_{hopping}$ is equal to {0, 1, ..., $P_F$-1 }. Corresponding $T_{cycle\_hop}=P_F$, $F_{RS}(0)=0$, $F_{RS}(1)=1$, ..., and $F_{RS}(p_F-1)=P_F-1$. Alternatively, for example, the frequency hopping pattern of $k_{hopping}$ is equal to {0, 1, 2, 3}. Corresponding $T_{cycle\_hop}=4$, $F_{RS}(0)=0$, $F_{RS}(1)=1$, $F_{RS}(2)=2$, and $F_{RS}(3)=3$.

In a design, if the frequency hop0ping pattern of $k_{hopping}$ is equal to {0, 1, ...$P_F$-1}, the mapping function $F_{RS}(n_{RB\_hop})$ satisfies:

$$F_{RS}(n_{RB\_hop}) = n_{RB\_hop} \qquad (2\text{-}21)$$

or

$$F_{RS}(n_{RB\_hop}) = n_{RB\_hop} \bmod T_{cycle\_hop} \qquad (2\text{-}22)$$

For example, if the frequency hopping pattern of $k_{hopping}$ is equal to {x, x+1, ..., $P_F$-1, 0, 1, ..., x-1}, the mapping function $F_{RS}(n_{RB\_hop})$ may further satisfy:

$$F_{\text{RS}}(n_{\text{RB\_hop}})=n_{\text{RB\_hop}}+x \qquad\qquad (2\text{-}23)$$

or

$$F_{\text{RS}}(n_{\text{RB\_hop}})=(n_{\text{RB\_hop}} + x) \bmod T_{\text{cycle\_hop}} \qquad\qquad (2\text{-}24)$$

$x$ is an integer greater than or equal to 0.

In a design, a mapping relationship between the frequency hopping pattern of $k_{\text{hopping}}$ and the frequency hopping periodicity index may be implemented based on signaling. For example, the RRC signaling indicates an index $i$, $k_{\text{hopping}}$ corresponding to a first frequency hopping periodicity is equal to a value corresponding to an $i^{th}$ element of the frequency hopping pattern, and the frequency hopping periodicity corresponds to a frequency hopping periodicity in which the terminal actually performs SRS transmission. In a possible implementation, $i \in \{0, 1, ..., T_{\text{cycle\_hop}}\text{-}1\}$. For example, $P_{\text{F}}$=4, and the frequency hopping pattern of $k_{\text{hopping}}$ is equal to $\{0, 2, 1, 3\}$. If the start value index of $k_{\text{hopping}}$ indicated by using the signaling $i$=1, in the first frequency hopping periodicity in which the terminal performs SRS transmission, corresponding $k_{\text{hopping}}$=2.

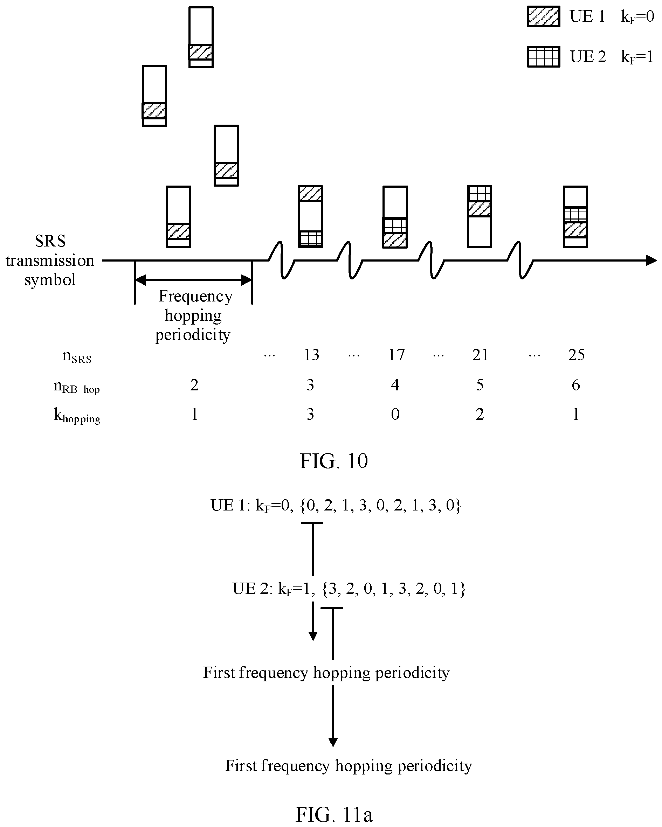

As shown in FIG. 11a, a frequency hopping pattern is equal to $\{0, 2, 1, 3\}$, a configuration of UE 1 is $k_{\text{F}}$=0, a start value index $i$=0, a configuration of UE 2 is $k_{\text{F}}$=1, and a first frequency hopping periodicity corresponds to a value corresponding to an $(i$=1$)^{th}$ element in the frequency hopping pattern. Based on the foregoing formula for calculating an index of a subband for SRS transmission, in different frequency hopping periodicities, an index of a subband for SRS transmission in the UE 1 changes according to a rule of $\{0, 2, 1, 3\}$, and an index of a subband for SRS transmission in the UE 2 changes according to a rule of $\{3, 2, 0, 1, 3, 2, 0, 1\}$. For example, in the first frequency hopping periodicity of the UE 1, one frequency hopping periodicity (a corresponding frequency hopping periodicity index is 0) corresponds to a value corresponding to the $(i$=0$)^{th}$ element in the frequency hopping pattern, $k_{\text{hopping}}$ is 0, and an index of a subband for SRS transmission is $(k_{\text{F}}+k_{\text{hopping}})$ mod 4=(0+0) mod 4=0. In the first frequency hopping periodicity of the UE 2, one frequency hopping periodicity (a corresponding frequency hopping periodicity index is 0) corresponds to a value corresponding to an $(i$=1$)^{th}$ element in the frequency hopping pattern, $k_{\text{hopping}}$ is equal to 2, and an index of a subband for SRS transmission is equal to $(k_{\text{F}}+k_{\text{hopping}})$ mod 4=(1+2) mod 4=3.

In descriptions of this embodiment of the present invention, a frequency hopping periodicity index corresponding to the first frequency hopping periodicity is 0, a frequency hopping periodicity index corresponding to second frequency hopping periodicity is 1, and so on. Details are not described herein again.

In a design, the mapping relationship between the frequency hopping pattern and the frequency hopping periodicity index may be shown based on a predefined table. For example, $k_{\text{hopping}}$ used in the $(n_{\text{RB\_hop}})^{th}$ frequency hopping periodicity may be determined based on Table (2-3) or Table (2-4). Details are not described herein again.

Optionally, after determining the first frequency hopping parameter, the terminal may determine a frequency domain start position corresponding to the SRS, and send the SRS to the base station at a corresponding frequency domain position. The method shown in FIG. 9 may further include the following step.

Step 904: The terminal sends the SRS to the base station based on the first frequency hopping parameter.

In this application, the terminal may determine a start RB position index based on the first frequency hopping parameter $k_{\text{hopping}}$; the terminal determines, based on the start RB position index, the frequency domain position for sending the SRS; and the terminal sends the SRS to the base station at the corresponding frequency domain position. For example, the terminal determines the start RB position index, determines a start position of a resource element (Resource Element, RE) for SRS transmission, and sends the SRS to the base station based on the start position of the RE for SRS transmission and a bandwidth occupied by the SRS.

For example, a process in which the terminal determines the start RB position index based on the first frequency hopping parameter includes the following content.

The terminal determines, based on the first frequency hopping parameter, the index of the subband for SRS transmission within the configured bandwidth of the SRS. In the configured bandwidth of the SRS, the index of the subband corresponding to SRS transmission satisfies:

$$S_{\text{F}} = (k_{\text{F}} + k_{\text{hopping}}) \bmod P_{\text{F}} \qquad\qquad (2\text{-}25)$$

The index of the subband for SRS transmission is associated with the start RB position index. For example, if a quantity of RBs occupied by a partial frequency sounding bandwidth is equal to $\frac{1}{P_{\text{F}}} m_{\text{SRS}, \, B_{\text{SRS}}}$, the corresponding

start RB index satisfies:

$$N_{\text{offset}} = \frac{S_{\text{F}}}{P_{\text{F}}} m_{\text{SRS, } B_{\text{SRS}}} \qquad (2\text{-}26)$$

Optionally, if the quantity of RBs occupied by the partial frequency sounding bandwidth needs to be quantized to an integer multiple of 4, the corresponding start RB position index satisfies:

$$N_{\text{offset}} = \sum_{i=0}^{S_{\text{F}}} f_i \left( \frac{1}{P_{\text{F}}} m_{\text{SRS},B_{\text{SRS}}} \right) \qquad (2\text{-}27)$$

$f_i(n)$ is a function corresponding to $n$. For example, $f_i(n)$ represents an integer with a largest value in integers that are not greater than $n$ and are integral multiples of 4; or $f_i(n)$ represents an integer with a smallest value in integers that are not less than $n$ and are integral multiples of 4; or $f_i(n)$ represents an integer with a smallest absolute difference corresponding to $n$, and the integer is equal to an integer multiple of 4; or $f_i(n)$ is equal to 0, and a corresponding quantity of candidate subbands on which the terminal performs SRS transmission is less than $P_{\text{F}}$. For details about the index of the subband for SRS transmission and the start RB position index, refer to Embodiment 4. Details are not described herein again.

Optionally, if the partial frequency sounding bandwidth needs to be quantized to an integer multiple of 4, and different subbands correspond to a same frequency domain size (or a same quantity of RBs), a corresponding start RB position index satisfies:

$$N_{\text{offset}} = S_{\text{F}} f \left( \frac{1}{P_{\text{F}}} m_{\text{SRS},B_{\text{SRS}}} \right) \qquad (2\text{-}28)$$

$f(n) = f_i(n), \forall i$.

For example, a process in which the terminal determines, based on the start RB position index, the start position of the RE for SRS transmission includes the following content.

In a design, the terminal may determine, based on the start RB position index $N_{\text{offset}}$, a lowest frequency position $\bar{k}_0^{(p_i)}$ for SRS transmission in a partial bandwidth (bandwidth part, BWP) range, $\bar{k}_0^{(p_i)}$ may be a lowest SRS frequency domain position corresponding to all hops, and $\bar{k}_0^{(p_i)}$ satisfies:

$$\bar{k}_0^{(p_i)} = (n_{\text{shift}} + N_{\text{offset}})N_{\text{sc}}^{\text{RB}} + \left( k_{\text{TC}}^{(p_i)} + k_{\text{offset}}^{l'} \right) \bmod K_{\text{TC}} \qquad (2\text{-}29)$$

$n_{\text{shift}}$ represents the lowest start position of corresponding broadband SRS sounding, that is, a first subcarrier that can be used for SRS transmission on a frequency band, and $N_{\text{offset}}$ represents a partial frequency domain sounding start RB index. If the terminal does not support a partial frequency domain sounding mechanism, corresponding $N_{\text{offset}}=0$, or there is no parameter $N_{\text{offset}}$ in the foregoing formula.

The terminal determines, based on $\bar{k}_0^{(p_i)}$, the index $k_0^{(p_i)}$ of the start RE for SRS transmission, and $k_0^{(p_i)}$ may satisfy:

$$k_0^{(p_i)} = \bar{k}_0^{(p_i)} + \sum_{b=0}^{B_{\text{SRS}}} K_{\text{TC}} M_{\text{sc},b}^{\text{SRS}} n_b \qquad (2\text{-}30)$$

$$M_{\text{sc},b}^{\text{SRS}} = m_{\text{SRS},b} N_{\text{sc}}^{\text{RB}} / K_{\text{TC}} \qquad (2\text{-}31)$$

$N_{sc}^{RB}$ represents a quantity of subcarriers included in one RB, $K_{TC}$ represents a quantity of combs of a current SRS, and $m_{SRS,b}$ is related to parameters $C_{SRS}$ and $B_{SRS}$. For details about a mapping relationship, refer to Table 6.4.1.4.3-1 in the protocol 38.211. The parameters $C_{SRS}$ and $B_{SRS}$ may be configured by a higher-layer parameter *freqHopping.*

In another design, the terminal may determine, based on the start RB position index $N_{offset}$, the index $k_0^{(p_i)}$ of the start RE for SRS transmission, and $k_0^{(p_i)}$ satisfies:

$$k_0^{(p_i)} = \bar{k}_0^{(p_i)} + N_{offset} N_{sc}^{RB} + \sum_{b=0}^{B_{SRS}} K_{TC} M_{sc,b}^{SRS} n_b \qquad (2\text{-}32)$$

$$\bar{k}_0^{(p_i)} = n_{shift} N_{sc}^{RB} + \left( k_{TC}^{(p_i)} + k_{offset}^{l'} \right) \bmod K_{TC}.$$

In this application, $k_{hopping}$ is associated with the absolute time by using the SRS counter, or $k_{hopping}$ corresponding to different frequency hopping periodicities is determined by using signaling indication. For terminals multiplexed in a same time unit based on different frequency domain positions, the base station can configure different start subband indexes, frequency hopping patterns, or the like. This prevents different terminals from sounding a channel at a same frequency domain position, avoids interference, improves channel estimation precision, and effectively reduces scheduling complexity of the base station. As shown in FIG. 10, frequency hopping patterns configured by a base station for UE 1 and UE 2 are the same, and the frequency hopping patterns are {0, 2, 1, 3}. In a configuration of the UE 1, $k_F$=0, and in a configuration of the UE 2, $k_F$=1. In a current solution, because signaling effective time of the UE 2 is one frequency hopping periodicity later than signaling effective time of the UE 1, a fifth frequency hopping periodicity of the UE 1 is the same as absolute time corresponding to a fourth frequency hopping periodicity of the UE 2. However, at the absolute time, indexes of subbands corresponding to the UE 1 and the UE 2 for SRS transmission are the same. Consequently, frequency domain resources for SRS transmission of the UE 1 and the UE 2 collide with each other. However, in the solution of this application, as shown in FIG. 10, although the signaling effective time of the UE 2 is one frequency hopping periodicity later than the signaling effective time of the UE 1, for the periodic SRS and the semi-persistent SRS, because the frequency hopping periodicity in this application is calculated by using the SRS counter as a reference, it can be ensured that the frequency hopping periodicity indexes calculated by the UE 1 and the UE 2 are consistent. For example, at absolute time corresponding to the SRS counter being equal to 25, each frequency hopping periodicity includes four hops, and a frequency hopping periodicity calculated by using Formula (2-1) is equal to 6. In a sixth frequency hopping periodicity, $k_{hopping}$ corresponding to both the UE 1 and UE 2 is 1. According to the foregoing formula for calculating the candidate subband index, the index of the subband for the UE 1 to perform SRS transmission is equal to (0+1) mod 4=1, the index of the subband for the UE 2 to perform SRS transmission is equal to (1+1) mod 4=2, and subbands for the UE 1 and the UE 2 to perform SRS transmission do not collide.

In this application, values corresponding to different SRS transmission positions are determined for the start RB position frequency hopping pattern. An absolute symbol is associated. This can reduce implementation complexity of determining by the terminal and the base station, effectively reduce scheduling complexity of the base station, avoid a case in which different terminals send the SRS at the same frequency domain position, reduce mutual interference between different terminals, and improve channel estimation precision.

It should be noted that the foregoing focuses on a process in which the terminal determines the start frequency domain position corresponding to the SRS and sends the SRS. A process of receiving the SRS by the base station is similar to the foregoing process of sending the SRS by the terminal, and mutual reference may be made to the processes. For example, the base station determines the frequency hopping periodicity index of the terminal based on the first time unit; and the base station determines the first frequency hopping parameter based on the frequency hopping periodicity index of the terminal and the frequency hopping pattern. The base station receives the SRS or the like from the terminal based on the first frequency hopping parameter.

**Embodiment 2**

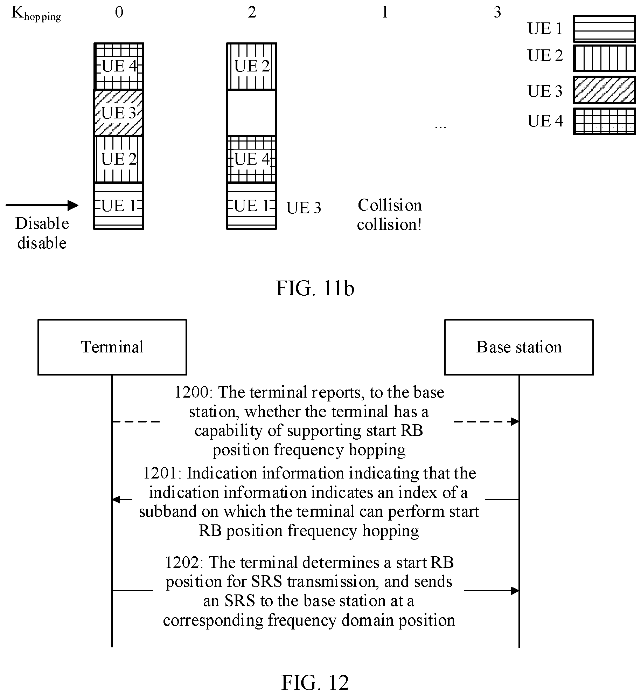

It is described in Embodiment 1 that in the start RB position frequency hopping scenario, the first frequency hopping parameter $k_{hopping}$ is determined based on the frequency hopping pattern of $k_{hopping}$ and the legacy frequency hopping periodicity index, and the subband index $((k_F + k_{hopping}) \bmod P_F) \in \{0, 1, ..., P_F-1\}$ corresponding to SRS transmission is determined accordingly, where $k_F$ represents the start subband index, and $P_F$ represents the partial frequency sounding coefficient. However, in an actual scenario, for a specific terminal (for example, UE 1), there may be a scenario in which some subbands are unavailable. For example, another terminal (for example, UE 2) performs SRS transmission on the foregoing subband, and the UE 2 does not have a start RB position frequency hopping capability. Alternatively, the UE 2 is a conventional terminal that supports a current protocol mechanism and does not support start RB position frequency hopping. If the UE 1 performs start RB position frequency hopping to traverse subband positions corresponding to the UE 2, SRS transmission corresponding to the UE 1 and the UE 2 are performed in a non-orthogonal multiplexing manner. This causes severe interference and reduces channel estimation precision. Alternatively, if a signal to interference plus noise ratio of a propagation channel corresponding to the subband position is low, if the UE 1 performs start RB position frequency hopping to traverse the subband positions, channel estimation precision is also reduced. As shown in FIG. 11b, the foregoing problem is described by using an example in which $P_F=4$ and a frequency hopping pattern of $k_{hopping}$ corresponding to start RB position frequency hopping is equal to $\{0, 2, 1, 3\}$. At a transmission moment corresponding to $k_{hopping}=2$, UE 3 performs SRS transmission at a frequency domain position corresponding to a subband 0 at a start RB position. UE 1 is UE that supports partial frequency sounding but does not support start RB position frequency hopping, or UE 1 is conventional UE that does not support partial frequency sounding. Therefore, the UE 1 fixedly performs SRS transmission at a frequency domain position corresponding to the subband 0. At a specific time domain position, the UE 1 and the UE 3 perform SRS transmission at the same frequency domain position, and SRSs of different UE interfere with each other. As a result, SRS measurement precision is affected.

For the foregoing problem, this embodiment of this application provides a solution, including: A terminal may determine, based on a first frequency hopping parameter, namely, $k_{hopping}$, a subband index $S_F$ corresponding to an SRS, where the subband index may be referred to as a candidate subband index. The first frequency hopping parameter is determined based on a frequency hopping pattern of $k_{hopping}$, and the frequency hopping pattern is determined in a predefined manner or a signaling indication manner. In a case, the frequency hopping pattern is determined in the predefined manner. If the candidate subband index determined by the terminal is the same as that of a first subband that does not support the terminal to perform SRS transmission, for example, the first subband is determined based on a signaling indication or in a predefined manner, the terminal may need to redetermine a subband for actual SRS transmission. In another case, the frequency hopping pattern is determined in the signaling indication manner, and the terminal may perform SRS transmission on all candidate subbands. In an SRS transmission process, there is a specific terminal, and the specific terminal cannot perform start RB position frequency hopping. As a result, if the candidate subband index determined by the terminal is the same as that of the first subband that does not support the terminal to perform SRS transmission, for example, the first subband is determined based on a signaling indication or in a predefined manner, the terminal may need to redetermine a subband for actual SRS transmission. Specific steps are as follows.

The terminal determines the candidate subband index of the SRS based on the first frequency hopping parameter; determines a start RB position of the SRS based on the candidate subband index and the first subband index, where the first subband corresponds to a frequency domain range in which the terminal is not supported to perform SRS transmission; and sends the SRS to a base station based on the start RB position of the SRS. The solution of Embodiment 2 may be used independently, or may be used in combination with Embodiment 1. If this embodiment is used in combination with Embodiment 1, the solution in Embodiment 2 may be used as a possible implementation of Embodiment 1 of determining, based on the first frequency hopping parameter, a frequency domain range corresponding to actual SRS transmission.

As shown in FIG. 12, a procedure of a communication method is provided. The procedure includes at least the following steps.

Optionally, step 1200: A terminal reports, to a base station, whether the terminal has a capability of supporting start RB position frequency hopping.

Step 1201: The base station sends indication information to the terminal, where the indication information indicates an index of a subband on which the terminal can perform start RB position frequency hopping. Optionally, if the indication information does not exist, the terminal may perform SRS transmission on all candidate subbands by default, that is, $S_F \in \{0, 1, ..., P_F-1\}$. In a design, in a background in which the terminal supports start RB position frequency hopping, the base station sends indication signaling to the terminal, to indicate a subband on which the terminal can perform SRS transmission. For example, the indication signaling may be RRC signaling, or may be MAC CE or DCI signaling, and the signaling may be in a form of a bitmap (bitmap). For example, a configured bandwidth of the SRS includes $P_F$ subbands. Signaling length of the bitmap may be equal to $P_F$, and each bit indicates that one of the subbands supports/does not support the terminal to perform SRS transmission. For example, if a bit value corresponding to a bit is equal to 1, it indicates that a subband corresponding to the bit supports the terminal to perform SRS transmission; otherwise, it indicates that a subband corresponding to the bit does not support the terminal to perform SRS transmission. Alternatively, a meaning of the bit being equal to 1 may be opposite to a meaning of the bit being equal to 0. For example, a partial frequency sounding coefficient $P_F=4$, and the corresponding configured bandwidth of the SRS is divided into four subbands. If the bitmap indicated by the foregoing signaling is specifically 0, 1, 1, and 1, it indicates that subbands that can be used by the terminal to perform SRS transmission include a subband 1, a subband 2, and a subband 3.

In a design, the base station may send signaling to the terminal, to directly indicate an index of a subband that supports the terminal to perform SRS transmission. The signaling may be RRC signaling, or may be MAC CE or DCI signaling. For example, if the base station indicates 1, 2, and 3 to the terminal by using RRC signaling, it indicates that the terminal may perform SRS transmission on a subband 1 to a subband 3. Alternatively, the base station may indicate, to the terminal by using RRC signaling, an index of a subband that does not support the terminal to perform SRS transmission. For example, if the base station indicates 0 to the terminal by using the RRC signaling, it indicates that the terminal cannot perform SRS transmission at a frequency domain position corresponding to a subband 0.

Step 1202: The terminal determines a start RB position for SRS transmission, and sends the SRS to the base station at a corresponding frequency domain position.

In a design, the base station indicates, to the terminal, a first subband $s$, where the first subband $s$ does not support the terminal to perform SRS transmission in a corresponding frequency domain range, or SRS transmission is disabled for the terminal in a frequency domain range corresponding to the first subband s. A candidate subband w determined by the terminal based on the first frequency hopping parameter $k_{\text{hopping}}$ is defined, and the subband $w$ satisfies:

$$w=\left(k_{\text{F}} + k_{\text{hopping}}\right) \bmod P_{\text{F}} \qquad (2\text{-}33)$$

If a frequency domain range corresponding to the candidate subband $w$ for the terminal is the same as that corresponding to the subband $s$, for example, $w=s$, the terminal determines, within the configured bandwidth of the SRS, the index of the subband for actual SRS transmission, which satisfies:

$$S_{\text{F}} = \left(k_{\text{F}} + 2k_{\text{hopping}}\right) \bmod P_{\text{F}} \qquad (2\text{-}34)$$

$S_{\text{F}}$ represents the index of the subband on which the terminal actually performs SRS transmission, $k_{\text{F}}$ represents a start subband index, $P_{\text{F}}$ represents the partial frequency sounding coefficient, $k_{\text{hopping}}$ represents the first frequency hopping parameter, $k_{\text{hopping}}$ is determined based on the frequency hopping pattern of $k_{\text{hopping}}$ and a legacy frequency hopping periodicity, and the frequency hopping pattern of $k_{\text{hopping}}$ may be determined in a predefined, preconfigured, or signaling indication manner.

If a frequency domain range corresponding to the candidate subband $w$ is different from that corresponding to the subband $s$, for example, $w \neq s$, the terminal determines, within the configured bandwidth of the SRS, the index of the subband for SRS transmission, which satisfies:

$$S_{\text{F}} = \left(k_{\text{F}} + k_{\text{hopping}}\right) \bmod P_{\text{F}} \qquad (2\text{-}35)$$

In another design, the base station indicates, to the terminal, a plurality of subbands on which SRS transmission is disabled. The terminal determines, based on the first frequency hopping parameter $k_{\text{hopping}}$ and indexes of the plurality of subbands on which SRS transmission is disabled, and based on the following solution, the index of the subband for actual SRS transmission. For example, a quantity of subbands (a subband $s_1$ and a subband $s_2$) on which the terminal disables SRS transmission is 2. If the frequency domain range corresponding to the candidate subband w (Formula (2-33)) is the same as that corresponding to the subband $s_1$, for example, $w=s_1$, the terminal determines a second candidate subband $w_2$, which satisfies:

$$w_2=\left(k_{\text{F}} + 2k_{\text{hopping}}\right) \bmod P_{\text{F}} \qquad (2\text{-}36)$$

If a frequency domain range corresponding to the second candidate subband $w_2$ is the same as that corresponding to the subband $s_2$, for example, $w_2=s_2$, the terminal determines the index of the subband for actual SRS transmission, which satisfies:

$$S_{\text{F}} = \left(k_{\text{F}} + 3k_{\text{hopping}}\right) \bmod P_{\text{F}} \qquad (2\text{-}37)$$

If the frequency domain range corresponding to the candidate subband $w$ (Formula (2-33)) is the same as that corresponding to the subband $s_1$, for example, $w=s_1$, and the frequency domain range corresponding to the second

candidate subband $w_2$ is different from that corresponding to the subband $s_2$, for example, $w_2 \neq s_2$, the terminal determines the index of the subband for actual SRS transmission, which satisfies:

$$S_F = \left(k_F + 2k_{hopping}\right) \bmod P_F \qquad (2\text{-}38)$$

In another design, if the terminal does not receive signaling for disabling a subband for SRS transmission, or if the frequency domain range corresponding to the candidate subband $w$ (Formula (2-33)) is different from that corresponding to the subband $s_1$, for example, $w \neq s_1$, and the frequency domain range corresponding to the second candidate subband $w_2$ is different from that corresponding to the subband $s_2$, for example, $w_2 \neq s_2$, the terminal determines, within the configured bandwidth of the SRS, the index of the subband for actual SRS transmission, which satisfies:

$$S_F = \left(k_F + k_{hopping}\right) \bmod P_F \qquad (2\text{-}39)$$

The subband index is related to a start RB position corresponding to the SRS. For example, if the quantity of RBs occupied by the partial frequency sounding bandwidth is equal to $\dfrac{1}{P_F} m_{SRS,B_{SRS}}$, the corresponding start RB index satisfies:

$$N_{offset} = \frac{S_F}{P_F} m_{SRS,B_{SRS}} \qquad (2\text{-}40)$$

Optionally, if the quantity of RBs occupied by the partial frequency sounding bandwidth needs to be quantized to an integer multiple of 4, the corresponding start RB position index satisfies:

$$N_{offset} = \sum_{i=0}^{S_F} f_i\left(\frac{1}{P_F} m_{SRS,B_{SRS}}\right) \qquad (2\text{-}41)$$

$f_i(n)$ is a function corresponding to $n$. For example, $f_i(n)$ represents an integer with a largest value in integers that are not greater than n and are integral multiples of 4; or $f_i(n)$ represents an integer with a smallest value in integers that are not less than n and are integral multiples of 4; or $f_i(n)$ represents an integer with a smallest absolute difference corresponding to n, and the integer is equal to an integer multiple of 4; or $f_i(n)$ is equal to 0, and a corresponding quantity of candidate subbands on which the terminal performs SRS transmission is less than $P_F$. For details about the index of the subband for SRS transmission and the start RB position index, refer to Embodiment 4. Details are not described herein again.

Optionally, if the quantity of the RBs occupied by the partial frequency sounding bandwidth needs to be quantized to an integer multiple of 4, and different subbands correspond to a same frequency domain range (or a same quantity of RBs), a corresponding start RB position index satisfies:

$$N_{offset} = S_F f\left(\frac{1}{P_F} m_{SRS,B_{SRS}}\right) \qquad (2\text{-}42)$$

$f(n) = f_i(n), \forall i$.

In Embodiment 2, after the terminal determines the start RB position index in the following manner, the terminal may determine a start RE position index based on the start RB position index, and send the SRS to the base station based on the start RE position index and an SRS transmission bandwidth. For a process in which the terminal determines the start RE position index based on the start RB position index, refer to the record in step 904 in Embodiment 1.

It should be noted that, in the procedure shown in FIG. 12, the frequency hopping pattern may be preconfigured, or the frequency hopping pattern may be indicated by using signaling, and the terminal may perform SRS transmission on all the candidate subbands. Optionally, due to some reasons, some subbands in the candidate subbands may not be able to perform SRS transmission. In this case, the terminal may redetermine k_{hopping} corresponding to different frequency hopping periodicities by using the solution shown in FIG. 12.

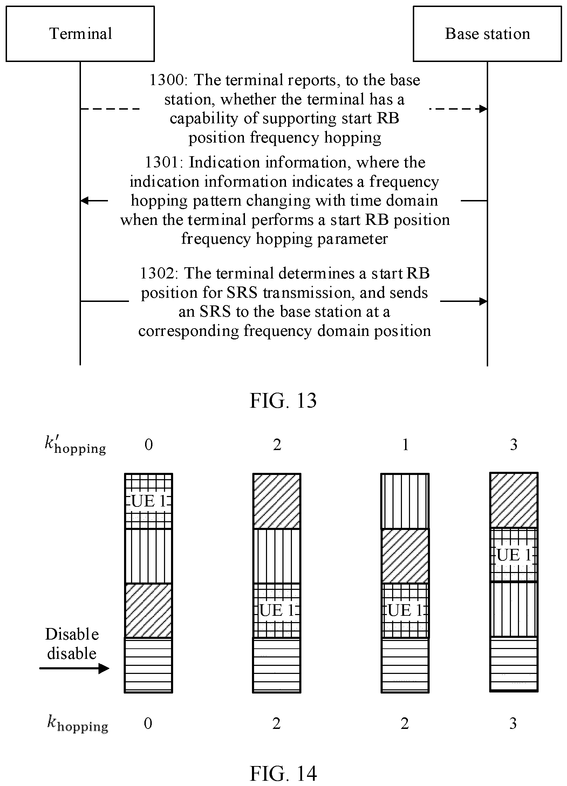

In a design, the frequency hopping pattern of $k_{hopping}$ is determined in a signaling indication manner, that is, the base station indicates the frequency hopping pattern of $k_{hopping}$ to the terminal by using signaling. If the first subband exists, and the first subband is disabled for the specific terminal, the base station may configure the frequency hopping pattern of $k_{hopping}$ by using signaling. This prevents the terminal from performing SRS transmission at a frequency domain position corresponding to the first subband. As shown in FIG. 13, a procedure of a communication method is provided. A solution of determining a frequency hopping pattern of $k_{hopping}$ is specifically described, and includes at least the following steps.

Optionally, step 1300: A terminal reports, to a base station, whether the terminal has a capability of supporting start RB position frequency hopping.

Step 1301: The base station sends indication information to the terminal, where the indication information indicates a frequency hopping pattern changing with time domain when the terminal performs a start RB frequency hopping parameter. The frequency hopping pattern indicates the frequency hopping parameter corresponding to the terminal at a specific SRS transmission moment.

In a design, at the specific SRS transmission moment of the terminal, a candidate frequency hopping pattern is determined based on a condition "all subbands support the terminal to perform SRS transmission". That a candidate frequency hopping parameter corresponding to a current time unit of the terminal is equal to $k'_{hopping}$ may be determined based on the candidate frequency hopping pattern. A first frequency hopping parameter $k_{hopping}$ corresponding to SRS transmission actually performed by the terminal is determined based on the candidate frequency hopping parameter $k'_{hopping}$ and one or more subbands disabled for the terminal. Detailed content is described below.

For example, a first subband s is determined, where the first subband s does not support the terminal to perform SRS transmission in a corresponding frequency domain range, or SRS transmission is disabled for the terminal in a frequency domain range corresponding to the first subband s. A candidate subband determined by the terminal based on the candidate frequency hopping parameter $k'_{hopping}$ is defined to be equal to a subband w, and the subband w satisfies:

$$w = \left(k_{\mathrm{F}} + k'_{\mathrm{hopping}}\right) \bmod P_{\mathrm{F}} \tag{2-43}$$

If a frequency domain range corresponding to the candidate subband w of the terminal is the same as that corresponding to the subband s, for example, w=s, the base station determines that the first frequency hopping parameter $k_{hopping}$ satisfies:

$$k_{\mathrm{hopping}} = 2k'_{\mathrm{hopping}} \tag{2-44}$$

If a frequency domain range corresponding to the candidate subband w of the terminal is different from that corresponding to the subband s, for example, w≠s, the base station determines that the first frequency hopping parameter $k_{hopping}$ satisfies:

$$k_{\mathrm{hopping}} = k'_{\mathrm{hopping}} \tag{2-45}$$

For example, if there are a plurality of subbands that do not support the terminal to perform SRS transmission in corresponding frequency domain ranges, or SRS transmission is disabled for the terminal in frequency domain ranges corresponding to a plurality of subbands, for example, a quantity of subbands on which the terminal disables SRS transmission is 2, and the subbands are respectively represented as a subband $s_1$ and a subband $s_2$. For the terminal, the base station determines the subband $s_1$ and the subband $s_2$. If the frequency domain range corresponding to the candidate subband w is the same as that corresponding to the subband $s_1$, for example, w=$s_1$, the base station determines that a second candidate subband $w_2$ satisfies:

$$w_2 = \left(k_{\mathrm{F}} + 2k'_{\mathrm{hopping}}\right) \bmod P_{\mathrm{F}} \tag{2-46}$$

If a frequency domain range corresponding to the second candidate subband $w_2$ is the same as that corresponding to the subband $s_2$, for example, $w_2$=$s_2$, the base station determines that the first frequency hopping parameter

$k_{\text{hopping}}$ satisfies:

$$k_{\text{hopping}} = 3k'_{\text{hopping}} \qquad (2\text{-}47)$$

If the frequency domain range corresponding to the candidate subband w (Formula (2-33)) is the same as that corresponding to the subband $s_1$, for example, $w=s_1$, and the frequency domain range corresponding to the second candidate subband $w_2$ is different from that corresponding to the subband $s_2$, for example, $w_2 \neq s_2$, the base station determines that the first frequency hopping parameter $k_{\text{hopping}}$ satisfies:

$$k_{\text{hopping}} = 2k'_{\text{hopping}} \qquad (2\text{-}48)$$

If all the candidate subbands support the terminal to perform SRS transmission in corresponding frequency domain ranges, or if the frequency domain range corresponding to the candidate subband w (Formula (2-33)) is different from that corresponding to the subband $s_1$, for example, $w \neq s_1$, and the frequency domain range corresponding to the second candidate subband $w_2$ is different from that corresponding to the subband $s_2$, for example, $w_2 \neq s_2$, the base station determines that the first frequency hopping parameter $k_{\text{hopping}}$ is as follows:

$$k_{\text{hopping}} = k'_{\text{hopping}} \qquad (2\text{-}49)$$

As shown in FIG. 14, $P_F=4$, a configured bandwidth of an SRS is divided into four subbands, a candidate frequency hopping parameter is equal to $k'_{\text{hopping}} \in \{0, 2, 1, 3\}$, and under a condition that $k_F=0$ is configured for UE 1, indexes of candidate subbands for SRS transmission are 0, 2, 1, and 3 respectively in a first frequency hopping periodicity to a fourth frequency hopping periodicity. If the UE 1 does not support SRS transmission in a frequency domain range corresponding to a subband 0, it may be redetermined, based on Formula (2-44), that $k_{\text{hopping}}$ corresponding to a third frequency hopping periodicity is 2.

Step 1302: The terminal determines, based on the first frequency hopping parameter $k_{\text{hopping}}$, a start RB position for SRS transmission, and sends the SRS to the base station in a corresponding frequency domain range.

In this application, that the terminal determines, based on the first frequency hopping parameter $k_{\text{hopping}}$, the index of the subband for actual SRS transmission satisfies:

$$S_F = \left(k_F + k_{\text{hopping}}\right) \bmod P_F \qquad (2\text{-}50)$$

For a relationship between the subband index $S_F$ and the start RB position index $N_{\text{offset}}$ corresponding to the SRS, refer to Formula (2-39), Formula (2-40), Formula (2-41), or Formula (2-42). Details are not described herein again.

It should be noted that, in Embodiment 2, frequency domain ranges corresponding to two subbands are the same. For example, the candidate subband w of the terminal and the subband s correspond to the same frequency domain range, it may mean that start frequency domain positions corresponding to the two subbands are the same, or may mean that start frequency domain positions and frequency domain width corresponding to the two subbands are the same, or may mean that a part of or all of frequency domain ranges corresponding to the two subbands have an intersection.

In Embodiment 2, there is another scenario: In a working process of the terminal, due to a reason, a subband that originally supports SRS transmission for the terminal suddenly becomes a subband that does not support SRS transmission. In this case, a base station may reconfigure a frequency hopping pattern for the terminal, and a value of an element in the newly configured frequency hopping pattern is twice a value of a corresponding element in an original frequency hopping pattern.

In Embodiment 2, the first frequency hopping parameter $k_{\text{hopping}}$ is determined according to a design rule when some subbands exist and the subbands are disabled for the specific terminal, so that the terminal does not perform SRS transmission on the subbands in the start RB position frequency hopping scenario. In this way, different terminals perform SRS transmission based on different frequency domain start positions, thereby reducing interference between users and improving channel estimation precision.

## Embodiment 3

In the 3GPP RAN1 #106, it is determined, based on a conclusion of the meeting, to support start RB position frequency hopping of a periodic SRS and a semi-persistent SRS in a partial frequency sounding scenario, where the start RB position frequency hopping is determined based on a legacy (legacy) frequency hopping periodicity. For a start RB position frequency hopping mechanism in an aperiodic SRS and/or a frequency hopping periodicity, the corresponding mechanism may be studied further. A start RB position frequency hopping solution in the frequency hopping periodicity includes: Start RB position frequency hopping is performed on different OFDM symbols corresponding to a same frequency domain range in the frequency hopping periodicity. This can implement joint channel estimation in different frequency domain ranges, and improve channel estimation precision.

Currently, for start RB position frequency hopping in a legacy (legacy) frequency hopping periodicity, a candidate solution is as follows: A start RB index corresponding to SRS transmission is designed to satisfy:

$$N_{\text{offset}} = \frac{(k_{\text{F}} + l'_{\text{offset}}) \bmod P_{\text{F}}}{P_{\text{F}}} m_{\text{SRS}, B_{\text{SRS}}} \tag{2-51}$$

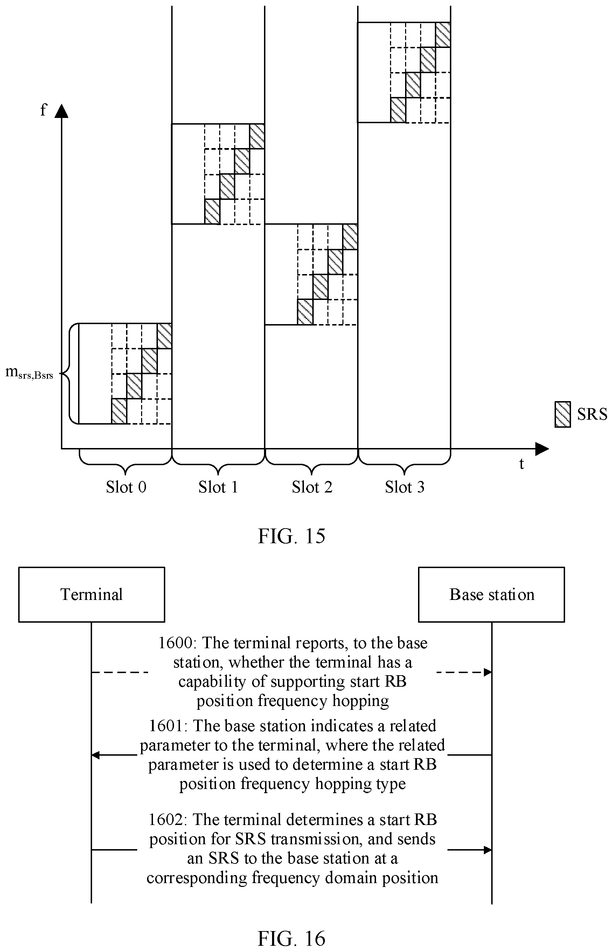

$l'_{\text{offset}} \in \left\{0, \ldots, N^{\text{hop}}_{\text{symb}} - 1\right\}$, a first frequency hopping parameter $k_{\text{hopping}} = l'_{\text{offset}}$, and $N^{\text{hop}}_{\text{symb}}$ represents a quantity of OFDM symbols corresponding to one frequency hop. For example, $N^{\text{hop}}_{\text{symb}} = R$, where $R$ is a repetition factor. A specific mechanism is shown in FIG. 15.

In another aspect, for start RB position frequency hopping in the legacy (legacy) frequency hopping periodicity, another candidate solution is as follows: The first frequency hopping parameter is determined in a predefined manner based on a size of a repetition factor $R$. A specific implementation is shown in Table 2-6.

**Table 2-6 First frequency hopping parameter $k_{\text{hopping}}$**

| $P_F$ | $n_{SRS}$ = 0, ... , R - 1 | | | | |
|---|---|---|---|---|---|
| | $R = 1$ | $R = 2$ | $R = 4$ | $R = 8$ | $R = 12$ |
| ▪ 2 | 0 | 0.1 | 0,1,0,1 | 0,1,0,1,0,1,0,1 | 0,1,0,1,0.1,0,1,0.1,0,1 |
| ▪ 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| ▪ 8 | - | 0, 4 | 0, 4, 2, 6 | 0, 4, 2, 6, 1, 5, 3, 7 | 0, 4, 2, 6, 1, 5, 3, 7, 0, 4, 2, 6. |

In the candidate solution, a corresponding first frequency hopping parameter $k_{\text{hopping}}$ is defined mainly based on the frequency hopping factor R. Another solution is designed in Embodiment 3, and a parameter $k_{\text{hopping}}$ is defined based on a time domain symbol corresponding to an SRS counter $n_{\text{SRS}}$. For a periodic SRS and a semi-persistent SRS, for a specific time domain configuration, $n_{\text{SRS}}$ is associated with an absolute time domain position. Compared with the current candidate solution, the solution corresponding to Embodiment 3 has good inheritance with the start RB position frequency hopping mechanism (for example, the solution described in Embodiment 1 or Embodiment 2) during a frequency hopping periodicity. In addition, impact of a standard is effectively reduced on the basis of reducing the interference between users.

The design solution in Embodiment 3 may be independently implemented, or may be implemented in combination with the design solution of Embodiment 1 or Embodiment 2. This is not limited in this application. As shown in FIG. 16, a procedure of a communication method is provided. The procedure includes at least the following steps.

Optionally, step 1600: A terminal reports, to a base station, whether the terminal has a capability of supporting start RB position frequency hopping. Alternatively, a terminal reports, to a base station, whether to support one or more of the following capabilities: start RB position frequency hopping inter a legacy frequency hopping periodicity, start RB position frequency hopping intra a frequency hopping periodicity, and start RB position frequency hopping inter-OFDM symbols; and reports that start RB position frequency hopping is unsupported, or the like.

Step 1601: The base station indicates a related parameter to the terminal, where the related parameter is used to determine to perform a start RB position frequency hopping type or that start RB position frequency hopping is not supported. For example, the type is the start RB position frequency hopping inter the legacy frequency hopping periodicity, and/or the start RB position frequency hopping intra the frequency hopping periodicity. For example, the foregoing process may be performed based on the following process:

An RRC parameter *InterOrIntraPeriodHopping* is defined.

If *InterOrIntraPeriodHopping* is equal to 'neither', it indicates that start RB position frequency hopping is not supported; or

if *InterOrIntraPeriodHopping* is equal to 'InterPeriodHopping', it indicates that only start RB position frequency hopping inter the legacy frequency hopping periodicity is supported; or

if *InterOrIntraPeriodHopping* is equal to 'IntraPeriodHopping', it indicates that only start RB position frequency hopping intra the legacy frequency hopping periodicity is supported (or legacy frequency hopping is disabled, for example, $b_{hop} \geq B_{SRS}$, for meanings of the parameter $b_{hop}$ and the parameter $B_{SRS}$, refer to Table 1-1); or

if *InterOrIntraPeriodHopping* is equal to 'InterAndIntraPeriodHopping', it indicates that both start RB position frequency hopping inter the legacy frequency hopping periodicity and start RB position frequency hopping intra the legacy frequency hopping periodicity are supported; or

if *InterOrIntraPeriodHopping* is equal to 'InterAndIntraPeriodHopping', it indicates that start RB position frequency hopping inter the OFDM symbols is supported; or

if *InterOrIntraPeriodHopping* is equal to 'NoPeriodHopping', start RB position frequency hopping in a non-frequency hopping scenario is supported.

It should be noted that, in the foregoing solution, RRC signaling is used as an example to describe the solution corresponding to this application. A corresponding function may also be implemented by using MAC CE signaling or DCI signaling. This is not limited in this application.

Step 1602: The terminal determines a first frequency hopping parameter $k_{hopping}$, further determines a start RB position for SRS transmission, and sends the SRS to the base station in a corresponding frequency domain range.

In a design, the terminal determines the first frequency hopping parameter $k_{hopping}$ based on a frequency hopping pattern, to determine the start RB frequency domain position for SRS transmission. In the configured bandwidth of the SRS, the index of the subband corresponding to SRS transmission satisfies:

$$S_{\mathrm{F}} = \left(k_{\mathrm{F}} + k_{\mathrm{hopping}}\right) \bmod P_{\mathrm{F}} \qquad (2\text{-}52)$$

The subband index is related to a start RB index corresponding to the SRS. For the subband index and the start RB position index corresponding to the SRS, refer to Formula (2-39), Formula (2-40), Formula (2-41), or Formula (2-42). Details are not described herein again.

The following describes in detail a solution for determining the first frequency hopping parameter $k_{hopping}$.

In a design, if the signaling indicates that the start RB position frequency hopping type is the start RB position frequency hopping intra the frequency hopping periodicity, the frequency hopping pattern corresponding to $k_{hopping}$ remains unchanged during the frequency hopping periodicity. In the frequency hopping periodicity, $k_{hopping}$ varies with different OFDM symbols corresponding to the subband. For a periodic SRS and a semi-persistent SRS, in an $(n_{\mathrm{s,f}}^{\mu})^{\mathrm{th}}$ slot of an $(n_f)^{\mathrm{th}}$ frame, $k_{hopping}$ corresponding to an $(l')^{\mathrm{th}}$ OFDM symbol corresponding to an SRS resource, or $k_{hopping}$ corresponding to an $(\ell_{\mathrm{SRS}})^{\mathrm{th}}$ SRS symbol counter is associated with an $i^{\mathrm{th}}$ element in the frequency hopping pattern of $k_{hopping}$, and the frequency hopping pattern element index i satisfies:

$$i = \left(\left(\ell_{\mathrm{SRS}} \bmod S_{\mathrm{RB\_hop}}\right) \bmod R\right) \bmod T_{\mathrm{cycle\_hop}} \qquad (2\text{-}53)$$

$A$ is a repetition factor, and for $S_{\mathrm{RB\_hop}}$, refer to the definition in Embodiment 1.

For a periodic and semi-persistent SRS, an SRS counter satisfies:

$$\ell_{\mathrm{SRS}} = \left(\frac{N_{\mathrm{slot}}^{\mathrm{frame},u} n_{\mathrm{f}} + n_{\mathrm{s,f}}^{u} - T_{\mathrm{offset}}}{T_{\mathrm{SRS}}}\right) N_{\mathrm{symb}}^{\mathrm{SRS}} + \ell' \qquad (2\text{-}54)$$

$T_{\mathrm{cycle\_hop}}$ represents periodicity of a frequency hopping pattern. For an aperiodic SRS, $\ell_{\mathrm{SRS}} = \ell'$.

The following is an example scenario of the foregoing solution. The partial frequency sounding coefficient $P_{\mathrm{F}} \in \{2, 4\}$. The frequency hopping pattern corresponding to the first frequency hopping parameter $k_{hopping}$ is determined in a predefined manner. In the $\left(n_{\mathrm{s,f}}^{\mu}\right)^{\mathrm{th}}$ slot of the $(n_f)^{\mathrm{th}}$ frame, $k_{\mathrm{hopping}}$ corresponding to the $l^{\mathrm{th}}$ OFDM symbol of the SRS resource, or $k_{\mathrm{hopping}}$ corresponding to the $(\ell_{\mathrm{SRS}})^{\mathrm{th}}$ SRS symbol counter is determined based on Table 2-7.

**Table 2-7 Start position frequency hopping parameter $k_{\mathbf{hopping}}$, and $p_{\mathbf{F}} \in \{2, 4\}$**

| $P_{\mathrm{F}}$ | $m_{\mathrm{RBhop}}\bmod 4 = 0$ | $m_{\mathrm{RBhop}}\bmod 4 = 1$ | $m_{\mathrm{RBhop}}\bmod 4 = 2$ | $m_{\mathrm{RBhop}}\bmod 4 = 3$ |
|---|---|---|---|---|
| 0 | 0 | 1 | 0 | 1 |
| 1 | 0 | 2 | 1 | 3 |

For the start RB position frequency hopping intra the frequency hopping periodicity, a symbol index $m_{\mathrm{RBhop}}$ satisfies:

$$m_{\mathrm{RB_{hop}}} = \left(\ell_{\mathrm{SRS}} \bmod S_{\mathrm{RB\_hop}}\right) \bmod R \qquad (2\text{-}55)$$

For the start RB position frequency hopping inter the frequency hopping periodicity, $m_{\mathrm{RB_{hop}}}$ may further represent a frequency hopping periodicity index, and $m_{\mathrm{RB_{hop}}}$ satisfies:

$$m_{\mathrm{RB_{hop}}} = n_{\mathrm{RB\_hop}} \qquad (2\text{-}56)$$

$n_{\mathrm{RB\_hop}}$ represents a quantity of frequency hops included in the frequency hopping periodicity. For a specific description, refer to Embodiment 1.

The following is another example scenario of the foregoing solution. $P_{\mathrm{F}} \in \{2, 4\}$, a candidate frequency hopping pattern corresponding to $k_{\mathrm{hopping}}$ is predefined, and an actual frequency hopping pattern corresponding to $k_{\mathrm{hopping}}$ is determined based on indication signaling. In an $\left(n_{\mathrm{s,f}}^{\mu}\right)^{\mathrm{th}}$ slot of an $(n_f)^{\mathrm{th}}$ frame, $k_{\mathrm{hopping}}$ corresponding to an $l^{\mathrm{th}}$ OFDM symbol corresponding to an SRS resource, or $k_{\mathrm{hopping}}$ corresponding to an $(\ell_{\mathrm{SRS}})^{\mathrm{th}}$ SRS symbol counter is determined based on Table 2-8, where $\mathrm{hop_{id}}$ is indicated by using RRC signaling, or $\mathrm{hop_{id}}$ may be indicated by using DCI or MAC CE signaling.

**Table 2-8 Start position frequency hopping parameter $k_{\mathbf{hopping}}$, and $P_{\mathbf{F}} \in \{2,4\}$**

| $\mathrm{hop_{id}}$ | $m_{\mathrm{RBhop}}\bmod 4 = 0$ | $m_{\mathrm{RBhop}}\bmod 4 = 1$ | $m_{\mathrm{RBhop}}\bmod 4 = 2$ | $m_{\mathrm{RBhop}}\bmod 4 = 3$ |
|---|---|---|---|---|
| 0 | 0 | 1 | 0 | 1 |
| 1 | 0 | 2 | 1 | 3 |
| 2 | 0 | 1 | 2 | 3 |
| 3 | 0 | 2 | 0 | 2 |
| 4 | 0 | 2 | 2 | 3 |

For the start RB position frequency hopping intra the frequency hopping periodicity, a symbol $m_{\mathrm{RBhop}}$ satisfies:

$$m_{\mathrm{RB_{hop}}} = \left(\ell_{\mathrm{SRS}} \bmod S_{\mathrm{RB\_hop}}\right) \bmod R \qquad (2\text{-}57)$$

For the start RB position frequency hopping inter the frequency hopping periodicity, $m_{\mathrm{RB_{hop}}}$ may also represent a frequency hopping periodicity index, and $m_{\mathrm{RB_{hop}}}$ satisfies:

$$m_{\mathrm{RB_{hop}}} = n_{\mathrm{RB\_hop}} \qquad (2\text{-}58)$$

$n_{RB\_hop}$ represents a quantity of frequency hops included in the frequency hopping periodicity. For a specific description, refer to Embodiment 1.

In a design, if the signaling indicates that the start RB position frequency hopping type is the start RB position frequency hopping intra the frequency hopping periodicity, a frequency hopping pattern corresponding to $k_{hopping}$ remains unchanged during the frequency hopping periodicity, and $k_{hopping}$ changes with different OFDM symbols corresponding to a subband during the frequency hopping periodicity. $k_{hopping}$ satisfies:

$$k_{hopping} = P_{RS}(\ell_{SRS}) \tag{2-59}$$

The function $P_{RS}(\ell_{SRS})$ satisfies:

$$P_{RS}(\ell_{SRS}) = P_{RS}\left(\left(\left(\ell_{SRS} \bmod S_{RB\_hop}\right) \bmod R\right) \bmod T_{cycle\_hop}\right) \tag{2-60}$$

For an initial value of the function $P_{RS}(\ell_{SRS})$, $\ell_{SRS} \in \{0, ..., T_{cycle\_hop} - 1\}$, and is associated with the frequency hopping pattern. For example, $P_F = 4$, a corresponding frequency hopping pattern is {0, 2, 1, 3}, and the initial value of the function $P_{RS}(\ell_{SRS})$ satisfies:

$$P_{RS}(0) = 0, \ P_{RS}(1) = 2, \ P_{RS}(2) = 1, \ and \ P_{RS}(3) = 3, \tag{2-61}$$

For example, $P_F = 2$, a corresponding frequency hopping pattern is {0, 1}, and the initial value of the function $P_{RS}(\ell_{SRS})$ satisfies:

$$P_{RS}(0) = 0, \ and \ P_{RS}(1) = 1 \tag{2-62}$$

In a design, if the signaling indicates that the start RB position frequency hopping type is the start RB position frequency hopping intra the frequency hopping periodicity, a frequency hopping pattern corresponding to $k_{hopping}$ remains unchanged during the frequency hopping periodicity, and $k_{hopping}$ changes with different OFDM symbols corresponding to a subband during the frequency hopping periodicity. The first frequency hopping parameter $k_{hopping}$ is determined based on the following solution.

For the periodic SRS and the semi-persistent SRS, in the $(n^{\mu}_{s,f})^{th}$ slot of the $(n_f)^{th}$ frame, $k_{hopping}$ corresponding to the $l^{th}$ OFDM symbol corresponding to the SRS resource, or $k_{hopping}$ corresponding to the $(\ell_{SRS})^{th}$ SRS symbol counter is associated with the $i^{th}$ element in the frequency hopping pattern of $k_{hopping}$, and the frequency hopping pattern element index i satisfies:

$$i = q \bmod T_{cycle\_hop} \tag{2-63}$$

$q$ represents that the OFDM symbol is a $q^{th}$ symbol corresponding to an SRS counter $n_{SRS}$, for example, q E {0,1, ... , R-1}, and $T_{cycle\_hop}$ is periodicity of a frequency hopping pattern. For the periodic SRS and the semi-persistent SRS, the SRS counter satisfies:

$$n_{SRS} = \left(\frac{N^{frame,\mu}_{slot} n_f + n^{\mu}_{s,f} - T_{offset}}{T_{SRS}}\right) \cdot \left(\frac{N^{SRS}_{symb}}{R}\right) + \left\lfloor \frac{l'}{R} \right\rfloor \tag{2-64}$$

For an aperiodic SRS, $k_{hopping}$ corresponding to an $l^{th}$ OFDM symbol of an SRS resource is associated with an $i^{th}$ element in the frequency hopping pattern of $k_{hopping}$, and the frequency hopping pattern element index $i$ satisfies the definition of Formula (2-63). $q$ represents that the OFDM symbol is a $q^{th}$ symbol corresponding to the SRS counter

$n_{SRS}$, and the SRS counter satisfies: $n_{SRS} = \lfloor l'/R \rfloor$.

For example, the first frequency hopping parameter $k_{hopping}$ may also be determined based on Table 2-7 or Table 2-8, and corresponds to start RB position frequency hopping intra the frequency hopping periodicity, and a symbol index $m_{RB_{hop}} = q$. For details about the parameter q, refer to the description in Formula (2-63).

In a design, the terminal determines the first frequency hopping parameter $k_{hopping}$ based on the symbol index $m_{RB_{hop}}$ and the partial frequency sounding coefficient $P_F$, and $k_{hopping}$ corresponding to an $m_{RB_{hop}}{}^{th}$ symbol satisfies:

$$k_{hopping} = \frac{P_F}{2}(m_{RB_{hop}} \bmod 2) + \left\lfloor \frac{m_{RB_{hop}} \bmod P_F}{2} \right\rfloor \tag{2-65}$$

For details about the parameter $m_{RB_{hop}}$, refer to the foregoing descriptions. A frequency hopping pattern corresponding to $k_{hopping}$ in Formula (2-65) satisfies the following relationship: If $P_F = 2$, the frequency hopping pattern corresponding to $k_{hopping}$ is equal to {0, 1}; or if $P_F = 4$, the frequency hopping pattern corresponding to $k_{hopping}$ is equal to {0, 2, 1, 3}; or if $P_F = 8$, the frequency hopping pattern corresponding to $k_{hopping}$ is equal to {0, 4, 1, 5, 2, 6,3,7}.

In a design, the terminal determines the first frequency hopping parameter $k_{hopping}$ based on the symbol index $m_{RB_{hop}}$ and the partial frequency sounding coefficient $P_F$, and $k_{hopping}$ corresponding to an $(m_{RB_{hop}})^{th}$ symbol index satisfies:

$$k_{hopping} = \left\lceil \frac{P_F}{2} \right\rceil (m_{RB_{hop}} \bmod 2) + \left\lfloor \frac{m_{RB_{hop}} \bmod P_F}{2} \right\rfloor \tag{2-66}$$

⌈ ⌉ represents a rounding-up function.

Formula (2-66) corresponds to a value rule of $k_{hopping}$ when $P_F$ may be an odd number. When $P_F$ is an even number, different frequency hopping patterns corresponding to $P_F$ are the same as those in Formula (2-65). When $P_F$ is an even number, for example, $P_F$=3, the frequency hopping pattern corresponding to $k_{hopping}$ is equal to {0, 2, 1}.

According to the method, the first frequency hopping parameter can be determined in a predefined manner. In the frequency hopping pattern corresponding to the first frequency hopping parameter, a frequency domain spacing between adjacent subbands is large. This effectively improves a frequency domain diversity gain of a channel, reduces scheduling complexity of the base station while reducing signaling overheads, enables different terminals to correspond to different SRS start frequency domain positions, reduces interference in SRS transmission, and improves channel estimation performance.

It should be noted that, the design solution may be applied to another scenario in addition to start RB position frequency hopping intra the frequency hopping periodicity, that is, the terminal does not perform legacy SRS frequency hopping, and for different time domain symbol positions, the terminal performs SRS transmission in a frequency domain range corresponding to a same subband. Details are not described herein again.

In a design, if the signaling indicates that start RB position frequency hopping is start RB position frequency hopping at an OFDM symbol level, or the signaling indicates that start RB position frequency hopping supports start RB position frequency hopping intra the frequency hopping periodicity and inter the frequency hopping periodicity, the first frequency hopping parameter $k_{hopping}$ changes with different OFDM symbols corresponding to a same frequency domain range or a same subband.

Start RB position frequency hopping at the OFDM symbol level further includes a scenario in which the terminal does not perform legacy SRS frequency hopping. For different time domain symbol positions, the terminal performs SRS transmission in a frequency domain range corresponding to a same subband.

The first frequency hopping parameter $k_{hopping}$ is determined based on the following solution: For the periodic SRS and the semi-persistent SRS, in the $(n_{s,f}^{\mu})^{th}$ slot of the $(n_f)^{th}$ frame, $k_{hopping}$ corresponding to the $l^{th}$ OFDM symbol corresponding to the SRS resource, or $k_{hopping}$ corresponding to the $(\ell_{SRS})^{th}$ SRS symbol counter is associated with the $i^{th}$ element in the frequency hopping pattern of $k_{hopping}$, and the frequency hopping pattern element index i satisfies:

$$i = \left( \left\lfloor \frac{n_{SRS}}{T_{RB\_hop}} \right\rfloor R + q \right) \bmod T_{cycle\_hop} \tag{2-67}$$

q represents that the OFDM symbol is a $q^{th}$ symbol corresponding to an SRS counter $n_{SRS}$, for example, q E {0,1, ... , R-1}, and $T_{cycle\_hop}$ is periodicity of a frequency hopping pattern. For the periodic SRS and the semi-persistent SRS, the SRS counter $n_{SRS}$ satisfies the definition of Formula (2-64).

For an aperiodic SRS, $k_{hopping}$ corresponding to the $l^{th}$ OFDM symbol of the SRS resource is associated with the $i^{th}$ element in the frequency hopping pattern of $k_{hopping}$, and the frequency hopping pattern element index i satisfies the definition of Formula (2-63). q represents that the OFDM symbol is a $q^{th}$ symbol corresponding to an SRS counter $n_{SRS}$, and the SRS counter satisfies: $n_{SRS} = \left\lfloor l'/R \right\rfloor$ .

The following is an example scenario of the foregoing solution. The partial frequency sounding coefficient $P_F \in \{2, 4\}$, the frequency hopping pattern corresponding to the first frequency hopping parameter $k_{hopping}$ is determined in the predefined manner. In the $(n_{s,f}^{\mu})^{th}$ slot of the $(n_f)^{th}$ frame, $k_{hopping}$ corresponding to the $l^{th}$ OFDM symbol of the SRS resource is determined based on Table 2-7. For joint start RB position frequency hopping intra the frequency hopping periodicity and inter the frequency hopping periodicity, or start RB position frequency hopping at the OFDM symbol level, a symbol index $m_{RB_{hop}}$ satisfies:

$$m_{RB_{hop}} = \left\lfloor \frac{n_{SRS}}{T_{RB\_hop}} \right\rfloor R + q.$$

The following is another example scenario of the foregoing solution. $P_F \in \{2,4\}$, a candidate frequency hopping pattern corresponding to $k_{hopping}$ is predefined, and an actual frequency hopping pattern corresponding to $k_{hopping}$ is determined based on indication signaling. In the $(n_{s,f}^{\mu})^{th}$ slot of the $(n_f)^{th}$ frame, $k_{hopping}$ corresponding to the $l^{th}$ OFDM symbol corresponding to the SRS resource is determined based on Table 2-8, where $hop_{id}$ is indicated by using RRC signaling, or $hop_{id}$ may be indicated by using DCI or MAC CE signaling. For joint start RB position frequency hopping intra the frequency hopping periodicity and inter the frequency hopping periodicity, or start RB position frequency hopping at the OFDM symbol level, a symbol index $m_{RB_{hop}}$ satisfies:

$$m_{RB_{hop}} = \left\lfloor \frac{n_{SRS}}{T_{RB\_hop}} \right\rfloor R + q.$$

In a design, the terminal determines the first frequency hopping parameter $k_{hopping}$ based on the symbol index $m_{RB_{hop}}$ and the partial frequency sounding coefficient $P_F$, and $k_{hopping}$ corresponding to an $m_{RB_{hop}}^{th}$ symbol satisfies:

$$k_{hopping} = \frac{P_F}{2}(m_{RB_{hop}} \bmod 2) + \left\lfloor \frac{m_{RB_{hop}} \bmod P_F}{2} \right\rfloor \tag{2-68}$$

For details about the parameter $m_{RB_{hop}}$, refer to the foregoing descriptions. The frequency hopping pattern corresponding to $k_{hopping}$ in Formula (2-68) satisfies the following relationship: If $P_F = 2$, the frequency hopping pattern corresponding to $k_{hopping}$ is equal to {0, 1}; or if $P_F = 4$, the frequency hopping pattern corresponding to $k_{hopping}$ is equal to {0, 2, 1, 3}; or if $P_F = 8$, the frequency hopping pattern corresponding to $k_{hopping}$ is equal to {0, 4, 1, 5, 2, 6, 3, 7}

In a design, the terminal determines the first frequency hopping parameter $k_{hopping}$ based on the symbol index $m_{RB_{hop}}$ and the partial frequency sounding coefficient $P_F$, and $k_{hopping}$ corresponding to an $(m_{RB_{hop}})^{th}$ symbol index satisfies:

$$k_{hopping} = \left\lceil \frac{P_F}{2} \right\rceil (m_{RB_{hop}} \bmod 2) + \left\lfloor \frac{m_{RB_{hop}} \bmod P_F}{2} \right\rfloor \tag{2-69}$$

⌈ ⌉ represents a rounding-up function.

Formula (2-69) corresponds to a value rule of $k_{hopping}$ when $P_F$ may be an odd number. When $P_F$ is an even number, different frequency hopping patterns corresponding to $P_F$ are the same as those in Formula (2-68). When $P_F$ is an even number, for example, $P_F$=3, the frequency hopping pattern corresponding to $k_{hopping}$ is equal to {0, 2, 1}.

According to the method, the first frequency hopping parameter can be determined in a predefined manner. In the frequency hopping pattern corresponding to the first frequency hopping parameter, a frequency domain spacing between adjacent subbands is large. This effectively improves a frequency domain diversity gain of a channel, reduces scheduling complexity of the base station while reducing signaling overheads, enables different terminals to correspond to different SRS start frequency domain positions, reduces interference in SRS transmission, and improves channel estimation performance.

In the solution of this application, start RB position frequency hopping in the legacy frequency hopping periodicity and start RB position frequency hopping at the OFDM symbol level are further considered. A design mechanism is used to determine $k_{hopping}$ corresponding to different SRS transmission positions, $k_{hopping}$ is associated with the SRS counter. This can simplify implementation complexity of determining $k_{hopping}$ by LTE and the base station, effectively reduces scheduling complexity of the base station, prevents different UE from sounding a channel status at a same frequency domain position, reduces interference between users, and improves channel estimation precision.

**Embodiment 4**

In the 3GPP RAN1 #106, a corresponding start RB position index in a start RB position frequency hopping scenario is defined to satisfy:

$$N_{\text{offset}} = \frac{S_F}{P_F} m_{\text{SRS},B_{\text{SRS}}}$$

, where $k_F \in \{0, ..., P_F\text{-}1\}$, $m_{\text{SRS},B_{\text{SRS}}}$ represents a configured bandwidth of an SRS, $P_F$ represents a partial frequency sounding coefficient, and a corresponding SRS subband index satisfies:

$$S_F = \left(k_F + k_{\text{hopping}}\right) \bmod P_F \qquad (2\text{-}70)$$

For example, if start RB position frequency hopping is disabled, correspondingly, $k_{hopping}$ = 0 is always true.

Currently, there is no conclusion for a partial frequency sounding bandwidth. If the partial frequency sounding bandwidth is equal to $\frac{1}{P_F} m_{\text{SRS},B_{\text{SRS}}}$ , a correspondence between the RB position index and the SRS subband index may be determined based on Formula (2-68). For another possible solution, that is, if $\frac{1}{P_F} m_{\text{SRS},B_{\text{SRS}}}$ is an integer, or is an integer greater than or equal to 4, the partial frequency sounding bandwidth $m_{\text{SRS},B_{\text{SRS}}}^{P_F}$ is defined to satisfy:

$$m_{\text{SRS},B_{\text{SRS}}}^{P_F} = f(\frac{1}{P_F} m_{\text{SRS},B_{\text{SRS}}})$$

. $m_{\text{SRS},B_{\text{SRS}}}$ represents the configured bandwidth of the SRS, $P_F$ represents the partial frequency sounding coefficient, and $m_{\text{SRS},B_{\text{SRS}}}^{P_F}$ is an integer multiple of 4. $f(n)$ is a function corresponding to $n$. For example, $f(n)$ represents an integer with a largest value in integers that are not greater than $n$ and are integral multiples of 4; or $f(n)$ represents an integer with a smallest value in integers that are not less than $n$ and are integral multiples of 4; or $f(n)$ represents an integer that is in integers that are integral multiples of 4, and that has a smallest absolute difference from $n$.

If partial frequency sounding needs to be limited to an integer multiple of 4 by using a function operation, the foregoing defined start RB position index may be used to reduce channel estimation precision, or a problem of repeated sounding at a same frequency domain position may occur. The following describes the foregoing problems by using an example in which the configured bandwidth of SRS $m_{\text{SRS},B_{\text{SRS}}}$=68 and the partial frequency sounding coefficient $P_F$=4.

In a possible implementation, corresponding partial frequency sounding bandwidth $m_{\text{SRS},B_{\text{SRS}}}^{P_F}$=20 , and based on the foregoing formula, a start RB position index corresponding to partial frequency sounding satisfies:

$$N_{\text{offset}} = 17 S_F \qquad (2\text{-}71)$$

If the terminal determines, based on Formula (2-71), the start RB index corresponding to the SRS, and sends an SRS based on the partial frequency sounding bandwidth $m^{P_F}_{SRS,B_{SRS}} = 20$, repeated sounding of the SRS at the same RB position is caused, and channel estimation overheads are increased.

In a possible implementation, corresponding partial frequency sounding bandwidth $m^{P_F}_{SRS,B_{SRS}} = 16$, and if the terminal determines, based on Formula (2-71), the start RB index corresponding to the SRS, and sends the SRS based on the partial frequency sounding bandwidth $m^{P_F}_{SRS,B_{SRS}} = 16$, the terminal cannot perform SRS transmission at some RB positions. This reduces channel estimation precision.

To resolve the foregoing problems, in Embodiment 4, in the scenario in which the partial frequency sounding bandwidth is limited to an integer multiple of 4, the correspondence between the subband index and the start RB position index corresponding to the SRS is designed. A specific solution is described as follows.

Step 1: A terminal determines, based on a first condition, a start resource block RB position corresponding to the SRS. A ratio of the first bandwidth corresponding to the SRS to 4 is a non-integer.

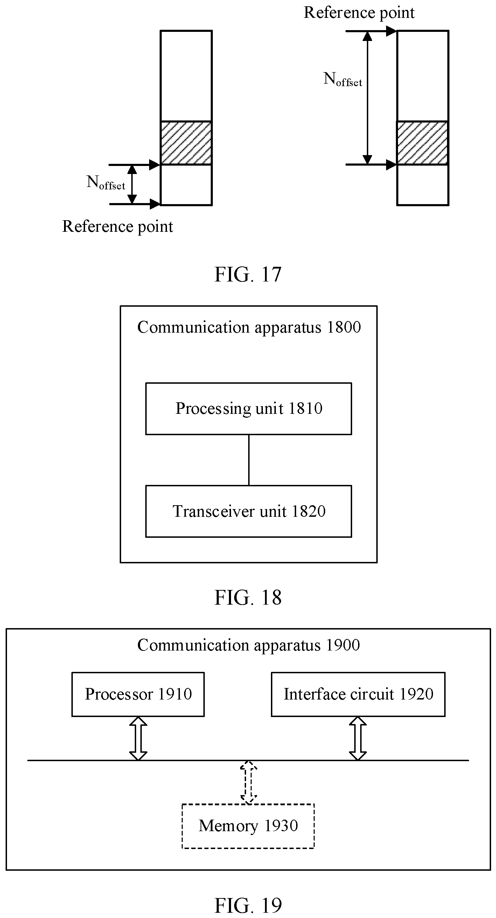

For example, the start RB position corresponds to a frequency domain position of an RB, in a configured bandwidth $m_{SRS,B_{SRS}}$ of the SRS, that is separated by $N_{offset}$ RBs from a smallest RB position of the configured bandwidth $m_{SRS,B_{SRS}}$ of the SRS (the smallest RB position corresponds to a smallest frequency domain position of the configured bandwidth of SRS); or the start RB position corresponds to a position of an RB, in a configured bandwidth $m_{SRS,B_{SRS}}$ of the SRS, that is separated by $N_{offset}$ RBs from a largest RB position of the configured bandwidth $m_{SRS,B_{SRS}}$ of the SRS (the largest RB position corresponds to a largest frequency domain position of the configured bandwidth of the SRS). Refer to FIG. 17. Alternatively, the start RB position corresponds to a specific position in the configured bandwidth $m_{SRS,B_{SRS}}$ of the SRS.

For example, the first condition may be configured in the terminal and a base station in a protocol-predefined manner; or the first condition may be determined in a negotiation manner; or the first condition may be preconfigured in the terminal and a base station by another device; or the first condition may be determined by a transmitting device, and then notified to a receiving device by using signaling. One of the terminal and the base station is a transmitting device, and the other is a receiving device.

The following describes a correspondence between the start RB position index and the subband index by using an example in which the configured bandwidth of the SRS $m_{SRS,B_{SRS}} = 68$ and the partial frequency sounding coefficient $P_F = 4$. The first condition includes the following several possible implementations.

**Implementation 1**

For a start RB position frequency hopping scenario of partial frequency sounding, an index of the start RB corresponding to the SRS satisfies the first condition, and the first condition satisfies:

$$N_{offset} = S_F f\left(\frac{1}{P_F} m_{SRS,B_{SRS}}\right) \tag{2-72}$$

$N_{offset}$ represents the start RB position index, $k_F \in \{0, ..., P_F -1\}$, $P_F$ represents the partial frequency sounding coefficient, and $f\left(\frac{1}{P_F} m_{SRS,B_{SRS}}\right)$ represents the partial frequency sounding bandwidth corresponding to the SRS. $S_F$ corresponds to the SRS subband index, and satisfies:

$$S_F = \left(k_F + k_{hopping}\right) \bmod P_F \tag{2-73}$$

For example, the partial frequency sounding bandwidth corresponding to the SRS may correspond to a quantity of RBs, or may correspond to a frequency bandwidth, for example, Hz or MHz, or may be a quantity of subcarriers. This is not limited in this application.

$f(n)$ is a function. For example, $f(n) = m$, where $m$ belongs to an integer set that satisfies a condition that is not greater than $n$ and is equal to an integer multiple of 4, and $m$ is equal to an element whose value is largest in the set; or $f(n) = m$, where $m$ belongs to an integer set that satisfies a condition that is not less than $n$ and is equal to an integer multiple of 4, and $m$ is equal to an element whose value is smallest in the set; or $f(n) = m$, where m belongs to an integer set that satisfies a condition that is equal to an integer multiple of 4, and $m$ is equal to an element that is in the set and that has a smallest absolute difference from n.

**Implementation 2**

For the start RB position of the partial frequency sounding bandwidth, the start RB index of the start RB position satisfies the first condition, and the first condition satisfies:

$$N_{\text{offset}} = S_F f\left(\frac{1}{P_F} m_{\text{SRS},B_{\text{SRS}}}\right) + m_{\text{offset}}$$

(2-74)

$m_{\text{offset}}$ is an RB offset relative to a frequency domain start position of the configured bandwidth $m_{\text{SRS},B_{\text{SRS}}}$ of the SRS. $f(n)$ is a function. For example, $f(n) = m$, where m belongs to an integer set that satisfies a condition that is not greater than $n$ and is equal to an integer multiple of 4, and $m$ is equal to an element whose value is largest in the set; or $f(n) = m$, where m belongs to an integer set that satisfies a condition that is not less than $n$ and is equal to an integer multiple of 4, and $m$ is equal to an element whose value is smallest in the set; or $f(n) = m$, where m belongs to an integer set that satisfies a condition that is equal to an integer multiple of 4, and $m$ is equal to an element that is in the set and that has a smallest absolute difference from n.
$S_F$ corresponds to the SRS subband index, and satisfies the relationship shown in Formula (2-73).

**Implementation 3**

For the start RB position of the partial frequency sounding bandwidth, the start RB index of the start RB position satisfies the first condition, and the first condition satisfies:

$$N_{\text{offset}} = \frac{S_F}{P_F} m_{\text{SRS},B_{\text{SRS}}}$$

(2-75)

The corresponding partial frequency sounding bandwidth $m_{\text{SRS},B_{\text{SRS}}}^{P_F}$ satisfies:

$$m_{\text{SRS},B_{\text{SRS}}}^{P_F} = f\left(\frac{1}{P_F} m_{\text{SRS},B_{\text{SRS}}}\right)$$

(2-76)

$f(n) = m$, where $m$ belongs to an integer set that satisfies a condition that is not greater than $n$ and is equal to an integer multiple of 4, and $m$ is equal to an element whose value is largest in the set; and $S_F$ corresponds to the SRS subband index, and satisfies the relationship shown in Formula (2-44).

**Implementation 4**

For the start RB position of the partial frequency sounding bandwidth, the start RB index of the start RB position satisfies the first condition, and the first condition satisfies:

$$N_{\text{offset}} = \sum_{i=0}^{S_F} f_i\left(\frac{1}{P_F} m_{\text{SRS},B_{\text{SRS}}}\right)$$

(2-77)

A corresponding partial frequency sounding bandwidth $m_{\text{SRS},B_{\text{SRS}}}^{P_{F,i}}$ on an $i$th subband satisfies:

$$m_{\text{SRS},B_{\text{SRS}}}^{P_{F,i}} = f_i\left(\frac{1}{P_F} m_{\text{SRS},B_{\text{SRS}}}\right)$$

(2-78)

$m_{\text{SRS},B_{\text{SRS}}}^{P_{\text{F}},i}$ is an integer multiple of 4. In a possible implementation, a relationship between the partial frequency sounding bandwidth $m_{\text{SRS},B_{\text{SRS}}}^{P_{\text{F}},i}$ corresponding to the $i^{\text{th}}$ subband and a partial frequency sounding bandwidth $m_{\text{SRS},B_{\text{SRS}}}^{P_{\text{F}},j}$ corresponding to a $j^{\text{th}}$ subband satisfies:

$$m_{\text{SRS},B_{\text{SRS}}}^{P_{\text{F}},i} \neq m_{\text{SRS},B_{\text{SRS}}}^{P_{\text{F}},j} \quad (i \neq j) \qquad (2\text{-}79)$$

In another possible implementation, a relationship between the partial frequency sounding bandwidth $m_{\text{SRS},B_{\text{SRS}}}^{P_{\text{F}},i}$ corresponding to an $i^{\text{th}}$ subband and a partial frequency sounding bandwidth $m_{\text{SRS},B_{\text{SRS}}}^{P_{\text{F}},j}$ corresponding to a $j^{\text{th}}$ subband satisfies:

$$m_{\text{SRS},B_{\text{SRS}}}^{P_{\text{F}},i} = m_{\text{SRS},B_{\text{SRS}}}^{P_{\text{F}},j} \quad (i \neq j) \qquad (2\text{-}80)$$

$S_F$ corresponds to the SRS subband index, and satisfies the relationship shown in Formula (2-73).

$fi\,(n)$ is a function. For example, $f(n)$ = m, where m belongs to an integer set that satisfies a condition that is not greater than $n$ and is equal to an integer multiple of 4, and $m$ is equal to an element whose value is largest in the set; or $f(n)$ = m, where $m$ belongs to an integer set that satisfies a condition that is not less than $n$ and is equal to an integer multiple of 4, and $m$ is equal to an element whose value is smallest in the set; or $f(n)$ = $m,$ where m belongs to an integer set that satisfies a condition that is equal to an integer multiple of 4, and $m$ is equal to an element that is in the set and that has a smallest absolute difference from n.

In this embodiment, the first condition is introduced, and a correspondence between the first frequency hopping parameter $k_{\text{hopping}}$ and the start RB position is defined when the SRS partial frequency sounding bandwidth is equal to an integer multiple of 4. This can avoid a case in which the terminal and the base station have different understandings of the start frequency domain position corresponding to the SRS, avoid a case in which SRSs in frequency domain ranges corresponding to same RBs are repeatedly sounded or SRSs in frequency domain ranges corresponding to some RBs cannot be sounded, ensure that the SRSs are appropriately sent on a terminal side and received on a network side, and effectively improve SRS measurement precision and system performance.

It may be understood that, to implement functions in the foregoing methods, the base station and the terminal include corresponding hardware structures and/or software modules for performing the functions. A person skilled in the art should be easily aware that, with reference with units and method steps in the examples described in this application, this application can be implemented by hardware or a combination of hardware and computer software. Whether a function is performed through hardware or hardware driven by computer software depends on particular application scenarios and design constraints of the technical solutions.

FIG. 18 and FIG. 19 each are a schematic diagram of a possible structure of a communication apparatus according to this application. These communication apparatuses may be configured to implement functions of the terminal or the base station in the foregoing methods, and therefore can also implement beneficial effect of the foregoing methods. In this application, the communication apparatus may be one of the terminals 120a to 120j shown in FIG. 1, or may be the base station 110a or 110b shown in FIG. 1, or may be a module (for example, a chip) used in a terminal or a base station.

As shown in FIG. 18, the communication apparatus 1800 includes a processing unit 1810 and a transceiver unit 1820. The communication apparatus 1800 is configured to implement functions of the terminal or the base station in the method shown in FIG. 9, FIG. 11a, FIG. 12, or FIG. 13.

When the communication apparatus 1800 is configured to implement the functions of the terminal in the method shown in FIG. 9, FIG. 11a, FIG. 12, or FIG. 13, the processing unit 1810 is configured to: determine a frequency hopping periodicity index of the terminal based on a first time unit, where the first time unit is associated with a time unit corresponding to a sounding reference signal SRS, and determine a first frequency hopping parameter based on the frequency hopping periodicity index of the terminal and a frequency hopping pattern, where the first frequency hopping parameter indicates a subband-level offset of the SRS within a configuration bandwidth range of the SRS, and the frequency hopping pattern is associated with the first frequency hopping parameter; and the transceiver unit 1820 is configured to send the SRS to a base station based on the first frequency hopping parameter.

When the communication apparatus 1800 is configured to implement the function of the base station in the method shown in FIG. 9, FIG. 11a, FIG. 12, or FIG. 13, the processing unit 1810 is configured to: determine a frequency hopping periodicity index of a terminal based on a first time unit, where the first time unit is associated with a time unit corresponding to a sounding reference channel SRS, and determine a first frequency hopping parameter based on the frequency hopping periodicity index of the terminal and a frequency hopping pattern, where the first frequency hopping parameter indicates a subband-level offset of the SRS within a configuration bandwidth range of the SRS, and the frequency hopping pattern is associated with the first frequency hopping parameter; and the transceiver unit 1820 is configured to receive, based on the first frequency hopping parameter, the SRS corresponding to the terminal.

For more detailed descriptions of the processing unit 1810 and the transceiver unit 1820, directly refer to related descriptions in the method shown in FIG. 9, FIG. 11a, FIG. 12, or FIG. 13. Details are not described herein again.

As shown in FIG. 19, the communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, or store input data required by the processor 1910 to run the instructions, or store data generated after the processor 1910 runs the instructions.

When the communication apparatus 1900 is configured to implement the foregoing method, the processor 1910 is configured to implement a function of the processing unit 1810, and the interface circuit 1920 is configured to implement a function of the transceiver unit 1820.

When the communication apparatus is a chip used in a terminal, the chip in the terminal implements a function of the terminal in the foregoing method. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any regular processor or the like.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the methods in this application may be implemented by software, hardware, firmware, or any combination thereof. When software is used to implement embodiments, all or some of embodiments may be implemented in a form of a computer program product. The computer program product includes one or more computer programs and instructions. When the computer programs or instructions are loaded and executed on the computer, the procedure or functions according to this application are completely or partially generated. The computer may be a general-purpose computer, a dedicated computer, a computer network, a network device, user equipment, a core network device, OAM, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc;

or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. The sequence numbers of the foregoing processes do not mean execution sequences. The execution sequences of the processes should be determined based on functions and internal logic of the processes.

## Claims

1. A communication method, comprising:

   determining a frequency hopping periodicity index of a terminal based on a first time unit, wherein the first time unit is associated with a time unit corresponding to a sounding reference signal SRS;
   determining a first frequency hopping parameter based on the frequency hopping periodicity index of the terminal and a frequency hopping pattern, wherein the first frequency hopping parameter indicates a subband-level offset of the SRS within a range of a configured bandwidth of the SRS, and the frequency hopping pattern is associated with the first frequency hopping parameter; and
   sending the SRS to a network device based on the first frequency hopping parameter.

2. The method according to claim 1, wherein the determining a frequency hopping periodicity index of a terminal based on a first time unit comprises:
   determining the frequency hopping periodicity index of the terminal based on an SRS counter and a frequency hopping periodicity, wherein the SRS counter is associated with the first time unit.

3. The method according to claim 2, wherein the determining the frequency hopping periodicity index of the terminal based on an SRS counter and a frequency hopping periodicity satisfies:

$$n_{\mathrm{RB\_hop}} = \left\lfloor \frac{n_{\mathrm{SRS}}}{T_{\mathrm{RB\_hop}}} \right\rfloor,$$

   wherein
   $n_{\mathrm{RB\_hop}}$ represents the frequency hopping periodicity index of the terminal, $n_{\mathrm{SRS}}$ represents the SRS counter, $T_{\mathrm{RB\_hop}}$ represents the frequency hopping periodicity, and ⌊ ⌋ represents a rounding-down function.

4. The method according to any one of claims 1 to 3, wherein the frequency hopping periodicity is a periodicity for sounding an SRS frequency hopping bandwidth, and the frequency hopping periodicity satisfies:

$$T_{\mathrm{RB\_hop}} = \frac{m_{\mathrm{SRS},b_{\mathrm{hop}}}}{m_{\mathrm{SRS},B_{\mathrm{SRS}}}},$$

   wherein
   $T_{\mathrm{RB\_hop}}$ represents the frequency hopping periodicity, $m_{\mathrm{SRS},b_{\mathrm{hop}}}$ represents the SRS frequency hopping bandwidth, and $m_{\mathrm{SRS},B_{\mathrm{SRS}}}$ represents the configured bandwidth of the SRS.

**5.** The method according to any one of claims 1 to 4, wherein the determining a first frequency hopping parameter based on the frequency hopping periodicity index of the terminal and a frequency hopping pattern comprises: determining the first frequency hopping parameter based on a modulo operation result between the frequency hopping periodicity index and a periodicity of the frequency hopping pattern, wherein the periodicity of the frequency hopping pattern is equal to a quantity of elements comprised in the frequency hopping pattern.

**6.** The method according to any one of claims 1 to 4, wherein the determining a first frequency hopping parameter based on the frequency hopping periodicity index of the terminal and a frequency hopping pattern satisfies:

$$k_{\text{hopping}}(n_{\text{RB\_hop}}) = \frac{P_{\text{F}}}{2}(n_{\text{RB\_hop}} \bmod 2) + \left\lfloor \frac{n_{\text{RB\_hop}} \bmod P_{\text{F}}}{2} \right\rfloor,$$

wherein
$n_{\text{RB\_hop}}$ represents the frequency hopping periodicity index of the terminal, $k_{\text{hopping}}(n_{\text{RB\_hop}})$ represents the first frequency hopping parameter, $P_{\text{F}}$ represents a partial frequency sounding coefficient, $\lfloor \ \rfloor$ represents a rounding-down function, and mod represents a modulo operation.

**7.** The method according to any one of claims 1 to 6, wherein the sending the SRS to a network device based on the first frequency hopping parameter comprises:

determining a candidate subband index of the SRS based on the first frequency hopping parameter;
determining a start RB position of the SRS based on the candidate subband index and a first subband index, wherein the first subband corresponds to a frequency domain range in which the terminal is not supported to perform SRS transmission; and
sending the SRS to the network device based on the start RB position of the SRS.

**8.** The method according to claim 7, wherein when the candidate subband index and the first subband index correspond to a same frequency domain range, a start RB position index of the SRS satisfies:

$$N_{\text{offset}} = \frac{(k_{\text{F}} + 2k_{\text{hopping}}) \bmod P_{\text{F}}}{P_{\text{F}}} m_{\text{SRS},B_{\text{SRS}}},$$

wherein
$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS},B_{\text{SRS}}}$ represents the configured bandwidth of the SRS.

**9.** The method according to claim 7 or 8, wherein when the candidate subband index and the first subband index correspond to different frequency domain ranges, the start RB position index of the SRS satisfies:

$$N_{\text{offset}} = \frac{(k_{\text{F}} + k_{\text{hopping}}) \bmod P_{\text{F}}}{P_{\text{F}}} m_{\text{SRS},B_{\text{SRS}}},$$

wherein
$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS},B_{\text{SRS}}}$ represents the configured bandwidth of the SRS.

**10.** The method according to any one of claims 1 to 9, further comprising:

receiving first indication information from the network device; and
determining, in at least one preconfigured or predefined frequency hopping pattern, a frequency hopping pattern indicated by the first indication information.

**11.** The method according to any one of claims 1 to 10, wherein the periodicity of the frequency hopping pattern is equal to an integer multiple of a partial frequency sounding coefficient corresponding to the terminal, or the periodicity of the frequency hopping pattern is equal to a largest value in a plurality of candidate partial frequency sounding coefficients, or the periodicity of the frequency hopping pattern is equal to a least common multiple of a plurality of candidate partial frequency sounding coefficients.

12. A communication method, comprising:

determining a frequency hopping periodicity index of a terminal based on a first time unit, wherein the first time unit is associated with a time unit corresponding to a sounding reference channel SRS;
determining a first frequency hopping parameter based on the frequency hopping periodicity index of the terminal and a frequency hopping pattern, wherein the first frequency hopping parameter indicates a subband-level offset of the SRS within a range of a configured bandwidth of the SRS, and the frequency hopping pattern is associated with the first frequency hopping parameter; and
receiving, based on the first frequency hopping parameter, the SRS corresponding to the terminal.

13. The method according to claim 12, wherein the determining a frequency hopping periodicity index of a terminal based on a first time unit comprises:
determining the frequency hopping periodicity index of the terminal based on an SRS counter and a frequency hopping periodicity, wherein the SRS counter is associated with the first time unit.

14. The method according to claim 13, wherein the determining the frequency hopping periodicity index of the terminal based on an SRS counter and a frequency hopping periodicity satisfies:

$$n_{\text{RB\_hop}} = \left\lfloor \frac{n_{\text{SRS}}}{T_{\text{RB\_hop}}} \right\rfloor,$$

wherein
$n_{\text{RB\_hop}}$ represents the frequency hopping periodicity index of the terminal, $n_{\text{SRS}}$ represents the SRS counter, $T_{\text{RB\_hop}}$ represents the frequency hopping periodicity, and $\lfloor \ \rfloor$ represents a rounding-down function.

15. The method according to any one of claims 12 to 14, wherein the frequency hopping periodicity is a periodicity for sounding an SRS frequency hopping bandwidth, and the frequency hopping periodicity satisfies:

$$T_{\text{RB\_hop}} = \frac{m_{\text{SRS},b_{\text{hop}}}}{m_{\text{SRS},B_{\text{SRS}}}},$$

wherein
$T_{\text{RB\_hop}}$ represents the frequency hopping periodicity, $m_{\text{SRS},b_{\text{hop}}}$ represents the SRS frequency hopping bandwidth, and $m_{\text{SRS},B_{\text{SRS}}}$ represents the configured bandwidth of the SRS.

16. The method according to any one of claims 12 to 15, wherein the determining a first frequency hopping parameter based on the frequency hopping periodicity index of the terminal and a frequency hopping pattern comprises:
determining the first frequency hopping parameter based on a modulo operation result between the frequency hopping periodicity index and a periodicity of the frequency hopping pattern, wherein the periodicity of the frequency hopping pattern is equal to a quantity of elements comprised in the frequency hopping pattern.

17. The method according to any one of claims 12 to 15, wherein the determining a first frequency hopping parameter based on the frequency hopping periodicity index of the terminal and a frequency hopping pattern satisfies:

$$k_{\text{hopping}}(n_{\text{RB\_hop}}) = \frac{P_{\text{F}}}{2}(n_{\text{RB\_hop}} \ \text{mod} \ 2) + \left\lfloor \frac{n_{\text{RB\_hop}} \ \text{mod} \ P_{\text{F}}}{2} \right\rfloor,$$

wherein
$n_{\text{RB\_hop}}$ represents the frequency hopping periodicity index of the terminal, $k_{\text{hopping}}(n_{\text{RB\_hop}})$ represents the first frequency hopping parameter, $P_{\text{F}}$ represents a partial frequency sounding coefficient, $\lfloor \ \rfloor$ represents a rounding-

down function, and mod represents a modulo operation.

18. The method according to any one of claims 12 to 17, wherein the receiving, based on the first frequency hopping parameter, the SRS from the terminal comprises:

determining a candidate subband index of the SRS based on the first frequency hopping parameter;
determining a start RB position of the SRS based on the candidate subband index and a first subband index, wherein the first subband corresponds to a frequency domain range in which the terminal is not supported to perform SRS transmission; and
receiving the SRS from the terminal based on the start RB position of the SRS.

19. The method according to claim 18, wherein when the candidate subband index and the first subband index correspond to a same frequency domain range, a start RB position index of the SRS satisfies:

$$N_{\text{offset}} = \frac{(k_{\text{F}}+2k_{\text{hopping}}) \bmod P_{\text{F}}}{P_{\text{F}}} m_{\text{SRS},B_{\text{SRS}}},$$

wherein

$N_{\text{offset}}$ represents the start RB position index of the SRS, $k_{\text{F}}$ represents a start subband index, $k_{\text{hopping}}$ represents the first frequency hopping parameter, $P_{\text{F}}$ represents the partial frequency sounding coefficient, and $m_{\text{SRS},B_{\text{SRS}}}$ represents the configured bandwidth of the SRS.

20. The method according to claim 18 or 19, wherein when the candidate subband index and the first subband index correspond to different frequency domain ranges, the start RB position index of the SRS satisfies:

$$N_{\text{offset}} = \frac{(k_{\text{F}}+k_{\text{hopping}}) \bmod P_{\text{F}}}{P_{\text{F}}} m_{\text{SRS},B_{\text{SRS}}},$$

wherein
$N_{\text{offset}}$ represents the start RB position index of the SRS, $k_{\text{F}}$ represents a subband index, $k_{\text{hopping}}$ represents the first frequency hopping parameter, $P_{\text{F}}$ represents the partial frequency sounding coefficient, and $m_{\text{SRS},B_{\text{SRS}}}$ represents the configured bandwidth of the SRS.

21. The method according to any one of claims 12 to 20, further comprising:

sending first indication information to the terminal, wherein
the first indication information indicates, in at least one preconfigured or predefined frequency hopping pattern, a frequency hopping pattern to be used currently by the terminal.

22. The method according to any one of claims 12 to 21, wherein the periodicity of the frequency hopping pattern is equal to an integer multiple of a partial frequency sounding coefficient to be used currently by the terminal, the periodicity of the frequency hopping pattern is equal to a largest value in a plurality of candidate partial frequency sounding coefficients, or the periodicity of the frequency hopping pattern is equal to a least common multiple of a plurality of candidate partial frequency sounding coefficients.

23. A communication apparatus, comprising a unit configured to implement the method according to any one of claims 1 to 11.

24. A communication apparatus, comprising a processor and a memory, wherein the processor is coupled to the memory, and the processor is configured to implement the method according to any one of claims 1 to 11.

25. A communication apparatus, comprising a unit configured to implement the method according to any one of claims 12 to 22.

26. A communication apparatus, comprising a processor and a memory, wherein the processor is coupled to the memory, and the processor is configured to implement the method according to any one of claims 12 to 22.

27. A communication system, comprising the communication apparatus according to claim 23 or 24 and the communication apparatus according to claim 25 or 26.

28. A computer-readable storage medium, wherein the computer-readable storage medium stores instructions, and when the instructions are run on a computer, the computer is enabled to perform the method according to any one of claims 1 to 11, or the method according to any one of claims 12 to 22.

29. A computer program product, comprising instructions, wherein when the instructions are run on a computer, the computer is enabled to perform the method according to any one of claims 1 to 11 or the method according to any one of claims 12 to 22.

FIG. 1

RB with SRS transmission

24 RBs

OFDM symbol

Frequency hopping periodicity

Legacy (legacy) SRS

FIG. 2

RB with SRS transmission

24 RBs

OFDM symbol

Frequency hopping periodicity

Partial (Partial) SRS

FIG. 3

FIG. 4

FIG. 5a

OFDM symbol

Legacy Legacy
frequency hopping
periodicity

$C_{SRS}=24$, $B_{SRS}=2$, and $b_{hop}=0$

Legacy Legacy
frequency hopping
periodicity

$C_{SRS}=24$, $B_{SRS}=2$, and $b_{hop}=1$

FIG. 5b

EP 4 412 163 A1

Configured
bandwidth of an SRS

| |
|---|
| RB 23 |
| RB 22 |
| ⋮ |
| RB 1 |
| RB 0 |

A subband 0 includes the RB 0 to the RB 5,
and a start RB index is 0;
a subband 1 includes the RB 6 to the RB 11,
and a start RB index is 6;
a subband 2 includes the RB 12 to the RB 17,
and a start RB index is 12; and
a subband 3 includes the RB 18 to the RB 23,
and a start RB index is 18.

FIG. 6

UE 1: $k_F$=0, {0, 2, 1, 3, **0**, 2, 1, 3, 0}

UE 2: $k_F$=1, {1, 3, 2, **0**, 1, 3, 2, 0}

First frequency hopping periodicity

First frequency
hopping periodicity

▨ UE 1

▦ UE 2

$k_F$=0

$k_F$=1

Collision

Frequency hopping
periodicity

FIG. 7

10 ms

Frame frame | 0 | 1 | 2 | 3 | — · — · — · — ·· |

$T_{offset}=3$

$T_{SRS}=35$

| 37 | 38 | 39 | 0 | 1 | 2 | 3 | 4 | 5 | 6 | — · — · — · | 37 | 38 | 39 | Slot slot |

0.25 ms

First slot for SRS
transmission after
a configuration
takes effect

RRC
configuration
information

| 0 | 1 | 2 | 3 | 4 | 5 | 6 | 7 | 8 | 9 | 10 | 11 | 12 | 13 |

One slot includes 14 symbols

FIG. 8

Terminal

Base station

900: The terminal reports, to the base
station, whether the terminal has a
capability of supporting start RB
position frequency hopping

901: Indication information indicating
the terminal to enable (enable) start RB
position frequency hopping

902: The terminal determines a
frequency hopping periodicity
index of the terminal based on a
first time unit

903: The terminal determines a
first frequency hopping parameter
based on the frequency hopping
periodicity index of the terminal
and a frequency hopping pattern

904: The terminal sends an SRS to the
base station based on the first frequency
hopping parameter

FIG. 9

FIG. 10

UE 1: $k_F$=0, {0, 2, 1, 3, 0, 2, 1, 3, 0}

UE 2: $k_F$=1, {3, 2, 0, 1, 3, 2, 0, 1}

First frequency hopping periodicity

First frequency hopping periodicity

FIG. 11a

FIG. 11b

1200: The terminal reports, to the base station, whether the terminal has a capability of supporting start RB position frequency hopping

1201: Indication information indicating that the indication information indicates an index of a subband on which the terminal can perform start RB position frequency hopping

1202: The terminal determines a start RB position for SRS transmission, and sends an SRS to the base station at a corresponding frequency domain position

FIG. 12

| Terminal | | Base station |
|---|---|---|

1300: The terminal reports, to the base station, whether the terminal has a capability of supporting start RB position frequency hopping

1301: Indication information, where the indication information indicates a frequency hopping pattern changing with time domain when the terminal performs a start RB position frequency hopping parameter

1302: The terminal determines a start RB position for SRS transmission, and sends an SRS to the base station at a corresponding frequency domain position

FIG. 13

$k'_{hopping}$    0    2    1    3

Disable disable →

$k_{hopping}$    0    2    2    3

FIG. 14

$m_{srs,Bsrs}$

SRS

Slot 0    Slot 1    Slot 2    Slot 3

t

f

FIG. 15

Terminal

Base station

1600: The terminal reports, to the base station, whether the terminal has a capability of supporting start RB position frequency hopping

1601: The base station indicates a related parameter to the terminal, where the related parameter is used to determine a start RB position frequency hopping type

1602: The terminal determines a start RB position for SRS transmission, and sends an SRS to the base station at a corresponding frequency domain position

FIG. 16

Reference point

$N_{offset}$

$N_{offset}$

Reference point

FIG. 17

Communication apparatus 1800

Processing unit 1810

Transceiver unit 1820

FIG. 18

Communication apparatus 1900

Processor 1910

Interface circuit 1920

Memory 1930

FIG. 19

## INTERNATIONAL SEARCH REPORT

| International application No. |
| --- |
| **PCT/CN2022/121389** |

**A. CLASSIFICATION OF SUBJECT MATTER**

H04L 25/02(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; 3GPP: 探测参考信号, 参考信号, 跳频, 周期, 索引, 图样, 图案, 子带, 偏移, 时域, 频域, 频率, 监听, 位置, 资源块, 符号, SRS, reference signal, RS, hopping, period, index, pattern, sub-band, offset, time domain, frequency domain, listening, location, symbol, RB

**C. DOCUMENTS CONSIDERED TO BE RELEVANT**

| Category* | Citation of document, with indication, where appropriate, of the relevant passages | Relevant to claim No. |
| --- | --- | --- |
| A | CN 108111279 A (ZTE CORP.) 01 June 2018 (2018-06-01)<br>description, paragraphs [0152]-[0161] and [0290] | 1-29 |
| A | CN 106470393 A (ZTE CORP.) 01 March 2017 (2017-03-01)<br>entire document | 1-29 |
| A | CN 112468274 A (HUAWEI TECHNOLOGIES CO., LTD.) 09 March 2021 (2021-03-09)<br>entire document | 1-29 |
| A | WO 2021178985 A2 (FUTUREWEI TECHNOLOGIES, INC.) 10 September 2021 (2021-09-10)<br>entire document | 1-29 |
| A | CN 109428626 A (HUAWEI TECHNOLOGIES CO., LTD.) 05 March 2019 (2019-03-05)<br>entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 November 2022** | **07 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/121389**

| Patent document cited in search report | | | Publication date (day/month/year) | Patent family member(s) | | | Publication date (day/month/year) |
|---|---|---|---|---|---|---|---|
| CN | 108111279 | A | 01 June 2018 | WO | 2019037726 | A1 | 28 February 2019 |
| | | | | EP | 3675404 | A1 | 01 July 2020 |
| | | | | US | 2020213161 | A1 | 02 July 2020 |
| | | | | EP | 3675404 | A4 | 19 May 2021 |
| | | | | CN | 108111279 | B | 03 June 2022 |
| | | | | US | 11431527 | B2 | 30 August 2022 |
| CN | 106470393 | A | 01 March 2017 | CN | 106470393 | B | 02 February 2021 |
| CN | 112468274 | A | 09 March 2021 | WO | 2021047457 | A1 | 18 March 2021 |
| | | | | CN | 112468274 | B | 29 April 2022 |
| WO | 2021178985 | A2 | 10 September 2021 | WO | 2021178985 | A3 | 25 November 2021 |
| CN | 109428626 | A | 05 March 2019 | EP | 3667930 | A1 | 17 June 2020 |
| | | | | US | 2020204327 | A1 | 25 June 2020 |
| | | | | WO | 2019047868 | A1 | 14 March 2019 |
| | | | | CN | 111066256 | A | 24 April 2020 |
| | | | | EP | 3667930 | A4 | 26 August 2020 |
| | | | | CN | 109428626 | B | 12 February 2021 |
| | | | | CN | 111066256 | B | 20 April 2021 |
| | | | | US | 11218273 | B2 | 04 January 2022 |

Form PCT/ISA/210 (patent family annex) (January 2015)

**EP 4 412 163 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111162862